# EUROPEAN PATENT APPLICATION

(11) **EP 3 229 437 A1**
(43) Date of publication of application: **11.10.2017**
(21) Application number: 17020142.0
(22) Date of filing: 06.04.2017
(51) Int. Cl.: H04L 29/06, H04L 29/08

(54) **COMMUNICATION DEVICE AND METHOD FOR PROTECTING A COMMUNICATION SYSTEM AGAINST APPLYING UNAUTHORIZED CODE**

(30) Priority: 07.04.2016 US 201662319488 P; 08.04.2016 EP 16020129; 08.04.2016 EP 16020123; 08.04.2016 EP 16020124; 08.04.2016 EP 16020125; 08.04.2016 EP 16020126; 08.04.2016 EP 16020127; 08.04.2016 EP 16020128; 03.05.2016 EP 16020169; 23.09.2016 EP 16020344
(71) Applicant: Rosenbaum, Walter Steven, 93586 Jerusalem (IL)
(72) Inventor: Rosenbaum, Walter Steven, 93586 Jerusalem (IL)
(74) Representative: Heyerhoff Geiger & Partner Patentanwälte PartGmbB

(57) **Abstract**

The present invention relates to a communication device with a first data interface and a second data interface.

A safe protection of the communication device against malicious code even under an easily breakable communication line between the communication device and a remote server is achieved by an intermediate protection unit located in a data communication line between the two data interfaces, wherein the intermediate protection unit blocks data in the direction from the second to the first data interface.

## Description

### INTRODUCTION

The invention relates to a communication device with a first data interface and a second data interface.

On-board diagnostics specification for vehicles collects vehicle and driving data and wirelessly transmits these data to a remote server for further use. In special applications a so- called dongle is applied to the on-board diagnostics system for filtering the collected data and communicating only the filtered part of the information to the server. Such communication devices are used for Pay How You Drive systems (PHYD), or better known as User Based Insurance (UBI), used by insurance companies for estimating the risk of individual driving of their customers. While a dongle is useful as interface to an on-board diagnostics system in other applications such a communication device may guide interactions with other devices, especially in a system like the internet of things.

Such a dongle encompasses well over 100 vehicle parameters that emanate from the vehicle's computer and are harvested via the physical dongle plug. The dongle itself has a package of electronics built around the plug. The plug consists of an array of pins that interfaces with the standardized vehicle diagnostic port pin settings, or is an USB plug for standard connection with a computer system.

Dongle electronics have varying degrees of intelligence spanning basic data bundling and line transmission to complex data manipulation, storage and sensing. Some dongles now come complete with GPS and accelerometer chip sets and drive external communications to the server via GSM.

Recently, it has become public that it is possible to gain control over many vehicle components via a remote communication interface of the vehicle. It was performed to upload new firmware into the engine control unit without the permission or knowledge of the vehicle holder. One reason of this vulnerability lies in the tendency to extend the vehicle information bus for purposes other than those for which it was originally designed, and further in the lack of safe authentication and authorization in the on-board diagnostics specifications. Due to the lack of sufficient communication protection to the vehicle it was demonstrated to remote take- over certain operation functions of the car's control center during driving.

In these instances, a dongle connected to a vehicle information system or interfacing a smart phone or other intelligent device, and containing external communications, such as GSM, can be infiltrated by hacking into the remote communication and thereby to gain access and control of the vehicle computer or other attached control or slave device.

### BRIEF DESCRIPTION OF THE INVENTION

It is an object of the invention to provide an enhanced communication device which allows protection against applying unauthorized code to itself or to another device which it interfaces.

This object is solved by a communication device with a first data interface and a second data interface and an intermediate protection unit located in a data communication line between the two data interfaces, wherein the intermediate protection unit blocks data in the direction from the second to the first data interface. This method may be called first method according to the invention.

By this blocking neither the server nor any other device placed in the communication line between the server and the communication device can communicate over the communication device to any device which is connected to the first data interface which hence is protected against loading with malicious code. If the communication device is connected to an operating device, like a vehicle control device and/or a vehicle diagnostics device, the respective device is protected against server sided malicious influences. Further, the communication entering the communication device via the second data interface can travel only up to the one-way path in the communication line and is blocked from going further. Any section of the communication unit located between the one-way path and the first interface is protected from loading with malicious code as well. Such section may be used to protect safety-critical operations, like safety code generation, which can then be used for safe protection or surveillance of communication or units.

The server can be any computer unit which conducts communication with a plurality of clients and/or similar remote communication devices. Preferably, the server is a computer station fixed in a building and connected to the communication device by remote data transmission which preferably includes a wireless non-local section, like a long distance section over multiple miles. The server can be a computer which comprises update software for the communication device or any other software to be put on the communication device. The server may be in communication with a client, the communication device being located between the server and the client, wherein the communication between the server and the client passes the communication device as intermediate device. Further, the internet can be seen as server in a broad sense, therefore, the communication device communicating directly or indirectly with the internet.

In the following, a device to be monitored, like an OBD of a vehicle or a device of the internet of objects, is called a client of the server, for the sake of simplicity, even if such a device may not be a client of the server in a strict technical sense because the real client of the server may be the communication device. A client can be an on-board diagnostics system of the vehicle, the vehicle computer itself or subsystems thereof, a machine or controller of an industrial plant or any other device from which operation data are forwarded to the server for evaluation and/or controlling of the device. The internet of objects gives many examples of monitored devices or units for which the communication device will deliver an advantageous protected communication bridge to a data evaluating server. Such units may be robots, engines, production machines, or a fridge or an entertainment device in a home, only to give a few examples.

A communication system preferably comprises a long distance mobile communication device and the communication device which preferably is mechanically fixed to the client. The communication device can be a dongle or a unit within a dongle, especially an inner unit protected by one-way communication in the direction of the server. The communication device is preferably connected by wire to a device to be monitored, like to a diagnostics port of a vehicle. However, a mobile device, like a smart phone, can be seen as a communication device in the sense of the invention as well. Accordingly, the invention or any part thereof can be implemented to the mobile communication device. On the other way, the mobile communication device can be omitted and the fixed communication device can comprise a long distance communication unit, like a mobile phone or a direct GSM link, overtaking the remote communication to the server for the client.

A long distance mobile communication device can be a mobile device constructed for hand held use. In general, a mobile device in the meaning of the invention preferably is a wireless long distance communication device, like a smart phone, a tablet, or any other wireless mobile telecommunication device. A long distance communication can be an internet communication, a GSM communication, or any other mobile telecommunication standard. GSM is a mobile telecommunication network in which mobile telecommunication devices connect by searching for cells in the immediate vicinity.

Accordingly, the communication line between the server and the communication device preferably comprises a long distance section between the server and the mobile device, like a GSM line, and a short distance section between the mobile device and the fixed communication device, like a Bluetooth line or a WiFi line. The communication line between the communication device and the device to be monitored, like the vehicle, is preferably a wired line.

The general purpose of the communication device can be to collect and/or forward data from the device to be monitored, like operation data and/or status data, and to forward them to an evaluating unit, like the server, for example. A further general purpose of the communication device is to protect the data communication with the server, e.g. to prevent an unwanted modification of the data sent to the server and/or to prevent a breaking and unauthorized entering the monitored device via the communication line to the server. The use of a long distance communication device in the communication line carries the risk of unauthorized entry into the communication and unwanted modification of data transmitted in the line. If, for example, a smart phone is hacked, the hacker may obtain the possibility to introduce modified software to the communication system, thus modifying the data sent to the server, or modify data sent from the communication system to the server. A vehicle driver may then, for example, obfuscate risky driving while the modified communication system pretends cautious driving and sends harmless data to the server. While such modification will only lead to wrong insurance billing to the driver, a use of a modified communication system in a production flow of traffic control may lead to extremely dangerous or terrorism motivated situations carrying potential for great harm to participating people. Thus, the protection of the communication line between the server and the communication system, and/or the identification if the communication is protected or not, is of considerable importance. Due to the protection of the communication system against applying unauthorized code by means of the invention, the client in general or the on-board diagnostics system in detail is protected against applying unauthorized code as well. Thus, the invention comprises a method for protecting a client of a server, like an on-board diagnostics system of a vehicle, against applying unauthorized code as well.

The communication system and the client, like an on-board diagnostics system of a vehicle, especially a car or motorbike, may form a moving vehicle system. The communication system and the server form an information retrieval system in which the client can be part of as well. This system may serve for protecting the forwarding of information - which was generated in a client of the server - to the server against manipulation by malicious code. During operation of the information retrieval system the communication system forwards data from the client to the server.

A simple and secure data blocking can be achieved if the intermediate protection unit forms a physical strict one-way connection in the communication line in the direction to the second data interface.

A strict one-way physical connection can be achieved if the intermediate protection unit has on its side directed to the second data interface a sender, and is free of hardware, especially electronics, capable of further processing signals received from the direction of the second data interface.

Preferably, the intermediate protection unit is free of a writeable memory. No data can be stored inside the protection unit which cannot be infected by malicious code, therefore. If a memory is present it should be configured in such way that it is blocked from all data coming from the second data interface. The protection unit is thus free of a memory accessible by data coming from the second data interface.

In certain applications it might be useful to receive the correct current time or other data inside the protection unit, like for generating a security code by using the current time or another predefined time value. In cases that a client connected to the first data interface cannot reliably send the desired data such data need to be received from the second interface side. To allow this in a secure manner the intermediate protection unit may contain software which only when executed lets data pass in the direction to the first data interface and lets only such data pass which have a strict predefined format and/or data size. The format can be a time format, or a time and date format. The format of the data package should differ from any communication format used between the protection unit, the mobile communication device and/or the server.

The size of the data package is preferably fixed to eight byte or another predefined value. The size of the data package should differ from any package size used in any communication between the protection unit, the mobile communication device and/or the server.

Similarly such a restrictive predefined data interface could be implemented to also allow an update of which OBD parameters will be selectively harvested.

To prevent malicious code being trickled in one by one the software can be configured in such way that it accepts data only once in a predefined time span, like once a day or once a month. An internal clock of the protection unit can be set or corrected in the time interval needed.

In general, such secure communication from the server or mobile device to the protection unit or safe zone is called protected reverse communication.

Preferably, the first data interface is a plug-in connector with a configuration of a data plug. The communication device may easily be fastened to a device or client to be monitored, like an on-board device of a vehicle or a unit of the internet of objects.

Preferably, the second interface is a wireless interface for wireless communication. If a central processing unit is located in the communication line between the intermediate protection unit and the second data interface data outside the protection unit can easily be processed without a risk of reducing security of the intermediate protection unit.

The invention is useful as additional unit for an operating device, like a car or a device of the internet of objects. Accordingly, the communication device can be a dongle for an operating device. Preferably, the operating device is an on-board diagnose system of a vehicle.

It is desirable to spread the security present inside the intermediate protection unit to another device which can be done - at least partially - by generating a security code inside the intermediate protection unit. This generation is not corruptible and thus very safe against influences of malicious codes. Accordingly, the communication device may comprise a safety code generator, especially a random code generator, located inside the intermediate protection unit or between the intermediate protection unit and the first data interface.

In a preferred embodiment of the invention the communication device comprises a second part of a communication line between the data interfaces which allows data transfer in the reverse direction into the intermediate protection unit. The second part of a communication line may comprise a separate wire for reverse data transfer, or a reverse data transfer on the same wire, so both communication lines going through a single wire. Preferably, the second part is activatable and deactivatable by a switch. This can be done by a bridging communication line bridging the blocked one-way connection in the communication line, like the strict one-way physical connection, wherein a mechanical bridging switch can be interruptingly located in the bridging communication line, wherein the bridging communication line is activatable and deactivatable by the mechanical switch. To prevent software triggered bridging, it is desirable if the mechanical bridging switch is mechanically operable, preferably from the outside of an outside housing of the communication device, especially only operable in this way.

To prevent the use of exceptional data in the server for regular investigations, like data acquired during maintenance or testing of a vehicle, the communication system may comprise an exception switch or exception unit, preferably a mechanical unit, which when activated adds to outgoing data the information that the exception unit is activated, and thus indicating the exceptional situation or mode of a monitored device, like a travelling vehicle.

During normal operation of the communication device data coming from the first data interface are forwarded to the second data interface, eventually after filtering, for further use. These data, normally all these data, pass the one directional section of the communication line. In cases this forwarding is not wanted it can be blocked by any appropriate means which should be secured from unwanted influences, like infection by malicious code. Preferably, this means is located within in the blocked section in the communication line or between this section and the first data interface. If this means is a mechanical disengage switch, i.e. a switch which can only be activated by a mechanical action, like pushing a button or switching a knob, a risk of a software influenced misuse is kept very low. Preferably, such switch is mechanically operable from the outside of an outside housing of the communication device, especially only operable in this way.

In certain circumstances, like a testing operation of a vehicle, the operation of the device connected to the first data interface, like a vehicle OBD, is irregular and should be tagged as such to prevent confusion with regular operation. This can easily and very securely achieved with a mechanical exception switch which when activated causes a signal upon which information is added to data outgoing from the second data interface that the exception switch is activated. This information can be added to data going through the one-way section of the communication line and/or by a main processing unit of the communication device. Preferably, such switch is mechanically operable from the outside of an outside housing of the communication device, especially only operable in this way.

If a bridging switch, disengage switch and/or exception switch is present, in the following "switch" for simplicity, a timer is present as well, preferably, to restrict the switch action in time for a predetermined or mechanically or software controlled timespan. The timer resets the switch action, like communication bridging in the reverse direction, after it timer timespan, so no manual intervention is necessary to end the switch action.

Further, if the fixed communication device send a message to the server if the switch is operated, a server sided monitoring of the switch action is possible. With regard to the bridging switch it is useful, if the reverse communication is allowed only upon a server approval, like from the insurer or road side service. If such confirmation is present with the fixed communication device, the reverse communication is allowed by a main processing unit of the fixed communication device. Preferably, the message and/or the approval is sent in encrypted form, wherein the encryption key may contain a random sequence from the dongle random code generator from which the server and the dongle may create an identical encryption key. By this it is secured that it is the server replying and authorizing or denying the request to the operator to bridge or interrupt the one-way communication

The invention is further directed to a communication system comprising a communication device according to the above given description and further comprising a long distance mobile communication device. The long distance mobile communication device can serve as data transmitter allowing the communication device to manage with a short distance communication unit only. This simplifies construction and billing significantly. Accordingly, the communication device may comprise a short distance data interface which preferably is the second data interface, and the long distance mobile communication device preferably comprises a short distance data interface which preferably is adapted to the second data interface.

The invention is further directed to an information retrieval system comprising a communication device according to the above given description or a communication system as mentioned above, and further comprising a client unit connected to the first data interface, preferably plugged into it, and a server at least indirectly wirelessly connected to the second data interface.

Accordingly, the communication device may be part of an information retrieval system comprising a client connected to the first data interface and a server connected to the second data interface. Preferably the client is plugged into the first data interface - or vice versa, or otherwise fixed with the first data interface, the communication device may then be seen as fixed communication device, fixed to the client, like a vehicle. The server may be at least indirectly wirelessly connected to the second data interface. Accordingly, the first data interface preferably comprises a data plug for mechanical connection to the client or a data line connected to the client. And the second data interface may be a wireless communication interface, especially a short distance communication interface, like a Bluetooth interface or a WiFi interface, or a long distance communication interface, like a GSM interface, a UMTS interface or an internet interface.

Further, the invention relates to a communication system for performing a data communication with a remote server. Preferably, the communication system comprises a communication device in the form of a dongle for an operating device. The operating device can be an on-board diagnose system of a vehicle. The communication device can comprise a data interface and an intermediate protection unit or data safe zone located in the data communication path between the data interface and another communication device in the communication direction to the server, like a second data interface, wherein the intermediate protection unit comprises the strict one-way physical connection to the further communication device.

Further, the invention is directed to a method for protecting a communication device against applying unauthorized code. It is an object of the invention to provide an enhanced method for protecting a communication device against applying unauthorized code.

This object is solved by a method for protecting a communication device against applying unauthorized code, wherein the communication device sends data to a remote server in a communication line, wherein the data passes a part of the communication line which is a one-directional communication line allowing data transfer only in the direction to the server. The data may be generated in or sent through the communication device.

This blocking of data traffic in the other direction can be performed by hardware as such, like the lack of receiving electronics, or hardware with hardware designed software. Accordingly, when data is forwarded from the first data interface to the second interface and further to the server, hardware inside an intermediate protection unit located in a data communication line between the two data interfaces restricts communication to the one directional and blocks all communication in the other direction.

If at least a part of the communication line is a strict physical one-directional communication line allowing data transfer only in the direction to the server a very secure blocking can be achieved.

Additionally or alternatively the blocking of data traffic in the other direction can be performed by software which allows only data of a predefined format and size to pass in the other direction.

Further, the invention relates to a method for protecting a communication system against applying unauthorized code. It is an object of the invention to provide an enhanced method for protecting a communication system against applying unauthorized code.

This object is solved by a method for protecting a communication system against applying unauthorized code, wherein a remote server sends data to the communication system, the server with a code generator generates a random code and sends the random code to the communication system, the communication system generates with a code generator which is synchronized with the server code generator a random code and compares this device random code with the received server random code, and blocks a usage of the data upon a consistency of the two random codes below a predetermined consistency. The predetermined required consistency can be identity, so that the use of the data is blocked if the two random codes are not identical. The random code process provides increased safety against executing any malicious code in the communication system. This method may be called second method according to the invention.

Unauthorized code in the meaning of the invention can be software code which does not come from the remote server. The application of the unauthorized code will be prevented if the code is not executed. The code may be stored in the communication system, e.g. for comparison with internal data. But if the code is identified as unauthorized code, the application, like execution, will be prevented. Accordingly, the method according to the invention can in some characteristics be named alternatively as method for identifying unauthorized code in a communication system.

In a preferred embodiment of the invention the server regularly generates a random code at least some of which it passes to the communication system. Both code generators can independently from one another generate identical series of random codes with identical timing. The series can have the same time intervals between each code. In this synchronized configuration of code generation in the server and client, the timing formula for code generation may be implemented in a manner that said formula may be synchronously changed in both the server and client at jointly predesignated but randomly assigned time intervals. By systematically updating and changing the code formulation at randomly pre-assigned time intervals, any attempt to discern and surreptitiously defeat the generation are made both practically and theoretically virtually immune. The code generation algorithm may reflect the use as a kernel. The time which is synchronized between the server and the client or other factors that are synchronized between the server and client that may or may not include time as a kernel parameter.

Preferably, both code generators use a time point for generating their random code. By this, they can independently from one another generate identical random codes when using identical time points. In other words, identical codes are generated at the same internal code generator time. Or more general: Both code generators use the same seed key as input for outputting the same random code. Alternatively, a property of a piece of software can be used as seed key, like a code block, a file, a program code update, or similar software, the property being a file length or the like, either alone or additionally with a time point, for example.

Since a communication of the server random code to the communication system takes some time the current device random code may eventually not be identical with the server random code arriving at the communication system. Accordingly, a time span will be needed for to look ahead or back to find the identical device random code. There are several advantageous methods for finding the correct device random code. One method could be that both random codes are generated at the same time. A moment later the server random code arrives at the communication system whose current device random code is already different due to the sending duration. The communication system can now search in a buffer memory all device random codes which were generated within a time span before for the correct random code.

In general: The communication system receives the server random code at a receiving time and searches those device random codes for identity with the server random code whose time point used for generation is closer than a predetermined time span to the receiving time.

Depending on long distance communication circumstances it could happen, that the server random code arrives so late at the communication device that the given time span is not sufficient, and the communication generates only device random codes with wrong time seed keys. To prevent such failure of code matching a time stamp can be added to the server random code. This time stamp may indicate the seed key time or any other time related to it in some way, like a time within a predefined time span from the seed key time. The communication device can now check the time stamp and identify right away if the code match will be successful. If the time stamp is too old, a match will foreseeably be not successful, and the communication device can feedback this result back to the server. By this a failed match can be indicated right away as based by communication problems and not by hacking problems.

If, on the other hand, it is possible to enter the time stamp into a protection unit where the device random code is generated, the time stamp can then directly be used as seed key for the generation of the appropriate device random code, or - if the time stamp is different from the seed key - as indicator which time interval needs to be used as seed key time interval during which the multiple device random code generation will be successful with one seed key time.

In another method the clock of the device is late for a time span, i.e. it shows a time which is later than the clock time of the server. The server generates its random code and sends it to the communication system. Upon arrival of the server random code at the communication system, the communication system searches all device random codes which are generated within the time span for identity with the server random code.

Still another method would be that the server does not use the current time for generation of its random code but a time point which is the time span ahead of the current time. The server random code arrives at the communication system earlier than the expiration of the time span, and the communication system searches all device random codes which are generated within the time period - beginning at the arrival and ending the time span later - for identity with the server random code.

In both methods the communication system generates a random code identical with a random code of the server, the device random code is generated within a predetermined time span later than the identical server random code, wherein the server random code arrives at the communication system earlier than the generation of the identical device random code.

Further, more than one random code can be generated and inserted into a piece of software, preferably at different places therein. Each random code can be generated from different seed key, e.g. one random code input seed key is a time point, a second random code input seed key is a different time point, and a third random code seed key is a file length.

A safe protection can be achieved if the server random code is linked to a code block, like a program code update. If the random codes match, the code block is used, like for an update. This method lowers the risk that the operation program code for the update is generated or modified by any unauthorized party.If the match fails, the code block is discarded. Accordingly, the server may send at least a code block to the communication system containing the server random code, if the communication system within a predetermined time span does not generate a device random code with at least a predetermined consistency with the server random code, the communication system erases the code block from its memory. The code block may contain, for example, an update of the operation software of the communication system.

For further protection, a second randomization process may follow the first one, wherein preferably the output of the first randomization process - in the following called first generation random code - is used as input, like a seed key, for the second randomization process which outputs a second generation random code. Here, the seed keys may be used in two different methods: The first seed key can be used in a first kind as an input to generate the first generation random code. In the same or similar way the first generation random code can be used as first kind seed key to generate the second generation random code. The second seed key, or second kind seed key, may then be used to influence the randomization process as such. By this, the second generation random code is dependent on the first random code input and the second kind seed key may serve as process control parameter.

In general, a second kind seed key can be used to generate a first or second generation random code. To generate a first generation random code with a second kind seed key, a first kind seed key, like a time point, is used as input parameter, and the second kind seed key, like a file length of a piece of software for example, is used as random process control parameter.

Preferably, the first and/or second generation random code is embedded in a piece of software or code block, preferably a software with operation instructions for the communication system, which serves as character bed for the inserted character string, like the random code.

A strong link between random code and a piece of software or code block can be achieved, if the server random code comprises a character string embedded in a character bed which further includes operation instructions for the communication system, and wherein the device random code comprises the identical character string, wherein the communication system searches the server random code for the character string.

To obtain further protection, the random code can be hidden in the character bed. To find the random code in the character bed, the device random code can comprise a character position code identifying the position of the character string within the character bed, wherein the communication system searches the server random code at the position characterized by the character position code for the character string. Preferably, the character bed contains the operation software of the communication system in the form of a code loop routine.

Another advantage of the invention can be achieved, if the device random code does not leave the communication system, especially does not leave the communication device. The predetermined consistency can be examined by the communication device itself, for instance. Unlike VPN security which works with the client using the random number generated by its key chain fob and is sent to the VPN Server, the device random code is not visible from the outside of the communication device. Accordingly, even if a smart phone located in the communication line between server and communication device is hacked, the communication connection between server and communication device stays safe because the hacker cannot start a protected data communication. Unlike the VPN channel security process, the start of protected data communication can be initiated by the server and not by the client.

The code generators in the server and the communication system are deterministic random code generators, i.e. they always generate identical numbers under identical starting conditions. This is usually the case with ordinary random code generators since implementing software for random code generation is always deterministic. A nondeterministic factor, like a physical factor involved in the number generation, like the current temperature of a sensor, is omitted. Accordingly, the random codes are not random in a purely mathematical sense, but deterministic. It is preferable if the random code generation is non-reversible and hence non-breakable.

One of the starting conditions the random code generators use is a time point. Hence, if the time points with which both random code generators generate a number are identical, the numbers or codes will be identical. The time point can be an absolute time, like world time or local time, or referenced to another time, like a starting time of the device, a time programmed into the device or an absolute time with an added or subtracted time value, like 3 minutes, for instance.

The code generator of the server and the communication system are synchronized. Such synchronization can be achieved if the code generators work with the same code generating algorithm, so that random codes or series of generated random codes are identical in both code generators when based on the same time points.

In a preferred embodiment of the invention the random code generator runs in a protection unit of the communication system. The protection unit can be another communication device. The protection unit may be located in the communication line between a client of the server and a processing unit of the communication system which manages the remote communication to the server.

In a further preferred embodiment of the invention the communication system comprises a data interface unit, a processing unit and an intermediate protection unit located in the data path between the data interface unit and the processing unit, wherein the protection communication unit comprises a strict one-way physical connection in the direction to the processing unit only. If the intermediate protection unit is free of a writable memory, a remote modification of its software is impeded significantly.

An even stronger protection of the communication system can be achieved, if a code length of software to be protected is used as seed key in a random code generation process. The server can insert at least a part of the random code in the software, which is used as a character bed to surround the random code, and send the modified character bed to the communication device. The character bed can be a piece of software, like a file, preferably executable software. Preferably, the server random process uses a code length of the unmodified character bed - which is the character bed without the inserted random code - as seed key in the server random process to generate the random code.

The modified code or bed is sent to the communication system, like either the mobile or the fixed communication device, which examines the code for the random code. For this the communication device generates a temporary device random code and subtracts its size from the size of the received modified character bed. The so obtained code length of the unmodified character bed can then be used as seed key in the device random process to generate the device random code.

Further, the invention is directed to a communication system for performing a data communication with a remote server, especially with a method according to the invention with one or more details as described above. Preferably, the communication system comprises a communication device as an on-board device and/or in the form of a dongle for an operating device. The operating device can be an on-board diagnose system of a vehicle. The communication device is preferably fixed in the vehicle and can be connected by solid signal line to a diagnostics port of the vehicle.

The communication device can comprise a data interface unit and an intermediate protection unit or data safe zone located in the data communication path between the data interface unit and another communication device in the communication direction to the server, wherein the intermediate protection unit comprises the strict one-way physical connection to the further communication device. Preferably, the intermediate protection unit is free of a writeable memory.

The invention is further directed to a method for protecting a communication device against applying unauthorized code. It is an object of the invention to provide an enhanced method for protecting a communication device against applying unauthorized code. This object is solved by a further method for protecting a communication device against applying unauthorized code, wherein the communication device runs an operation program which conducts the sending of data to a remote server, the operation program being in the form of a code loop routine running in a continuous loop, and wherein a property of the code loop routine is determined and checked, and the communication device is modified if the property is not an expected property. This method may be called third method according to the invention.

While the first device and method forms an internal and basic protection against loading unauthorized code to the communication system and/or any operation device connected with the communication system, the second and third method protect the communication system even further. All three methods may be used as further protection for one or two of the methods. Especially the second and/or third method can be used as a further protection layer around the basic protection of the first method and/or device. However, all three methods can be used as standalone protection.

The loop provides the advantage that the functions executed within the loop are repeated a plurality of times, thus a check of the property of this loop which allows inference about the loop allows inference about the functions as well. A correct loop property is evidence for correct functions, or vice versa, an incorrect loop property is evidence for incorrectness in at least one function. Since this function is contained in the loop it is open and not hidden, as it might be if normative coding strategies, integral to coupling code execution to operating systems such as Android, were used. If at least main functions of the operation program are contained in a loop structure these main functions are open for inspection by evidence of tampered or un-tamper use based on readily quantifiable statistical measurements (e.g., mean and variance) of loop execution time and the number of line of code present.

The property of the code loop - if not the expected property - is evidence for irregularities of the operation program. If such evidence is present the communication device is modified, like uploaded with new software, reset or taken off function. By this the communication device is protected against being applied with unauthorized code in the sense of protected against operating with unauthorized code.

Preferably, the loop structure of the code loop routine is programmed in such way that the program after each loop arrives at the same central point. During the course of the loop the program may branch into different branches of the loop structure, however, all branches reenter into the main central point or central process flow.

Preferably no standard operating system, like Android, for instance, is present. This provides several benefits besides reducing cost of the communication system. It makes it much harder to hack such loop system by removing the ability of hackers to leverage on the numerous interface of said operating system and their overall complexity that allows penetration by malicious code, like viruses, worms and/or Trojan horses.

Unauthorized code in the meaning of the invention can be software code which does not come from the remote server. The application of the unauthorized code will be prevented if the code is not executed. The code may be stored in the communication system, e.g. for comparison with internal data. But if the code is identified as unauthorized code, the application, like execution, will be prevented, at least after its detection. Accordingly, the method according to the invention can in some characteristics be named alternatively as method for identifying unauthorized code in a communication system.

In a preferred embodiment of the invention the operation program contains at least the main operations performed by the communication device as such or by a software application of the device. Thus the main operations performed by the communication device are contained in the loop structure either in a single loop of in a loop structure with a plurality of branches which all reenter into a central point or central process flow.

The code loop routine contains a flow structure which may comprise different branches for different condition-based operations. The code loop routine is structured as a continuous loop structure and preferably controls the central operations of the communication device and the communication with the server.

In a further preferred embodiment of the invention the communication device determines a property of the code loop routine, especially with the code loop routine. This exacerbates the hidden manipulation of the determination routine. The property is checked, and the communication device is modified, like reconfigured or set back, if the property is not an expected property.

Alternatively or additionally the property of the code loop routine may be sent to the server. The server can check the property and if the property is an expected property protected data communication is validated. Alternatively or additionally the communication device may prepare and send to the server an image of the code loop routine, and the server checks the image for veracity against the code loop routine which according to data in the server is the current code loop routine in the communication device. By this means, from the image of the code loop one can check that the code loop matches the original development specification. Further, the image of the code loop received from the communication device by running on it LEV test cases can be validated to confirm that this is the loop actually currently installed and executing in the device and not the prior unaltered version that has been stored in the communication device to be used to falsely satisfy such a code loop image check.

In general, the server may send operation software to the communication device, like for updating the communication device or for modifying operations of it. If the data communication is detected as impaired the server may change the internal status of the communication device from safe to impaired or the like. In this status different software can be sent from the server to the communication device which thus modifies the communication device.

The validation of the protected data communication comprises the certainty that the code loop routine does not contain malware which changes the determined property of the code loop routine and may change the data sent from the communication device to the server. Hence it protects the communication being safe against malware communication influences.

The determined property of the code loop routine can be any previous specified loop execution value, like a loop runtime averaged over a predetermined number of loops, a variance of loop runtimes over a predetermined number of loops and/or the number of code lines of the current code loop routine, especially for test cases whose correct LEV values are only known to the server. The server examines one or more of these properties versus those which are computed for the code loop in normal use in the communication device. The server can also check the image for veracity against the code loop routine which according to data in the server is the current code loop routine in the communication device.

The nominal values of statistical measures of loop execution timing as well as code line count and byte size or other values can be predetermined during development before loading into the operation program of communication device. For further discussion these values are called loop execution values in the following. During development the loop execution values may be compiled over a plurality of test cases. Code loops, as well as any software program, are developed and can be updated and refreshed in the field to various release levels. For each code loop release level, before being propagated to installed operation programs in communication devices etc. in the field, loop execution values measurements are compiled for an area of test cases.

Once the code loop has been loaded into the operation program in the communication device, either as a factory install or as a release update in the field, the smartphone or server dialoging with the communication unit send specific test cases to the operation program to execute and report back the execution time or another loop execution value. If the operation program has been hacked, said modified program has no prior idea as to the correct loop execution values for a given test case. Hence the development value measurements and the reported value will be in conflict either in an absolute manner or in a Null Hypotheses statistically sense and the hack is detected. The use of statistical testing implies the rerunning of a given test case several times in succession to allow for non-hacking related timing variations due to system anomalies.

In general, it is advantageous, if the properties are determined relative to prior developed and property assessed test data, the test data being sent from the server to the communication device, and wherein the property results are reported back to the server.

As a further software propriety check, when test cases are sent, the latency between sending the test case and the loop execution value response can also be measured. This precludes the possibility of the hack trying to conceal itself by reloading and executing a prior unaltered software release and then running the test case to report the proper LEV.

The property of the code loop - if not the expected property - is evidence for irregularities of the operation program. If such evidence is present the communication device is modified, like uploaded with new software, reset or taken off function. By this the communication device is protected against being applied with unauthorized code in the sense of protected against operating with unauthorized code.

Preferably, the server contains a plurality of different program versions of the code loop, and the program code of the communication device is updated with the different program versions one version after the other. Preferably, for each of these program version a separate set of test cases and loop execution values are kept to facilitate check-pointing as described above Due to such updates no hacker knows beforehand what program version will be present in the communication device. Accordingly a hacking patch becomes much more challenging if not impossible.

The number of different program versions can be kept at a reasonable number even if the current program in the communication device is frequently updated, if at least one of the plurality of different program versions is updated more than once to the communication device.

Each version may exhibit the same, i.e. identical, output functionalities of the communication device than the current program version of the code loop contained in the communication device. The output functionalities do not mirror the version of the program version, the communication device thus operates independent from the program version with respect to output functions.

If the average time from one update to the next update over at least 10 updates is less than 1 hour a high update frequency aggravates inserting a malicious hacking patch into the communication device. The same advantage can be achieved if the updates of the plurality of different program versions contained in the server take place in a predetermined and irregular time schedule.

The server preferably updates a plurality of at least similar communication devices, each communication device is updated with an individual update routine which differs from the update routines of the other communication devices with regard to the succession of versions of the updates. By this measure it will be very difficult to add malicious code to the communication device which exhibits identical code loop properties as the original code.

The communication device can be an on-board device which is fixed to a vehicle and is connected by solid signal line to a diagnostics port of a vehicle. The communication between the communication device and the server can be kept simple if it comprises a local connection between the communication device and a mobile device and a continuative distant connection between the mobile device and the server. Alternatively, the communication device can be a mobile device, like a smart phone.

Further, the invention relates to a communication system for performing a data communication with a remote server, especially with a method according to the invention with one or more details as described above. Preferably, the communication system comprises a communication device in the form of a dongle for an operating device. The operating device can be an on-board diagnose system of a vehicle. The communication device can comprise a data interface unit and an intermediate protection unit or data safe zone located in the data communication path between the data interface unit and another communication device in the communication direction to the server, wherein the intermediate protection unit comprises the strict one-way physical connection to the further communication device.

The invention further relates to a method for identifying a manipulation of data. It is an object of the invention to provide an enhanced method for identifying a manipulation of data. This object is solved by a method for identifying a manipulation of driving data gathered during a journey of a vehicle, wherein the data are sent from a communication system within the vehicle to a remote server, wherein the communication system adds to a data package identification data, the remote server generates identification data and compares the identification data received from the communication system with its own identification data, and identifies manipulated data if the identification data differ from one another. This can be seen as fourth method according to the invention.

In case the protection of the communication system against applying unauthorized code fails, or the data sent to the remote server are manipulated in the communication line on its way to the server, the server is able to identify the corrupted data and can discard them or apply other security measures to prevent the use of defective data.

The method is used for identifying a manipulation of driving data gathered during a journey of a vehicle. However, the method may as well be used for identifying a manipulation data sent from a remote server to the vehicle. If, for example, a software update should be done at a vehicle device, this new software is sent from the server to the vehicle for execution therein.

In a preferred embodiment of the invention the data sent to the server are driving data. Driving data in the sense of this invention may be such data which are generated during driving of a vehicle, They may be correlated to the driving process of the vehicle and can be data characterizing a vehicle device operating during driving, like mechanically operating and/or electronically operating. The driving data may be data characterizing
- the way of driving of the vehicle, like speed, acceleration, positive, negative and/or to a side,
- status data of the vehicle or a component thereof, like mileage, wear data, temperature, pressure, fluid level, or the like,
- activity of the driver, like device actuation by the driver, like pedal pushing, setting of turn signal, use of communication and/or entertainment media, telephone use during driving, way of driving, like one or more parameters indicating smooth, relaxed or aggressive driving, inattentive or tired driving,
- data of parameter influenced by the driving or influencing the driving, like driving route, traffic data arising from the traffic around the vehicle, weather, road condition
- or any other driver or device action happening during driving of the vehicle.

Preferably the driving data are gathered during a journey of the vehicle, and they emerge from or during the driving process, preferably. To gather data during driving one or more devices within or around the vehicle may be monitored. A special device for monitoring is an on-board operating device or system (OBD) of the vehicle, since this device provides data of many parameters characterizing the vehicle and/or driving. For monitoring driving or data derived from it the server may be prepared to receive many data sets identical in parameter structure from many vehicles.

The communication system is preferably located within the vehicle. This may comprise a device as well which is travelling with the vehicle and is fixed to the vehicle but is partly or in its entirety outside the fairing of the vehicle, like an antenna. This is true even more if the vehicle is a motorcycle, where "within the vehicle" is understood in the sense of attached or fixed to the motorcycle, even if it is a CPU comprising device. Even if a mobile communication device, like a mobile phone, is carried by a motorcycle driver instead of a vehicle driver, this mobile communication device is seen as located "within the vehicle" in the sense of the invention.

In a preferred embodiment of the invention both identification data are preferably generated by means of the same random code generation process. Accordingly both, the server and the communication system, may comprise a random code generator generating the identification data or basics of it with the same routine.

The random code generators may change their process of random code generation. This generation method change should be synchronized with respect to identical time points and identical new generation methods, so both generators generate identical codes even through a period of change.

The handling of the communication system is made easy, if the communication system comprises a mobile communication device - preferably located within the vehicle - and a communication device fixed in the vehicle, like plugged into an interface of the vehicle. Both communication devices communicate with one another, preferably via Bluetooth and/or WiFi. If the random code generation process is performed by the fixed communication device, the process can be kept safe from hacking easier than within the mobile device. Accordingly, a random code can be sent from the fixed device to the mobile device within the vehicle which then generates the data package and the identification data.

In a further embodiment of the invention the communication system generates a character position, preferably by means of a random code generation process, and adds the identification data to a data package at the position which is indicated by the generated character position. This measure camouflages the identification data in the data package making it more difficult to find it and manipulate it. Preferably, the remote server generates the character position by means of the same random code generation process and identifies the identification data in the data package at the position which is indicated by the generated character position.

A further measure to identify corrupted data is the use of a hash value or any other information which characterizes the data package, like a checksum, a hash total, a number of characters in the data package, or another value characterizing a parameter of the data package. The communication system, preferably the mobile communication device, may generate such a value, like a hash value of the data package, before adding the identification data into the data package and adds the value to the data package.

The server may remove the added identification data from the data package, generate the value of the adjusted data package and compare the generated value with the received value. If the values differ more than a predefined quantum, especially being not identical, the data package can be identified as manipulated and can be discarded.

In a further embodiment of the invention, the information which characterizes the data package can be used as first kind or second kind seed key to generate a random code which then preferably is inserted into the data package as identification data.

If an element of the communication system of the communication line between the communication system and the server is hacked, the data package can be observed and manipulated. If the data package contains driving data that, for instance, indicate too fast or risky driving, the unfavorable data can be deleted or replaced by other more harmless data, camouflaging the fast or risky driving. If a manipulating device finds identification data for protection of the data package it may replace the unwanted data in such way, that the identification data are not changed, preventing the uncovering of the manipulation by the server. Even more malicious would be simply inserting in the data file malware that will work its way into the server as a Trojan horse or other guise.

To prevent such camouflaged manipulation it is advantageous to hide the identification data within the data package. Such hiding can be achieved if the communication system generates a character position of the identification data within the driving data and generates the identification data, wherein the identification data generation process uses driving data such that the identification data is dependent from the driving data. Preferably the data format of the identification data is the format of the driving data. The driving data can be time and/or data of locations where the vehicle travelled, speed data and/or acceleration data of the vehicle during its journey or other data characterizing a travelling parameter or a status parameter of the vehicle.

A very effective hiding is possible if the identification data generation process uses data placed directly before and/or directly behind the character position such that the identification data is dependent from the data placed directly before and/or directly behind the identification data. The identification data can be adjusted to the neighboring data, like averaged to the neighboring data.

A further measure to uncover data manipulation is the forming of the identification data as unfavorable and/or conspicuous driving data. If such data is eliminated by a data manipulation process, the identification data is amended as such resulting in a failure of the data comparison in the server indicating data corruption. Preferably, the communication system places such data as identification data within the driving data.

To more securely prevent manipulation of data transmitted from the communication system to the server the identification data may be generated by a communication system random process. Preferably, the communication system uses a code length of the data package unmodified with the identification data as seed key in a communication system random process to generate the random code.

To unfold the camouflaged data the server may subtract a size of a temporary server random code from the size of the received modified data package and uses the so obtained code length of the unmodified data package as seed key in a further server random process to generate the identification data.

The invention is further directed to an information retrieval system comprising a stationary server and a communication system with a communication device fixed in a vehicle and a mobile communication device.

To provide an enhanced method for identifying a manipulation of data, the communication system contains software which when executed adds identification data to a data package of driving data gathered during a journey of the vehicle, and the remote server contains software which when executed generates identification data and compares the identification data received from the communication system with its own identification data, and identifies manipulated data if the identification data differ from one another.

The invention relates to a further method for protecting a communication system against applying unauthorized code. It is an object of the invention to provide an enhanced method for protecting a communication system against applying unauthorized code.

This problem is solved by a method for protecting a communication system against applying unauthorized code, wherein the communication system generates a seed key, the seed key is sent to a remote server which uses the seed key to generate the same encryption code, a data set is encrypted with the encryption code and sent to the communication system, and the encrypted data set is decrypted using the encryption code generated by the communication system. This method may be called fifth method according to the invention.

The encryption code is well protected and can be used for data encryption for protecting data communication between the communication system and a remote server. The encryption code can be used for data encryption for protecting a communication device of the communication system against applying unauthorized code, preferably a mobile communication device, and/or a communication device fixed a vehicle.

The encryption code which the communication system generates from the seed key can be generated right after the generation of the seed key or later after the encrypted data from the server arrive at the communication system. The data set can be encrypted by the server which sends the encrypted data set to the communication system which decrypts the data set. Preferably, the data set is applied to the communication system only, like executed inside the communication system, if the decryption has proved to be successful.

The shielding of the generation of the encryption code involves the advantage that the generation of the encryption code is protected against unwanted influences, like a manipulation of the generation process. Further, the encryption code is kept unknown outside the safe zone. By this the generation process as such can be protected from being uncovered by hacking any unit of the communication system outside the safe zone.

In general, instead of a remote server any further communication system may be used to generate the encryption code and encrypt the data set.

In a preferred embodiment of the invention the communication system generates the seed key inside a safe zone. Such safe zone may be shielded from information in a communication direction to the server. The safe zone may be located in a communication device of the communication system, which is fixed to a vehicle interface. The safe zone may, for example be located between a main CPU of communication device fixed in a vehicle and an interface for connection with an on-board-device of the vehicle. Preferably the safe zone is shielded from information incoming from the side of the main CPU of the fixed communication device.

The shielding of the safe zone can be achieved by means of a strict one way physical connection from the safe zone in the communication direction from to the server. This prevention can be done by a means for suppressing signals in one direction and for transmission of signals in the other direction. Such means can comprise an electronic element, like a diode, a transistor, or another unit for signal suppression in one direction.

The generation of the seed key inside the safe zone involves the advantage that the seed key does not need to be transmitted into the safe zone. The safe zone can be completely shielded from data traffic incoming from the server side rendering any hacking of processes inside the safe zone more difficult or even impossible.

For preventing data to trespass into the safe zone the safe zone may be kept free of a receiving unit capable of receiving and processing data from any unit outside the safe zone in a communication direction to the server.

In a preferred embodiment of the invention the seed key is a random code generated by a random code generator inside the safe zone. This detail involves the advantage that the generation of the seed key is protected since it is not accessible. If the generation of the seed key would be hacked a seed key could be set from which the resulting encryption key is known to the hacker, and the hacker could, thus, predesignate the encryption key. By generating the seed key inside the safe zone the generation is protected against manipulation, and the predesignating of the encryption key is prevented.

The protection of the encryption code can be increased if a safe code stored in the safe zone is used as second seed key, and the encryption code is generated from the first seed key and the safe code as second seed key. To enable the generation of the identical encryption code in the server, the server may look up from a data base a safe zone safe code assigned to the safe zone from which it received the seed key. This safe code can be used inside the server as second seed key when generating the encryption code. In coordination with the server, the encryption key generation algorithm using the first and second key can be periodically changed to further frustrate hacking.

To protect the encryption code from uncovering it is advantageous if the seed key is sent to the server the encryption code remains inaccessible in the safe zone for a predetermined time span and is then sent to a communication unit outside the safe zone and linked to the seed key which is also stored in the communication unit.

In case the fixed communication device is designated for protection by the method according to the invention, preferably the fixed communication device generates the random code and an encryption code from the random code. When, however, the mobile communication device is designated for protection, preferably the fixed communication device generates the random code and an encryption code from the random code and forwards the codes to the mobile device for further processing.

Preferably, the communication system generates the random code and the encryption code periodically and stores both codes in a memory, wherein with the storing process of the current codes the respective previous codes may be overwritten.

If the server prompts the communication device to forward the seed key to the server, the communication device can permanently store the seed key sent to the server together with an encryption code generated from the seed key. Preferably, the two stored codes are linked together, so that the encryption code can easily be found by means of the seed key.

The safety of the communication system against influences of malicious code can be enhanced, if the communication device generates an encryption code by using the random code and additionally a communication device ID or any other data stored in the safe zone as such. The data can be used as additional seed key or together with the random code as one single seed key. To get the same encryption code generated by the server, the server may draw on the communication device ID of the communication system which is stored in a data base of the server. Since the server knows the communication system to be updated with the data set it may easily retrieve the communication device ID from the data base.

This encryption generation schema using a first and second key, where the second key is a key a priori known by both sides provides a solution to the known weakness of public/private key systems - that is: certifying that a particular public key is authentic. Such a priori known second key is the ID of the communication device. In general, it can be any information which is linked to the communication device, like a link to the safe zone or the protection unit therein, and is stored in the server, and preferably in the communication device as well.

One possibility for such information would be the ID of the safe zone or the safe zone processor. But in general it can be any information stored inside the safe zone in a way that an access from the side of the server, preferably from all sides, is blocked. For example, a list of codes could be present in the safe zone, the codes being arranged in an order known by the server. Each code is used in a predefined way, like only once. Since the server knows the codes, their arrangement and their use in the past, it will always find the correct second key code.

To find the proper random code for decryption in the communication device the server may add the received seed key to the encrypted data set. The communication device may then uses the received seed key to locate an encryption code linked to the seed key in a data base. Of course, in an alternative, the communication device may use the received random code to generate the encryption code by using the received random key as seed key. If, however, the safe zone is used for generation of the encryption code there will be no possibility to feed the random code to the safe zone since the one directional communication restriction does not allow for processing any data in the safe zone coming from the server sided outside, thus from the communication unit.

Alternatively, a protected reverse communication into the safe zone can be used, like with restricted format and/or size demand, to use the random seed key to cause the safe zone to dispatch the encryption key only upon receipt of the encoded file. In this mode, no encryption key need to be pre-stored outside the safe zone.

It is possible that malicious code is just added to a data set sent to the communication device for application. The data set is thus unaltered except for the addition, which though changes the code length of the data set. The code length of the original data set in the server is, therefore, an appropriate means to check the integrity of the data set arriving at the communication device.

The code length can be used as checking means if the server - prior to encrypting the data set - adds to the data set authentication data and encrypts the authentication data with the code length of the data set as seed key.

The authentication data can be inserted into the data set. Preferably the authentication data are further inserted into a separate authentication data set which is then encrypted using the code length of the extended data set as seed key. The communication system can now - after decryption of the data set - compare the authentication data inserted into the data set with the authentication data of the authentication data set and applies the data set only if the comparison is successful.

Preferably, the encryption of the authentication data uses seed key and/or a communication system ID as seed key as well. The communication system after decryption of the encrypted data set may determine the code length of the data set and decrypt the authentication data using the code length of the data set as decryption key.

Preferably, identical encryption codes are generated by the server and the communication system when using the same seed key. More general: Both code generators use the same seed key as input for outputting the same encryption code. The seed key can be a property of a piece of software, like a code block, a file, a program code update, or similar software, the property being a file length or the like.

The encryption code generators in the server and the communication system are deterministic code generators, i.e. they always generate identical codes under identical starting conditions, i.e. when using the same seed key. It is preferable if the encryption code generation is non-reversible and hence non-breakable.

The encryption key generation algorithm can be synchronized between the server and communication devices to be changed periodically based on mutually known counters such as number of encodings performed or period of time in use. In this manner, the encoding key algorithm can be changed simultaneously in all participating devices and servers. This further frustrates malicious code hacking.

Further, the invention relates to a communication system prepared to perform a data communication with a remote server, especially with a method with one or more details as described above. For this, the system may contain software that when executed performs the method steps according to the invention.

Preferably, the communication system comprises a communication device in the form of a dongle for an operating device. The operating device can be an on board diagnose system of a vehicle. The communication device can comprise a data interface unit and an intermediate safe zone located in the data communication path between the data interface unit and another communication device in the communication direction to the server, wherein the intermediate safe zone comprises the strict one way physical connection to the further communication device. Preferably, the intermediate safe zone is free of a writeable memory.

In a preferably embodiment of the invention the communication device comprises an safe zone or data safe zone, an internal communication line and a switch, which can be a mechanical switch, wherein a first part of the communication line is a strict one-directional communication line allowing data transfer only in the direction out of the intermediate safe zone, and a second part allows data transfer in the reverse direction into the intermediate safe zone, wherein the second part is activatable and deactivatable by the switch.

Additionally, an interface can be constructed whereby, strictly formatted data meeting a predefined format, like parameter data or like an arriving seed key being used as an index for the encryption key, can be transferred into the safe zone

The invention is further directed to a communication system, preferably for performing one or more of the above mentioned method steps.

Preferably, the communication system comprises a safe zone, which is shielded from incoming information. The safe zone may comprise a seed key generator and an encryption code generator for generating the encryption code from the seed key. To protect the safe zone against malicious code coming from the outside, the safe zone is preferably connected to a communication line to another communication system, like to a remote server, wherein the connection to the communication line is free of a receiving unit in the direction to the server.

To prevent malicious code reaching the safe zone the first data processing unit in the communication line seen from the safe zone in direction to the other communication system may be a communication unit which is preferably free of a transmitting unit in the communication line towards the safe zone. Similarly, the safe zone may be an intermediate unit between an on board vehicle device and another communication system, and being free of a receiver in the direction to the other communication system.

The invention relates further to a method for communication between two communication devices of a communication system. It is an object of the invention to provide an enhanced method for protecting a communication device against applying unauthorized code.

This object is solved by a method for communication between two communication devices of a communication system, wherein a first of the communication devices requests a communication line to the second communication device by using a first communication protocol, and if the second communication device does not answer, the first communication device contacts the first communication device using a second communication protocol different from the first communication protocol. This method may be called sixth method according to the invention.

Although no first protocol connection has been established at the beginning, such connection can be triggered using the second protocol channel first, and to prompt the second communication device to open a first protocol channel. By this, a safer communication channel can be used for inter-device communication even if this channel is not active at the second communication device at the beginning of the communication session.

Preferably, the first communication protocol is a WPAN protocol according IEEE 802.15, like Bluetooth, and the second communication protocol is a WLAN protocol according IEEE 802.11, like WiFi. Since a short distance communication with WPAN, like Bluetooth, is safer than with WiFi, a hacking of the communication channel between the two devices is counteracted and the communication is made safer. An alternative to WPAN is infrared communication which is even safer against hacking from outside a vehicle. In the following, for the sake of easier understanding only, the first communication protocol is named Bluetooth and the second communication protocol is named WiFi without limiting the general meaning of the different protocols.

Preferably, both communication devices are located in a vehicle. The first communication device can be mechanically fixed in the vehicle, like in an interface to an on-board diagnostics system of the vehicle, the second communication device can be carried by the driver of the vehicle, like in a pocket of the driver's trousers or in a USB holder in the vehicle thereby accessing vehicle power.

A very safe communication between the two devices can be achieved if the second channel communication between the two devices is a strict one-way communication from the first to the second communication device. The later established first protocol communication between the two communication devices can then be a bi-directional communication.

Preferably, the second communication device identifies the sending of the second protocol communication from the first communication device and triggers an activation of its first protocol communication. The triggering may comprise - depending on the operating system - a direct trigger of the second communication device's Bluetooth or a prompt to a user of the second communication device to activate Bluetooth communication of the second communication device.

Preferably, after activation the first communication device sends as Bluetooth signal to the first communication device, and a Bluetooth communication line between the two devices is established. To establish the communication line the first communication device may search for a Bluetooth signal from the second communication device after it has prompted for the communication.

If the first communication device prompts the first one for communication and using the WiFi to establish a channel for a full bi-directional communication via standard WiFi protocol as this could potential create a security risk if the second device answers and establishes a WiFi communication channel. By virtue of there being a WiFi signal projecting several hundred meters beyond the vehicle, a hacker could take control of the channel and this a hacker WiFi sender could transfer malicious code to the first device which in turn could infect the vehicle computer.

To prevent such damage, it is advantageous if the second communication device answers a second protocol communication prompt received from the first communication device by sending a first protocol communication to the first communication device. The first device may restrict itself to Bluetooth communication preventing any WiFi data processing. Or in other words, it is advantageous if the first communication device only signals the second communication device using its WiFi SSID. This is preferably free of attempt to establish a WiFi bi-directional communications channel. The second communications device, like an UBI application resident in it, detects the WiFi SSID, confirms the identity of the first communication device, like in a stored list, and triggers its own Bluetooth. Now it answers the first communications device using a first protocol communication.

Not requiring the first communications device to support the full WiFi protocol reduces the complexity of the first communication device's processor and operating so it can be maintained as a single tread with primitive OS. This makes hacking very difficult while also keeping down component cost and power consumption.

In case of their location in a vehicle, the first communication device may be a dongle in a vehicle and the second communication device may be a mobile phone.

Preferably, the communication with both protocols are conducted over the same antenna of the first communication device, e.g. the WiFi communication is conducted over the same antenna as the Bluetooth communication.

To prevent a permanent communication prompting, a trigger can be used to start communication. Such trigger can be a physical property of the surrounding of the two communication devices, like the movement of a vehicle in which they may be located. Accordingly, the first communication device may switch from standby mode to active mode upon a movement of a vehicle in which the first communication device is located, and the activation triggers the request of the communication line by the first communication device.

To ensure that the second communication device is ready to receive information from the first communication device, the same or another trigger can be used for a wakeup process of the second communication device, like a physical parameter. Preferably, a movement of the second communication device is used as such trigger. Accordingly, the second communication device activates a software application upon its movement which controls communication with the first communication device. Each time the device is moved the application is active, while after a predefined timespan without movement the application falls back into sleep mode.

Another possibility to start a communication between the two devices uses an background service running on the second device. This daemon (UNIX) or service (Windows) like application watches in the background of the activated second device for a first or second protocol signal from the first device. This signal contains some ID, like SSID, from the first device, thus provides strong evidence that the signal originates from the first communication device. Upon this signal an application in the second device is started, like a UBI application, a GPS application, a communication application or the like. This application may then establish a communication line, preferably a first protocol communication, with the first device.

To keep communication safe, no bi-directional WiFi channel should be enabled and communication between the second and first communication devices is via the first protocol communication. This may be achieved, if the first communication device refuses to process any data received via the second communication protocol at least until the first protocol communication between the two communication devices has been established. WiFi is then used only as wakeup call for the second communication device, whereas no WiFi data are processed by the first communication device, at least during communication with the second communication device or such communication attempt. No malicious code from a WiFi sender can be implemented on the first communication device.

Preferably, the first communication device falls back to single operation mode if the establishment of a first protocol communication line between the two communication devices fails within a predetermined time span after first contact from the first to the second communication device. That means, that the first communication device refuses second protocol communication even if such communication would be possible with a present second communication device. The first communication device then operates alone, like gathering data from a client to which it is connected, and without cooperation with the second communication device. However the first communication device may log that it's WiFi ID has been received by the second communications device in the vehicle and may communicate this to the server when said server data transfer is affected.

To report a single operation to the second communication device and/or to a remote server, it is advantageous that after failure of the establishment of the first protocol communication line the first communication device saves driving data of a vehicle and sends information in a later communication with the second communication device a notice that the communication establishment failed.

Further, the invention relates to a communication system comprising two communication devices. To provide enhanced protection against applying unauthorized code onto a communication device, the first of the communication devices contains software which, when executed, performs the steps that the first of the communication devices request a communication line to the second communication device by using a first communication protocol, and if the second communication device does not answer, the first communication device contacts the first communication device using a second communication protocol different from the first communication protocol.

The invention relates further to a method for identifying a manipulation of driving data. It is an object of the invention to provide an enhanced method for identifying manipulated data. This object is solved by a method for identifying manipulated driving data of a travelling vehicle, wherein a communication system within a travelling vehicle collects the driving data and reference data, driving data and reference data are interrelated and evidence for the manipulation of some of the driving data is derived from this interrelation. This is a reliable method for identifying manipulated driving data as such or for identifying the manipulation of driving data, in other words. This method may be called seventh method according to the invention.

If someone tries a manipulation by obscuring excessive speed data this will distort the related positional data such that either suspicious gaps are created between successive location points, or location points are distorted so that rationalization of the location points to the data characterizing the driving of the vehicle becomes problematic. To identify such manipulation, a server or the communication system in the vehicle may compare the received position data with the data characterizing the driving of the vehicle and verify that positions of the vehicle are correct or show evidence for incorrectness. The manipulation of position data can thus be revealed easily.

Or more specific, if someone tries a manipulation by obscuring excessive speed data as quantified from the GPS device, this will distort the positional data and/or the pattern of accelerations/decelerations reconstituted from the manipulated GPS readings in such a manner that said GPS computed mileage from manipulated datum conflicts with that obtained by independent sensors such as the vehicle odometer and/or cannot reproduce the pattern of vehicle accelerations and decelerations as measured by an accelerometer device as may be installed in the above mention dongle or mobile communication device. The interrelation can be done by a server remote from the driving vehicle.

The driving data are data characterizing the driving, like positions where the vehicle drove, speed values indicating the speed driven by the vehicle, acceleration values indicating acceleration - positive or negative - of the vehicle during driving. Reference data may be any data which characterize the driving of the vehicle and stand in some dependency to the driving data. The reference data may be data gathered by an on-board diagnostic system of the vehicle, like odometer mileage, odometer speed readings or engine turning speed values, and/or acceleration values measured by the on-board diagnostic system or the communication system, or other relevant values. The interrelation can be a comparison of the data according to their correlation, like a direct comparison or a comparison involving a mathematical formula expressing the interrelation correlation.

The interrelation can be performed by the communication system comprising a respective software application for performing the interrelation. However, a safer evaluation of the data can be achieved if the driving data and the reference data are sent to a remote server and the server interrelates the data and derives the evidence.

In a preferred embodiment of the invention the driving data are position data, or location data in other words, indicating where the vehicle drove. The position data may be collected from GPS readings. Preferably, the GPS readings are in accordance with the National Marine Electronics Association (NMEA) standard that is widely adopted in the field. The NMEA format of GPS device output reports at one second intervals: x,y,z coordinates, time stamp, speed, satellite acquisition, signal quality and more.

In a further preferred embodiment of the invention the driving data are GPS position data of the vehicle and the reference data are odometer readings which may be derived from an on-board diagnose unit of the vehicle. Since such data come from a different data source than the position data they can be kept separate from the position data and protected from hacking. Thus, they may provide reliable data for comparison with the position data and uncovering a malicious modification of the data. For this, the interrelation may comprise the comparison of the odometer readings with the position data and the evidence for the manipulation is derived from this comparison

To prevent a malicious modification of the reference data, they are preferably encrypted by means of an encryption key stored in a safe zone of the communication device which blocks the entry of data from an outside communication direction, like a communication direction from the server. Since a hacker will most probably have to access the safe zone from this direction, such blocking as a reliable prevention of hacking the encryption key.

Preferably, the driving data are vehicle speed data indicating the driving speed of the vehicle. Such data a favored data for hacking since speeding is the most common driving event which a driver would like to hide. The speed values of the speed data may easily be derived from position data gained from GPS readings.

If the driving data are position data gained from GPS readings they are preferably gained by a mobile communication device of the communication system. The mobile communication device may be realized as described above. Further, the mobile communication device may easily generate further driving data in the form of speed data from the position. This generation is performed outside a GPS unit, preferably, to obtain a close relationship between the position data and the speed data.

To closely relate speed data indicating the vehicle speed to the position data, it is preferred, if the speed data are generated not from a GPS unit but from the position data directly, thus outside the GPS unit. If such unit is located inside the mobile communication device, it is thus the mobile communication device which generates the speed data from the position data outside a GPS unit. From those speed data the server may derive a driving characteristics of the vehicle from the speed data. Such closely related and thus approvable speed data are a reliable source for generating data which characterize a driving quality of the driver.

As mentioned above, it is desirable to closely relate speed data indicating the vehicle speed to the position data. To achieve this advantage speed data sent to the server may be calculated by the communication system solely from the location data.

To strictly keep control of the speed calculation algorithm it is desirable if the speed data are calculated by a software application of the communication system, wherein the application controls the communication with a remote server and a communication device fixed to the vehicle.

If speed derived from location points and the time it took to travel the location points is modified the location points need to be modified as well to keep consistency with the modified speed values. If such location modification is not done with the aid of road map data it could happen, that the new location points are constantly out of roads. To uncover such malicious modification - if the driving data are position data gained from GPS readings - the position data may be compared with road map data and evidence for the manipulation of the position data is derived from this comparison. The server may verify that positions of the vehicle fall on roads, at least most of the times, and if not form evidence for hacking.

Another consistency test may be performed using vehicle acceleration data as reference data. Such data are data characterizing the driving of the vehicle and can be generated by an acceleration sensor of the communication system in the vehicle. The communication system may store acceleration values taken concurrently at locations of the position data. Acceleration values from a hardware accelerometer will also likely be output at sub-second intervals which are then associated with the time between GPS NMEA readings.

If now the acceleration data are compared with the position data, evidence for the manipulation of the position data may be easily achieved from this comparison. The server may compare the received speed data with acceleration data and verify the correct relation of a speed change with the acceleration data.

In general, the interrelation evaluation may be performed in the communication system, an upload of driving data and reference data for this purpose is then not necessary. If, for example, the accelerometer data do not match theoretical acceleration derived from GPS location data, (i.e. change in speed over time) to a sufficient degree - the buffer sends to the server its data to do an odometer based test against the GPS data. Especially, the comparison for consistency of odometer and acceleration, like GPS NMEA derived acceleration - positive or negative, does not require upload to the server but can be done to a sufficient degree of accuracy in the mobile device.

In case of an accident driving data gathered directly before the accident may help to clear the reasons for the accident. To prevent the erasure of valuable driving data for clearing purposes and to ascertain that prior reported UBI data was not the result of a hacked GPS - a time period of GPS positional data with associated concurrent driving data reading including odometer and accelerometer reading are stored in a buffer. In general, the driving data and the reference data are stored in a buffer. Upon an acceleration of the communication system above a predetermined threshold preferably triggers the forwarding of the buffer contents to the server, especially the complete buffer contents of driving data, reference data, and/or driving relevant data. Said buffer contents may also be periodically sent to the server to confirm that the GPS has not been hacked.

The invention is further directed to a system for identifying manipulated driving data of a travelling vehicle according to the invention as described above.

All seven methods and devices according to the invention are complementary to one another and can be combined in any combination. And any detail of one method may be used to complement another method or the respective device. It is, however, possible and advantageous to use any method or device as standalone protection.

The invention further relates to an activation device for activating a power supply to a power consumer upon acceleration of an acceleration sensor.

Road vehicles, like cars, motorcycles or trucks, use their battery to maintain the functions of their electronic units. In some cases one of such electronic units is a so called dongle which is plugged into a data port of the vehicle, and is connected to an on board diagnostics specification as well as to a power supply to feed the dongle with power for its electronic units and for refreshing an internal battery which is use to override a time period without connection to the vehicle battery.

Such dongles are used to wirelessly transmit data from the vehicle to a remote server for further use. Such data may be vehicle and driving data, which are fed from the on board diagnostics to the dongle and mostly are filtered by the dongle before forwarding them to a remote server. Such systems may be used for all purposes where an external company which is not the vehicle manufacturer and makes use of vehicle or driving data. The company supplies a vehicle owner with the dongle which feeds the company server with the respective information. An example are Pay How You Drive systems (PHYD), or better known as User Based Insurance (UBI), used by insurance companies for estimating the risk of individual driving of their customers. And even vehicle manufacturers may use a dongle for older cars without such special data transmit service in order to obtain vehicle and driving data to improve vehicle maintenance and vehicle parts design. However, the use of dongles attached to devices or systems featuring a data processor is not limited to vehicles. A dongle is useful as interface to any diagnostics system or other applications where it may guide interactions, especially in a system like the internet of things.

In general, the use of a dongle is limited to systems providing a respective interface for the dongle. If no interface is present no connection of the dongle with the system under observation is possible.

It is an object of the invention to provide a driving motion detector which can be operated without an interface to a system under observation.

This problem is solved by an activation device for activating a power supply to a power consumer upon acceleration of an acceleration sensor comprising a housing, a power supply, a power consumer, and an activator inside the housing in the form of an acceleration sensor for activating an inactive power feed from the power supply to the power consumer upon a signal of the acceleration sensor. Power consuming units, such as a processor, can be put asleep to save power, and they can be awakened by the activation device upon a signal of the acceleration sensor. Preferably the activation device is a part of a driving motion detector but draws no electrical power while waiting to while waiting to detect movement.

The invention is based on the idea that a permanent surveillance of a system under observation will constantly use up power from the power supply. If the device would be a dongle-like additional unit to the system it would be preferable if the device is rather small and not equipped with a heavy battery. Thus, a device with a low energy consumption is preferable. This could be achieved if the surveillance of the system under observation is terminated if the system is shut off of operated in a mode of low interest. Then the observation device needs to be awakened if the system under observation changes his operation mode to a more interesting one to be observed.

In case the system under observation is characterized by different operation modes wherein during a non-interesting mode the system is statically resting without movement, and during an interesting mode the system is moving, then the observation can be performed with the aid of an appropriate sensor which can be part of a motion detector or outside, like in a mobile communication unit or in another place of the vehicle. Since such observation consumes electric energy from any power consumer, like a control unit and/or an acceleration sensor, it is desirable that the power consumer can be put asleep during operation in the non-interesting mode in order to save electric energy during operation in the non-interesting mode. To awaken the power consumer an activation device can be present which activates an inactive power feed from the power supply to the acceleration sensor and/or another power consumer, like a control unit, which can activate the acceleration sensor.

The awakening signal for the activation device can be acceleration of the device as such or it's housing. To detect such acceleration an activator with an acceleration sensor is be present. The signal of this waken acceleration sensor can be used to start a monitoring of the system. The waken acceleration sensor can be identical with a monitoring acceleration sensor which monitors the operation of the system under observation, wherein an additional monitoring acceleration sensor is not necessary.

The power supply can be inside the housing or at its outer side, and is preferably fixed attached to the housing. Together with the acceleration sensor and the sender it renders the driving motion detector independent from a mechanical interface to the vehicle, like a power interface or a data interface to an on board device.

Preferably, the power consumer is a communication system, like a sender, and the activator is connected to the power supply in that way, that an acceleration or tilting of the activator activates the power feed to the power consumer.

A controlling of actions upon a wakening signal of the activator can be enhanced if the activation device comprises a sender which is connected to the power supply and the activator in such a way that it sends a signal upon a signal of the acceleration sensor, a wireless signal, particularly. The wakening signal can be broadly transmitted without the need of a physical connection of the activation device to another device.

To save electric power the activation device preferably is a device which is constructed in a way that an activation process takes place without consuming electrical power. Of course, during standby times it should not use up any electric power. To achieve this, the activation device preferably is free of electric current supply. It can be mechanical unit which uses potential or kinetic energy of an acceleration process to activate the inactive power feed. In general, the activator may solely use mechanical energy arising from an acceleration of the housing to activate the inactive power feed. The acceleration sensor preferably has a mechanical unit which moves upon acceleration of the sensor to generate a wake up signal, like by closing an open electric circuit.

Especially in the case where the detector comprises a mechanical waken element which moves upon acceleration of the vehicle - or detector housing respectively, such movement can be blocked if the housing is not straight but tilted in some way which prevents the element from moving correctly. This problem can be solved by a swing system with the activator on a platform and a system suspension with a joint allowing the platform to swing inside the housing. A tilting can be compensated by the respective anti-tilting of the swing system. Such anti-tilting can be automatically caused by allowing the swing system to hang vertically downwards independently of a tilting of the housing, within given angle boundaries, of course.

Accordingly, the swing system preferably is suspended inside the housing in such a way that it keeps its downwards hanging direction independently of a tilting of a halting position of the housing, and a vehicle where the housing is attached to, respectively. By means of this the detector can be reliably operated independent of the angle of mounting of the driving motion detector at the vehicle, a vehicle tilting while in motion, and/or a vehicle tilting while the vehicle is halted.

To achieve a freely movable swing system the system suspension preferably allows a two-dimensional swinging of the system, especially in two swing directions. Preferably, the system suspension allows a swinging of the system in a driving direction of the vehicle. Such driving direction of the vehicle can be marked at the housing, so that a correct mounting of the detector at the vehicle is ensured.

The swing system can comprise a platform carrying one or multiple sensors. Preferably, the platform carries a waken acceleration sensor. The platform may comprise a printed circuit board with one or more acceleration sensors, a sender, a memory and a processor of a control unit. In another embodiment such circuit board may be fixed to a housing wall.

If the system suspension allows a swinging of the system such that it hits the housing during normal operation. A shock is caused which is very easy to detect by the acceleration sensor. By this the activation device can be operated very reliably even with a slight mechanical malfunction of the acceleration sensor or with a very low acceleration of the vehicle.

If the activator is a mechanical unit, like a mechanical switch, an easy and reliably operation can be achieved if the activator comprises an activation track, an activation contact and an activation element movable inside the activation track and able to hit the activation contact. The movement of the activation element can be caused by the acceleration of the housing, or any system where the housing is attached or enclosed, respectively. Accordingly, such movement will make the activation element hit the activation contact by which the power feed to a power consumer can be started.

The activation track can be a housing around the activation element. It can be formed as a tube, a plate or in another form suitable for guiding the activation element in its motion. It may contain the contact element, and may be constructed in such a way that a contact of the activation element with the contact element opens the power feed by closing an electric circuit.

Or in other words: The activation can be performed by closing an electric circuit upon the movement of the activation element. For this the activation contact may comprise two poles of an electric circuit which are closed by contact with the activation element.

Preferably, the activation contact comprises a first pole and the activation track carries the second pole of an electric circuit, isolated from the first pole. If the contact element sits, slides or rolls on the first pole the two poles can be closed by contact of the activation element with the first pole.

If the activation contact comprises two contact elements located at opposite ends of the activation track an acceleration in two directions can be detected by simple means.

A reliably switching of such a contact element can be achieved if the activation element is an electrical conductor, in particular a liquid drop of an electrical conductor, like a drop of mercury. The electrical conductor upon hitting the contact element will connect the two pole by which the electric circuit is closed.

Alternatively or additionally the activation element can be a metal ball, especially a steel ball.

To prevent an unwanted activation, the activation track may comprise a bent zone with a middle deeper zone and a higher zone rising on opposite sides from the deep zone. The incline from the lower zone to the higher zone makes sure that the activation element flows or rolls down again after having hit the activation contact, and so it resets and disengages from the contact reliably. Further, if no acceleration is present the activation element will reside at a defined location within the activation track, i.e. the lowest point within the housing. Without or with only very little acceleration the contact element will stay at the lower zone. If then the activation contact is located at one or both of the higher zones it will only be hit by the activation element if reasonable acceleration is present which lifts the activation element from the lower to the higher zone. This makes a number of activation events comparable to one another since the contact element will start its run towards the activation contact always at the same point or region.

A multi-directional detection of acceleration can be achieved, if the activation track is formed in such a way that it allows a two dimensional movement of the contact element within the activation track. The activation track can be formed as a plate or bowl with a very little bend in which the activation element slides or rolls. In this embodiment it is advantageous if the activation contact is formed as a ring running inside the housing around a space where the contact element is located.

In a further advantageous embodiment of the invention the activation device comprises an outer housing and an inner housing and a fluid between both housings. The inner housing can float within the outer housing which allows the inner housing to easily turn inside the outer housing. A weight in the inner housing will then keep the inner housing always in a predefined alignment to gravity, so that an alignment of an acceleration sensor perpendicular to this vertical direction will allow the sensor to reliably detect horizontal accelerations.

Preferably, a fluid space between the outer housing and the inner housing is filled only partly with fluid the rest remaining gas. By this the inner housing may float inside the outer housing in such a way that the upper part of the inner housing looks out from the fluid zone into the gas zone. This will facilitate a vertical alignment of the inner housing within the outer housing.

A suitable floating and thus reliable alignment can be enhanced if the ratio of volume of fluid zone to volume of gas zone is at least 1, especially between 1 and 3.

As mentioned above, a freely turnable inner housing within in the outer housing will reliably allow a vertical alignment of the inner housing. Preferably, the inner housing is freely turnable in two dimensions within in the outer housing. If in a further embodiment that inner housing is freely translational movable in three dimensions within in the outer housing the task of wakening the power consumer can be performed more reliably. A translational movability will allow the fluid to sway within the outer housing which will then cause the inner housing to sway with the fluid and finally hit the outer housing. This shock is easily detectable even with a slight mechanical malfunction of the acceleration sensor or at a very low acceleration of the vehicle.

Further it is advantageous if the fluid space surrounds the inner housing completely, which means that it runs 360° around the inner housing. Preferably the fluid space between the housings surrounds the inner housing spherically. For this it is advantageous if both housings have a spherical shape.

A swinging of the fluid and thus a bump of the inner housing against the outer housing is simplified if a fluid space between the outer housing and the inner housing has a radial thickness of at least 25% of the median radius of the inner housing.

Moreover, the invention is directed to a driving motion detector for placing at a vehicle.

To provide a driving motion detector which can be operated without an interface to a system under observation the driving motion detector may comprises an activation device according to the invention as described above.

In general, the driving motion detector may comprise a housing, a power supply, an acceleration sensor inside the housing, a control unit with a program for gathering and release motion information, and a sender to transmit motion information to a receiver located outside the housing.

The driving motion detector is made for placing at a vehicle, which comprises a placing inside the vehicle or at any place on or at the vehicle. The placing can be a mounting or fastening to the vehicle in the inside or at the outside of the vehicle. The driving motion detector can be prepared for mounting at the outside to a vehicle. This is advantageous for motorcycles where the detector could be placed at the fuel tank or any other surface of the motor cycle. For this the detector may comprise a mounting element for mounting to a vehicle surface.

In a preferred embodiment of the invention the driving motion detector is an autonomous and preferably mechanically isolated system for detecting a housing acceleration and for transmitting motion information. It can be placed at the vehicle and operate without any support from a vehicle unit, like data unit or power supply unit.

The sender transmits motion information to the receiver outside the housing. The sender can be a Bluetooth or WiFi sender and the receiver can be a mobile communication device. Motion information can be the information that the vehicle moved within a predefined timespan before. Or it contains information about the motion, like a beginning time point of a driving session, or other characteristic of a driving of the vehicle.

In a further embodiment of the invention the control unit comprises a program for determining from sensor data a motion of the housing and the time points of the beginning and end of the motion. To distinguishing short motions, like a single tremor from closing a vehicle door, for example, from longer driving sessions of a vehicle, the evaluation unit preferably contains software to evaluate characteristic of the motion.

The invention is further related to a driving motion detector system comprising a driving motion detector as described above, and a mobile communication device, like a smart phone, which preferably is located in or at the vehicle, like in a pocket of a motorcycle driver.

Further, the invention is directed to a method for detecting motion of a mechanical system, especially detecting driving motion of a vehicle. Such detection can easily be performed without the need of an interface to the mechanical system if a housing is placed at the system, and an acceleration sensor inside the housing senses acceleration of the housing. A control unit can determine a motion of the system from sensor data, and may start an action, like observation of a parameter, like acceleration of the system, or a - preferably wireless - communication with a remote motion observation system outside the housing, like a further unit in or at the vehicle, like a smart phone with a GPS application.

The control unit may determine motion of the system from sensor data - which can be data from the acceleration sensor, a location sensor, like a GPS unit, a vibration sensor, or any other sensor - collects system motion data, forwards the data to a sender which preferably is located inside the housing, and the sender sends the motion data to a remote receiver located outside the housing, especially outside the system.

The invention is further directed to a method for activating a power supply to a power consumer, especially a control unit. An activation triggered by an acceleration of a device can easily achieved if a driving motion detector with a housing and an acceleration sensor inside the housing senses acceleration of the housing, and an activator inside the housing activates an inactive power feed from the power supply to the power consumer upon a signal of the acceleration sensor. If before this action the power consumer in the housing is cut off from a power supply by a control unit after a predetermined time during which no acceleration of the system is sensed, the awakening of the consumer can reliably be achieved.

Preferably a motion of the mechanical system - from which the motion is detected later - causes such activation of the power supply to the power consumer. The power consumer can be the control unit.

Preferably, the activator for activating the power supply is a mechanical acceleration sensor, and the control unit determines the motion of the system from a further electronical acceleration sensor.

If a motion of the system actuates a movement of an activation element of the activator the activation element may hit an activation contact and closes an electric circuit by hitting the activation contact.

Preferably, the activator comprises a swing system which carries the acceleration sensor, upon an acceleration of the housing the swing system swings and hits the housing from inside which causes the acceleration sensor to send a signal upon which the activator activates the power feed.

In a further advantageous embodiment of the invention the driving motion detector connects with a mobile communication device located outside the housing and inside a moving system, a location unit of the mobile communication device detects a movement of the system and sends movement data to a remote server.

The driving motion detector may be inside a vehicle, and an evaluation unit with the aid of a sender contacts a mobile communication device located outside the housing at the vehicle, the contacting being triggered by the detection of movement of the vehicle.

In another embodiment the driving motion detector is inside a vehicle, and a termination of a driving session of the vehicle is detected by an evaluation unit inside the housing from an evaluation of signals of the acceleration sensor, and the evaluation unit upon the termination triggers the cut off of the power consumer from the power supply.

Further, if the driving motion detector is inside a vehicle, an evaluation unit may determine from sensor data a motion of the housing, the time points of the beginning and end of the motion, and distinguishes short motion interruptions within a driving session from a termination of the driving session of the vehicle to which the housing is attached.

To observe the acceleration of the mechanical system an acceleration sensor is used. This can be the sensor which is used for the activation of the power supply or a further acceleration sensor. In a preferred embodiment the acceleration sensor for activating the power supply is a mechanical sensor. In contrast to this, a further acceleration sensor from which the control unit may determine the motion of the system preferably is an electronical sensor, so that a motion of the system under observation can be detected more accurately. The additional acceleration sensor can be an inertial navigation system, a vibration sensor, or any other acceleration sensor.

The previously given description of advantageous details to which the invention is directed or related to are combinable with one another. They contains numerous features which are partially combined with one another in the dependent claims. Expediently, these features can also be considered individually and be combined with one another into further suitable combinations. More particularly, any method features can be combined with any method or device according to any independent claim individually as well as in any suitable combination. An independent formulation of a claim in the description only equals an explicit independent claim in this regard. Furthermore, features of any method, comprehendible as apparatus features, can be considered as features of the corresponding device and, accordingly, features of the device, comprehendible as process features, can be considered as features of any method.

The above-described characteristics, features and advantages of the invention and the manner in which they are achieved can be understood more clearly in connection with the following description of exemplary embodiments which will be explained with reference to the drawings. The exemplary embodiments are intended to illustrate the invention, but are not supposed to restrict the scope of the invention to combinations of features given therein, neither with regard to functional features. Furthermore, suitable features of each of the exemplary embodiments can also be explicitly considered in isolation, be removed from one exemplary embodiment, be introduced into another exemplary embodiment for supplementation and/or be combined with any of the appended claims.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
- FIG 1: shows an overview diagram of components of a server and a communication system,
- FIG 2: shows a safe zone inside a communication device of the communication system,
- FIG 3: shows a flow diagram of a method for identifying a protected data communication between the communication device and the remote server,
- FIG 4: shows a scheme of a software updating process where two random codes do not match,
- FIG 5: shows the scheme of the software updating process where the two random codes do match,
- FIG 6: shows a scheme of a confirmation of a receipt of a software update code,
- FIG 7: shows a flow diagram similar to FIG 3 of a method for identifying a protected data communication with a two-step randomization,
- FIG 8: shows a scheme of a code loop routine,
- FIG 9: shows a scheme of a three-layered protection of the software of the communication device,
- FIG 10: shows a software application of the communication device generating a data capsule with driving data and sending it to the server,
- FIG 11: shows the generation of identification data and placing it into the data capsule to identify data manipulation,
- FIG 12: shows a detail of an inspection of the identification data by the server,
- FIG 13: shows a second detail of an inspection of the identification data by the server,
- FIG 14: shows a further detail of an inspection of the identification data by the server,
- FIG 15: shows a flow diagram of the identification data generation and inspection,
- FIG 16: shows a flow diagram of the identification data generation and inspection with a two-step randomization,
- FIG 17: shows a flow diagram of a method for protection the communication system against applying unauthorized code,
- FIG 18-22: show a scheme of the process depicted in the flow diagram of FIG 17 protecting the data transfer from the server to the communication system, and
- FIG 23-24: show a scheme of a process protecting the data transfer from the communication system to a server,
- FIG 25: shows a block diagram of data generation and evaluation to identify manipulated data sent from the communication system located within a travelling vehicle to the remote server,
- FIG 26: shows location and speed data taken from a vehicle journey,
- FIG 27: shows an example of manipulated location data to reduce the respective speed values,
- FIG 28: shows a block diagram of data safeguard in case of an accident,
- FIG 29: shows a block diagram of a simplified data generation and evaluation process,
- FIG 30: shows a block diagram of a more secure data generation and evaluation process,
- FIG 31: shows a vehicle with a driving motion detector comprising an activation device,
- FIG 32: shows the driving motion detector in detail,
- FIG 33: shows a swing of the driving motion detector hitting a housing,
- FIG 34-37: show different versions of an activator of an activation device,
- FIG 38: shows a process of activating a processor after a period of sleep, and a communication with a mobile communication device,
- FIG 39: shows the process where no mobile communication device is found,
- FIG 40: shows a process where no mobile communication device is found and motion data is monitored by an additional sensor of the motion detector,
- FIG 41: shows a process where no movement is detected by the mobile communication device and the motion detector is put asleep,
- FIG 42: shows an alternative motion detector in detail,
- FIG 43: shows a further motion detector with an inner housing floating in fluid within an outer housing,
- FIG 44: shows an alternative spherical motion detector with a wider fluid chamber, and
- FIG 45: shows a driving motion detector on a string as mounting aid.

### DETAILED DESCRIPTION OF PREFERRED EMBODIMENTS

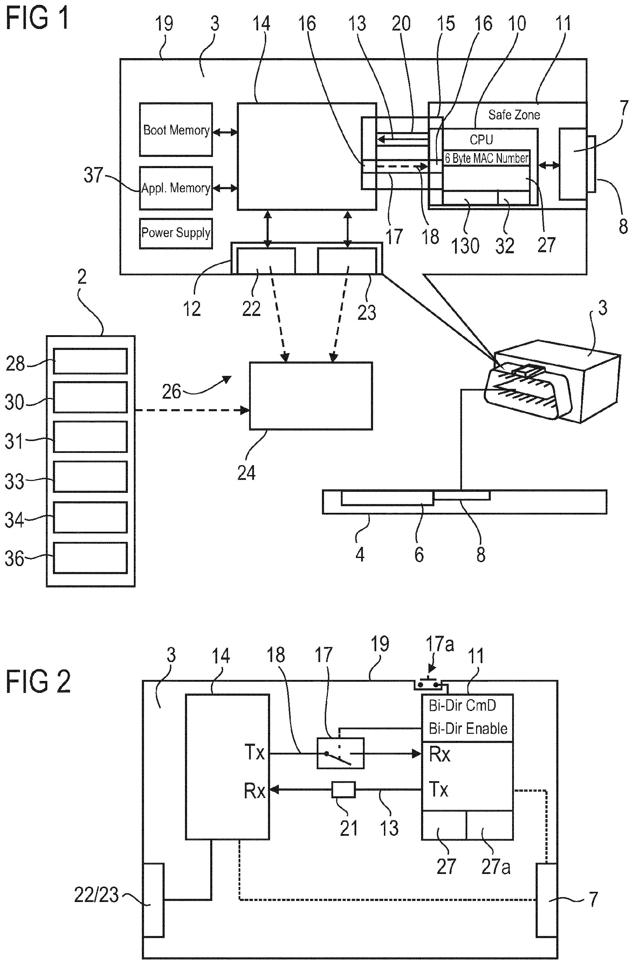

FIG 1 shows a schematic block diagram of a server 2 and a communication device 3. In this embodiment of the invention the server 2 is a server 2 of an insurance company for monitoring the driving of a plurality of insurance customers who have chosen to be billed according to properties of their driving. For monitoring the driving of a vehicle 4, which in FIG 1 is depicted only schematically, the communication device 3 is connected to an on-board diagnostics system 6 of the vehicle 4 which during driving transfers driving data to the communication device 3. In general, the communication device 3 can be fixed to any device 4 to be monitored, and the server 2 can be any server 2 for evaluation of the monitoring data.

The communication device 3 is a device fixed to the vehicle 4, preferably without tools removable fixed to the vehicle 4, like plugged into a mechanical plug interface, and has a first data interface 7, which can be a mechanical data interface, like a plug, adjusted to a mechanical data interface 8 of the vehicle 4. In the special embodiment shown in the figure the communication device 3 is a so-called dongle with a plug interface 7 for connecting with a physical interface 8 of the on-board diagnostics system 6, for instance. The on-board diagnostics system 6 is a client of the server 2 which serves many on-board diagnostics systems of different vehicles as data receiving server and software update server.

As shown in the upper section of FIG 1, the plug interface 7 is wired with an intermediate protection unit 10, and is together with the protection unit 10 part of a data safe zone 11 within the communication device 3. The protection unit 10 is located in a data communication line between the first data interface 7 and a second data interface 12 which is a wireless data interface 12 transmitting the received data wirelessly, as is depicted by the broken arrows in FIG 1.

The safety of the safe zone 11 results from the communication structure of the protection unit 10 which is a one-way data connection 13 in the communication line between the plug interface 7 and a main processing unit 14 of the communication device 3 in the direction to the main processing unit 14 only. The main processing unit 14 may be the electronic circuitry within the communication device 3 that carries out the instructions of a program code by performing the basic arithmetic, logical, control and input/output operations specified by the instructions. It is the processor of the communication device 3 as central part distinguished from external components such as main memory and I/O circuitry.

In a first embodiment the one-way data connection 13 is a strict one-way physical connection 13 which can be defined as transmission or communication line having on one side only a sender or transmitting unit, like in the safe zone 11, and no electronics capable of further processing received signals. The intermediate protection unit 10 is free of a writable memory, and a remote modification of its software is impeded significantly due to the one-way communication 13 and the lack of a writable memory, accordingly.

In a second embodiment the one-way data connection 13 is achieved by blocking the data traffic in the reverse direction, like by a data blocker 15. This data blocker 15 can at least partly be part of the protection unit 10, and contains software 16 which only when executed lets data pass in the direction to the first data interface 7 and lets only such data pass which has a format of a time and a data size of one byte. Further, the software 16 is configured in such way that it accepts data only once per 24 hours or less.

In the shown embodiment the data blocker 15 is a part of the main processing unit 14 as well where it contains software 16 allowing the receipt of data by the protection unit 10 only if it has a format of a time and a data size of one byte. All other data is refused or blocked from sending.

If in certain situations a data transfer from the main processing unit 14 to or through the protection unit 10 is useful, a data channel 17 is activatable by a mechanical switch 18 which allows a data transfer from the main processing unit 14 to the safe zone 11. The switch 18 is a mechanical switch which is operated mechanically from outside an outer housing 19 of the communication device 3, like pressing a button or switching a knob from a first position to a second position. Such special situations could be present, if a special data output of the protection unit 10 needs to be triggered by a special request, or if it is useful to transfer data through the safe zone 11 to the diagnostic system 6 or any other vehicle system. Preferably, a timer is present inside the safe zone prepared to break the connection with no further manual intervention after a predetermined period of time after the special two way channel has been enabled.

In case the data transfer from the safe zone 11 to the main processing unit 14 - or in general from the diagnostic system 6 or any other vehicle system or client to the server 2 - should be interrupted or tagged as special situation data, the communication device 3 comprises a disengage switch 20 which - when mechanically activated - interrupts the one-way communication 13 to the main processing unit 14. Alternatively to or additionally to the disengage switch 20 an exception switch may be present which tags the passing data packages with a tag designating them as special data. This could be useful if the vehicle 4 is driven in a special mode during maintenance or repair or is tested after maintenance or repair.

The protection unit 10 receives from the on-board diagnostics system 6 all kind of diagnostic data, and filters from those data predetermined kind of information which is then forwarded to the server 2. If the protection unit 10 contains a list of relevant parameters, it may poll parameter data to those parameters from the OBD 6 und thus selects only the relevant data. To keep the protection unit 10 simple, in another variant the protection unit 10 just cycles and continuously outputs across the one direction line 13 all the diagnostic vehicle data to the main processing unit 14. The main processing unit 14 then removes whatever OBD data it needs for the UBI or whatever data gathering in progress and discards the rest.

During operation the data retrieval and evaluation system, comprising the server 2 and the communication device 3, monitors the status data and operation data of the device to be monitored, like the vehicle 4 in this illustrative example. While in the following, all illustrations refer to the on-board diagnostics 6 of the vehicle 4 and the insurance server 2, every described detail may be used in a broader sense and combined with a general monitoring unit in a monitored device and a remote evaluating server connected to the monitored device via the communication device 3.

The data of the monitored vehicle parameters are generated in the vehicle 4 and monitored with the on-board diagnostics unit 6 which is connected by wire to the communication device 3. The protection unit 10 filters these data according to a predetermined filtering plan deposited in a memory of the protection unit 10. The resulting data are sent to the main processing unit 14 which forwards the data via WiFi or Bluetooth to the mobile device 24. The mobile device 24 runs a software application for processing those data and forwarding them to the server 2 by GSM or WiFi telecommunication, as appropriate. Further, the mobile device 24 generates data itself which it combines with the monitoring data received from the communication device 3. The combined data are sent to the server 2. Such additional data may be geographical data retrieved by a GPS receiver, speed data, and/or acceleration and deceleration data retrieved by an acceleration sensor included in the mobile device 24.

For further communication protection the protection unit 10 comprises a random code generator 27 which periodically generates a random code according to a mathematical algorithm contained in the protection unit 10. In an alternative to the random code generator 27 in the protection unit 10, a random code generator in the main processing unit 14 of the communication device 3 may be used.

The communication device 3 comprises the second data interface 12 with two wireless communication units 22, 23, one communication unit 22 being a Bluetooth unit and the other one a WiFi unit 23. To save space and a separate antenna, both units 22, 23 may use one single antenna, and thus can only by operated successively and not simultaneously. Both communication units 22, 23 are prepared for communication with a mobile communication device 24. While the communication device 3 is a short distance communication device using Bluetooth and/or WiFi, the mobile communication device 24 is a smart phone or any other vehicle implemented or hand held device for long distance wireless remote communication, using GSM, for instance. In the shown embodiment of FIG 1 the mobile device 24 is connected to the server 2 directly via GSM connection. Both connections from the mobile device 24 to the main processing unit 14 and from the mobile device 24 to the server 2 are bi-directional.

The communication device 3 and the mobile device 24 form a communication system 26 which during journeys of the vehicle 4 travels with the vehicle 4, and is thus part of a moving vehicle system comprising the vehicle 4, the mobile device 24 and the communication device 3. This moving vehicle system comprises the on-board diagnostics system 6 of the vehicle 4 and the communication system 26, wherein due to the protection of the communication system 26 against applying unauthorized code by means of the invention the on-board diagnostics system 6 is protected against applying unauthorized code as well. Thus, the invention comprises a method for protecting an on-board diagnostics system 6 of a vehicle against applying unauthorized code as well.

The communication system 26 communicates with the stationary server 2 and comprises the features of the communication device 3 and the mobile device 24, wherein the features of the communication device 3 may be implemented in the mobile device 24 and vice versa, both devices 3, 24 can form a single mechanical device, accordingly. For the sake of simplicity and easier handling in the following description the features of the communication system 26 are separated into the communication device 3 and the mobile device 24 - as shown in the figure - wherein this embodiment does not limit the invention to this special feature distribution.

FIG 2 shows the fixed communication unit 3 with its safe zone 11, the interface 7 to the on board diagnose system 6, the Bluetooth and WiFi unit 22/23, and the processing unit 14. The safe zone 11 is connected to the processing unit 14 by means of the signal connection 13, wherein on the safe zone side the connection 13 ends in a transmitter Tx and in the processing unit side in a receiver Rx. By this configuration no signal can be sent to from the processing unit 14 to the safe zone 11, but only in the reverse direction. Optionally, a direction filter unit 21 can be put in the signal line 13 which transfers electrical signals only in the direction away from the safe zone 11.

The second signal connection 18 comprises the mechanical bidirectional switch 17 with which the second line 18 can be added to and withdrawn form the first line 13. The switch 17 is controlled by a mechanical switch 17a which is operable only by means of manual action, like pushing the switch 17a. The switch 17a is mechanically operable from the outside of the housing 19 of the fixed communication device 3.

The switch 17a is connected to a bi-directional command unit which controls bi-directional enable unit, like a mechanical actuator. The command unit receives a signal from the switch 17a, like by connection of two electric contacts, and controls the enable unit as a function of the signals received from the switch 17a. Further, the command unit controls the enable unit so that a closed switch 17, resulting in a closed signal contact between the processing unit 14 and the safe zone 11, opens after a predetermined time span, like 10 minutes, and the line 18 is interrupted again. The time span depends on the signals of the switch 17a. If the switch 17a is pushed once, the time span is 10 minutes, if he switch 17a is pushed twice, the time span is 20 minutes, and so on, every push prolongs the time span.

The switch 17 is a mechanical switch which cannot be operated by software, but needs to be operated mechanically and manually, like pressing a button or activating a switch from a first position to a second position. The reverse signal direction is thus only manually connectable, and adds a second physical signal line 18 to the one way physical connection 13.

Such special situations could be present, if a special data output of the safe zone 11 needs to be triggered by a special request, or if it is useful to transfer data through the safe zone 11 to the diagnostic system 6 or any other vehicle system.

In case the data transfer from the safe zone 11 to the main processing unit 14 - or in general from the diagnostic system 6 or any other vehicle system to the server 2 - should be interrupted or tagged as special situation data, the communication device 4 comprises a disengage switch 20 which - when mechanically activated - interrupts the one way communication 13 to the main processing unit 14. Alternatively the disengage switch 20 tags the passing data packages with a tag designating them as special data. This could be useful if the vehicle 6 is driven in a special mode during maintenance or repair or is tested after maintenance or repair.

The safe zone 11 receives from the on-board diagnostics system 6 all kind of data, like diagnostics data, vehicle component status data and/or vehicle driving data, and filters from those data predetermined kind of information which is then forwarded to the server 2. Alternatively, the communication unit 3 requests from the on-board diagnostics system 6 specific kind of data, especially driving data characterizing one or more driving parameters, like acceleration, location data, speed data, throttle actuation data, and the like.

To keep the safe zone 11 simple in another variant the safe zone 11 just cycles and continuously outputs across the one direction line 13 all the diagnostic vehicle data to the main processing unit 14. The main processing unit 14 then removes whatever OBD data it needs for the UBI or whatever data gathering in progress and discards the rest.

As can be seen from FIG 2, the on board diagnostic system 6 can be connected in two different ways to the main processing unit 14. Both paths, which are shown with a broken line, can be installed alternatively or additionally. If the signal line through the safe zone 11 is used a data manipulation of the on board diagnostic system 6 can be blocked, since a hacking attempt or malware has to pass the safe zone 11 which is not possible. If the line around the safe zone 11 is used the safe zone 11 cannot be manipulated from the side of the on board diagnostic system 6, which renders the safe zone 11 even safer.

The server 2 comprises a list 28 of addresses of those communication devices from which the server 2 collects data. In this embodiment of the invention it is a list of MAC addresses (Media Access Control address) or Ethernet Hardware Addresses. Further, the server 2 is furnished with a random code generator 30 which is identical or at least similar to the random code generator 27 of the communication device 3 and comprises the same mathematical algorithm to generate random codes. Accordingly, both random codes are identical upon the input of the same seed key. Both random code generators 27, 30 may be furnished with or connected to a clock 31, 32 and comprise a clock algorithm which sets a pace or rhythm for generating the random codes, either in predetermined time intervals or in predetermined time points of the day. Time points, as time points of code generation may serve as seed key, so that both random code generators 27, 30 supply identical random codes at identical points in time, for instance, or with a predetermined and preferable constant time delay, like a number of seconds or minutes.

A memory in both the server 2 and communication device 3 may also contain a repertoire of alternative encoding key generation algorithms for the seeds involved. Changes of the encoding key algorithm are affected in a synchronous manner by the server and any connected devices using said Dual Direction Data Security.

The main processing unit 14 of the communication device 3 contains an operating software program code for controlling the main operations of the main processing unit 14 and/or the communication device 3. This operation program is present in a plurality of different variations, each variant performing identical operations, but differ in details from one another that do not have influence on the result of the operations as such to be performed by the operation program. Nevertheless, the different variations differ in code length, code arrangement, performance speed, execution time and/or further details that distinguish each version clearly from each other version of the program. A plurality of such different program codes are stored in a program code memory 33.

A GIS database 34 with geographical information, like roads, geographical areas, speed limits combined with locations and the like, is used by the server to allocate driving data to geographical locations or areas for better interpretation of the driving data. A metric computation unit 36 serves for calculating a driving metric, e.g. for every driver, which gives detailed information about the driving behavior of the driver, which influence the insurance premium of the driver or respective vehicle of the driver.

During operation the data retrieval and evaluation system comprising the server 2 and the communication device 3 monitors the status data and operation data of the device to be monitored, like the vehicle 4 in this illustrative example. While in the following, all illustrations refer to the on-board diagnostics 6 of the vehicle 4 and the insurance server 2, every described detail may be used in a broader sense and combined with a general monitoring unit in a monitored device and a remote evaluating server connected to the monitored device via the communication device 3.

The data of the monitored vehicle parameters are generated in the vehicle 4 and monitored with the on-board diagnostics unit 6 which is connected by wire to the communication device 3. The protection unit 10 filters these data according to a predetermined filtering plan deposited in a memory of the protection unit 10. The resulting data are sent to the main processing unit 14 which forwards the data via WiFi or Bluetooth to the mobile device 24. The mobile device 24 runs a software application for processing those data and forwarding them to the server 2 by GSM or internet telecommunication, as appropriate. Further, the mobile device 24 generates data itself which it combines with the monitoring data received from the communication device 3. The combined data are sent to the server 2. Such additional data may be geographical data retrieved by a GPS receiver, speed data, and/or acceleration and deceleration data retrieved by an acceleration sensor included in the mobile device 24.

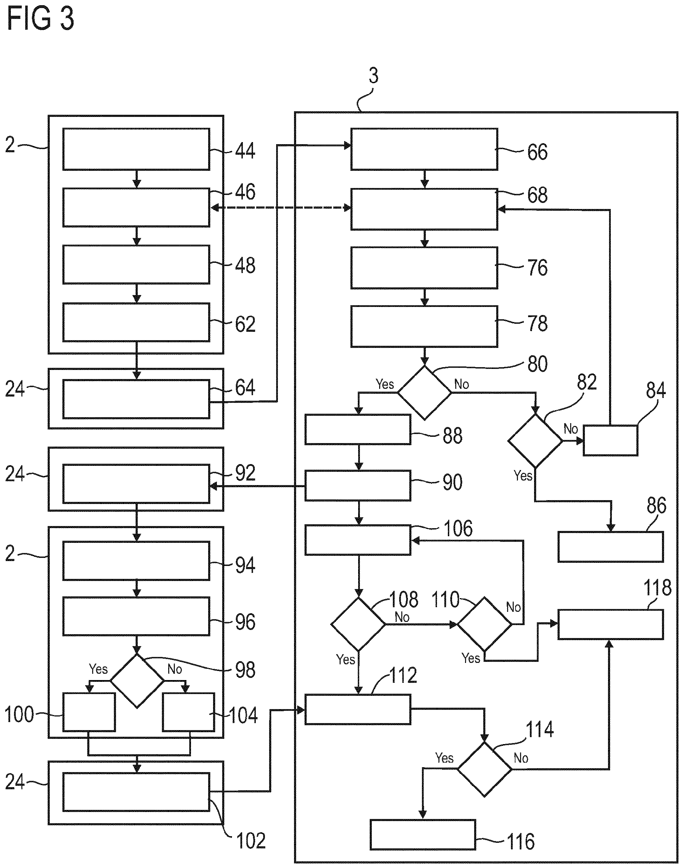

FIG 3 shows processes in the server 2, in the communication device 3, and in the mobile telecommunication device 24. To initiate a software upload from the server 2 to the communication device 3, the server 2 and the communication device 3 each identify the protected data communication to the communication device 3 or server 2 respectively. This identification is initiated by the server 2 and not by the client 6 or communication device 3. For this, the server 2 in step 44 generates or reads out from the code basis 33 software code containing operation functions to be performed by the communication device 3. This software code is the code to be uploaded from the server 2 to the communication device 3.

In step 46 the server 2 generates with its random code generator 30 a random code. The code generator 30 uses the clock time originating from the clock 31 as seed key for deterministic code generation, wherein a predetermined time span is added to the current clock time, like 3 minutes. Accordingly, if the server clock 31 shows 9:07:03 am, the clock time used as seed key is 9:10:03 am. The seed key can be a first kind seed key which determines the output random code alone.

The random code can then be coupled to the software code to be uploaded from the server 2 to the communication device 3, or more general, sent to the communication device 3 together with the software code. If the code arrives unimpaired at the communication device 3, this is evidence that the software code is not modified maliciously. However, this a rather weak protection. A stronger protection is a hidden coupling of the random code to the software code, so that the separation of them code from the software code is difficult and so is then the manipulation of the software code alone. A hidden coupling can be achieved in the following way, for example.

The generated random code comprises a random character string as key for identifying the communication to be protected, and a random character position code, wherein both, the random character string and the character position code lie within a predetermined code span, like 0 to 999,999,999 for the random character string and 0 to 9,999 for the character position code.

In the next step 48 the random character string is inserted into the software code containing operation functions to be performed by the communication device 3, the software code serving as character bed for the random character string. The character string is added into the character bed at the position indicated by the character position code.

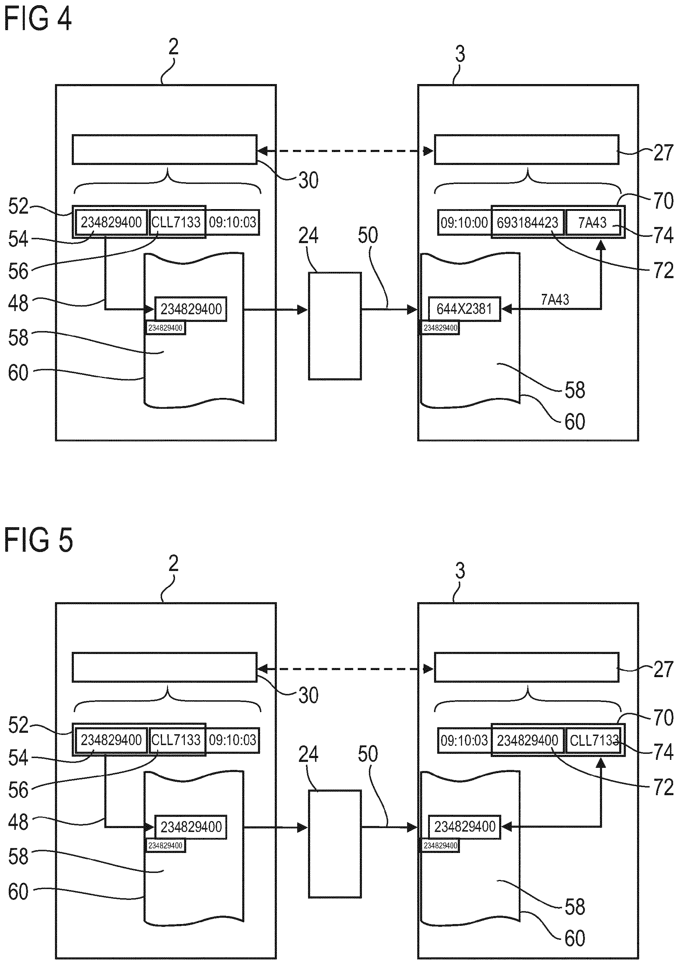

FIG 4 depicts this procedure in more detail. FIG 4 shows the server 2, the communication device 3, and the mobile device 24 in the communication line 50. When a communication line 50 between the communication devices 3, 24 is established, the mobile device 24 sends information to the server 2 informing about the active channel 50. Now, the server random code generator 30 generates the random code 52 which comprises the random string sequence 54 and the random character position code 56. This code was generated at a time point, wherein in the generation process a time lag was added to the time point, like 3 minutes added to the day time 9:07:03 am. The code was added in step 48 into the software code serving as character bed 58, which is then the altered data set 60, i.e. the software code 58 with the character string 54 added at the position indicated by the character position code 56.

A higher security level can be achieved, if the random code 52 comprises a plurality of random string sequences 54 each with a random character position code 56. Each random string sequence 54 is inserted into the character bed 58 at the position indicated by its respective character position code 56.

In the next step 62 the altered data set 60 is transmitted to the mobile device 24. The mobile device 24 transmits the altered data set 60 to the communication device 3 in step 64. The communication device 3 receives the altered data set 60, the receipt triggering the start 66 of a verification process which runs in the main processing unit 14. In this verification process in step 68 the random code generator 27 of the communication unit 3 periodically generates random codes 70 which - identical with the random codes 52 of the server - involve the day time when the code was generated. The generation period is 1 s, for instance, every second a new random code 70 is generated.

Each random code 70 is generated from the same mathematical algorithm as used in the server 2, resulting in the identical random codes 52, 70 when using the same time point in the generation process. As the server random code 52 the device random code 70 comprises as random character string 72 and a random character position code 74.

In step 76 of the process the communication device 3 searches the received altered data set 60 for the random character string 72, which is contained in its own random code 70, at the position indicated by the position code 74. FIG 4 depicts that the device random code was generated at 9:10:00 am, which is a different time point as the server time point for generation of the server random code 52. The device random code 70 differs from the server random code 52, accordingly. In step 78 the communication device 3 compares the character string found in the altered data set 60 at the position indicated by the character position code 74 with its own random character string 72. As depicted in FIG 4 the comparison of step 80 fails, the character strings 72 are not identical.

The time span for repetitive comparisons of character strings is predefined, and preferably is the same time span which was added as time lag to the server clock time for server random code generation. In the given example the time span is 3 minutes and starts with the receipt of the altered data set 60. The communication device 3 checks in step 82 whether the time limit at the end of the time span is over. If this is not the case, after a waiting time 84 a following random code 70 is generated in step 68. Preferably the waiting time 84 is consistent with the interval with which the random codes 70 are generated, so each generated device random code 70 is matched with the server random code 52 or the altered data set 60, respectively.

This procedure is repeated until either if a match occurs or the time limit is passed. In the latter case step 82 branches to step 86 in which the altered data set 60 is discarded and hence deleted from the memory of the communication device 3. The update of the software failed in this case. This failure is reported from the communication device 3 to the server 2.

There are several possibilities for a software update failure. If the server 2 sends an altered data set 60 to the communication device 3 and does not receive a response, the communication line 50 is blocked in one or the other direction. If a response is received but negative, the reason could be a too long delay in the communication line 50 for sending the altered data set 60 to the communication device, so the time limit for comparison is over, i.e. the data set 60 arrives at a time which is later than the time point used for generation of the server random code 52. By retrying the update this error can be corrected.

Another reason could be a wrong clock time in the communication device 3, based on a power cut at some time, for example. Then the communication device 3 needs a reset in clock time which could be done by a person handling with the device 3, like the vehicle holder. Eventually, the communication device 3 needs a new battery to bridge any future power cut. If that does not lead to a later match of random codes 52, 70, the software might be corrupted and needs a reset. In any case, the server 2 knows that the data communication with the communication device 3 is not protected, data from the communication device 3 are being handled with the respective precaution by the server 2.

As is shown in FIG 5 at the device clock time, which is 9:10:03 am in the example shown, the match is successful. The random codes 52, 70 are identical, and the character string 72 is searched at position 74, strings 54, 72 and positions 56, 74 in the character bed 58 being identical. In case of the random codes 52, 70 each having a plurality of strings 54, 72, the communication device 3 compares at each character position code 74 its respective random character string 72 with the character string 54 found in the altered data set 60 at the respective position indicated by the character position code 74. The match is confirmed in step 80, and the character string 72 is erased in step 88 from the character bed 58 or altered data set 60 respectively which then is the correct software code for the device update. Accordingly, the software modification with the correct software code can take place.

The communication device 3, however, is programmed for a supplemental protection routine which needs to be positive before performing the software modification. This supplemental protection routine includes the steps of confirmation of the clock time which was used for the generation of the successful random code 70, and eventually the linked character string 72 and character position code 74. These data are sent to the mobile device 24 in step 90 which forwards the data to the server 2 in step 92.

The server 2 receives at least the clock time in step 94 and compares it with its own clock time for random generation in step 96 and checks the match in step 98. If the check is successful, the clock times are identical, the server 2 sends a confirmation 100 via smart phone transfer 102 to the communication device 3. If the check fails, the clock times are not identical, the server 2 sends a warning 104 via smart phone transfer 102 to the communication device 3. Meanwhile the communication device 3 waits for the reply in the loop waiting 106, checking inbox 108 and checking time limit for receiving the reply 110. If the reply arrives in step 112, the reply is checked for contents 114, and if the reply is positive, hence a confirmation, the data set or modified software is applied 116 to the work storage of the communication device 3. If the reply contains the warning, the data set 58 is discarded and erased 118 from the memory in use for caching the new software before applying to the work storage. The vehicle driver is optionally be informed, like with a message on his smart phone display, that the system is compromised somewhere, and the driver is prompted to disconnect the dongle 3 from the vehicle 4.

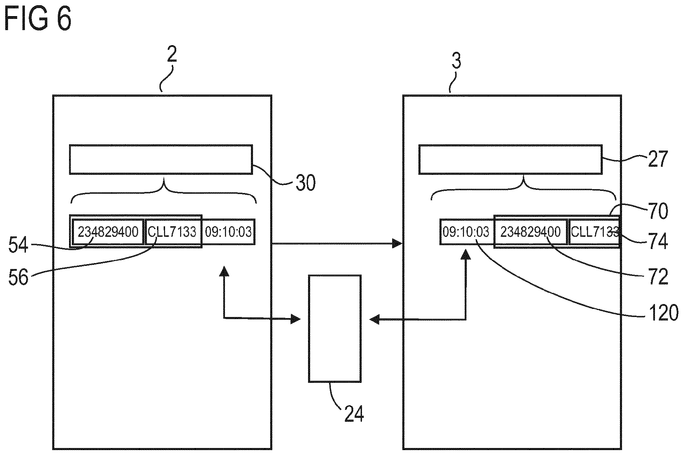

The supplemental protection routine is depicted in a short outline in FIG 6. The clock time 120 is sent via smart phone 24 to the server 2, compared with the clock time including the added time lag for code generation, and a confirmation or warning is sent to the communication device 3, again via smart phone 24.

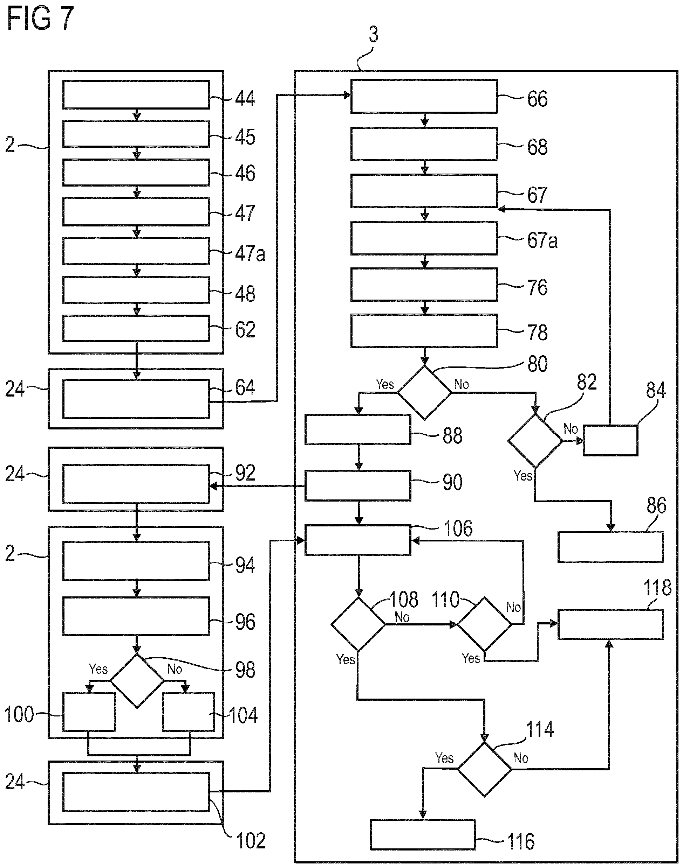

A similar process for protecting the communication device 3 against infection of malware or other unwanted modification of its software is shown in FIG 7. The flow diagram of FIG 7 is similar to the one in FIG 3, and identical steps are marked with the same reference numeral, wherein the flow diagram of FIG 7 contains a few additional steps inserted in the method.

The server 2 in step 44 generates or reads out software code. This software code is the code to be sent to the communication device 3. In new step 45 the server 2 determines a code parameter, like the code length, for example. Now, as in FIG 3, in step 46 the server 2 generates with its random code generator 30 a random code. The code generator 30 uses the clock time as seed key for code generation, wherein a predetermined time span is added to the current clock time, like 3 minutes. The generated random code comprises a random character string as key for identifying the communication to be protected, and a random character position code, wherein both, the random character string and the character position code lie within a predetermined code span, like 0 to 999,999,999 for the random character string and 0 to 9,999 for the character position code.

In the second further step 47 a second random process is used which modifies the random code. For this a second random code generator is used. Here the determined length of the software code or file serves as second seed key for the modifying process. The seed key can be used as first kind seed key for generation of a second random code which is then used to modify the first random code of the first random process. Or the first random code is used as input and first kind seed key and the file length is used as second kind seed key for controlling the second randomization process. Both methods are equivalent in this specific case.

The result of this second randomization process is a modified random code which again contains a random character string and a character position code, or a plurality of random character strings each with a related character position code. Alternatively, no new character position codes are produced, but the character position codes from the first randomization process are used and linked to each respective random character string of the second randomization process. This alternative is depicted in step 47a of FIG 7.

Now, in step 48 the random character string(s) is/are inserted into the software code, which might be software containing operation functions to be performed by the communication device 3, the software code serving as character bed for the random character string(s) which are added into the character bed at the positions indicated by the character position codes.

When the modified random code arrives at the communication device 3 in step 66, it triggers the start of a verification process which runs in the main processing unit 14. As in FIG 3, in step 68 the random code generator 27 of the communication unit 3 periodically generates random codes 70 which - identical with the random codes 52 of the server - involve the day time when the code was generated as seed key. These random codes 70 indicate the positions of the inserted second random codes, but do not reflect their contents, since the inserted second random codes have been gone through the second random process whereas the random codes 70 have not and are different, therefore.

To copy the second random process performed by the server 2, in step 67 the communication device removes the inserted second random codes from the software code, or - if the code length of the inserted second random codes is known - subtracts this code length from the code length of the received software code.

Now, the obtained reduced length of the software code is used as seed key for the same second randomization process as was performed in the server 2, the communication device 3 containing the same random generator than the server 2 for performing this second random process. This second random process supplies the modified random codes in step 67a, which are then compared in step 78 with the inserted second random codes removed from the software or still in place at the positions indicated by the character position codes. The rest of the method steps is identical as described with regard to FIG 3.

By this method of two interleaved randomization processes the code length of the software code is used as seed key as well, enabling a verification of the original code length of the software to be used by the communication device 3. This method prevents that a malware code is simply added at the end of the software and not detected by the verification process. Such added code will modify the code length of the software and will lead to a modified second seed key, which then will result in a different second random code. In consequence, the comparison of step 78 will fail and the software will be deleted in step 86.

It may happen, that the communication device 3 is separated from an external power supply, for example if it is separated from the vehicle 4. This could impair random code generation, since a clock 32 would be without power and time measurement would be terminated. This would interfere with the random code comparison procedure since the time points for generation of random codes would change and the random code generators 27, 30 would not be synchronized anymore. To prevent this disadvantage, the communication device 3 is equipped with a battery or capacitor which serves as internal power supply 130 in case the external power supply is not connected. Preferably the internal power supply 130 is located in the protection unit 10.

As described above, the communication device 3 is protected by several layers 38, 40, 42 of protection. These protection layers can be applied to the mobile device 24 as well, either in combination of two or three layers or alone. For example, the random code comparison procedure as described above for the communication device can be applied to the mobile device 24 as well or alternatively. The device random code will then be generated in the communication device 3, preferably in the safe zone 11, and sent to the mobile device 24, or the mobile device 24 asks the communication device 3 for passing over the device random codes.

The main processing unit 18 of the communication device 4 contains an operating software program code for controlling the main operations of the main processing unit 18 and/or the communication device 4. In the server 2 this operation program is present in a plurality of different variations, each variant performing identical operations, but differ in details from one another that do not have influence on the result of the operations as such to be performed by the operation program. Nevertheless, the different variations differ in code length, code arrangement, performance speed, execution time and/or further details that distinguish each version clearly from each other version of the program. A plurality of such different program codes are stored in a program code memory of the server 2.

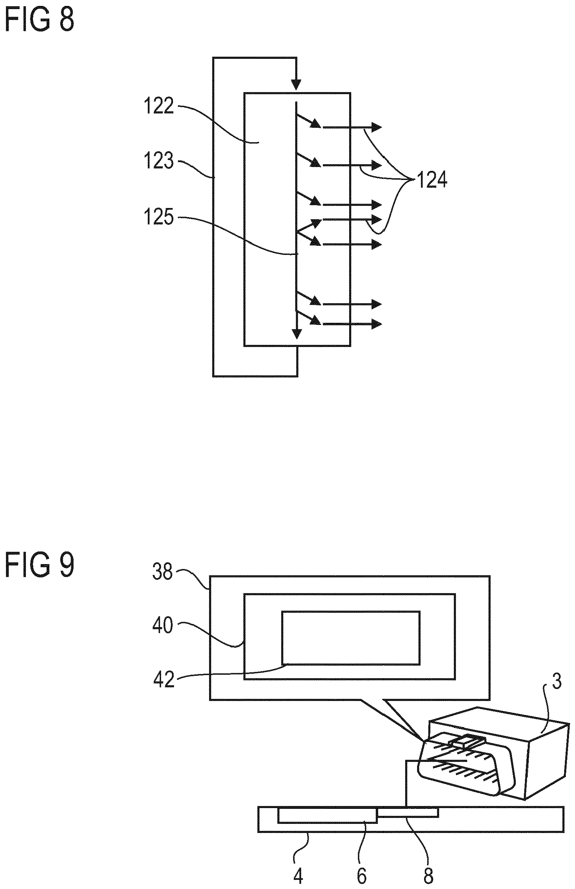

The main processing unit 14 is connected to an application memory 37 in which the operation program of the communication unit 3 is stored. This program is loaded into the main processing unit 14 and executed by which the sending of data to a remote server is conducted. This program is structured as code loop routine running in a continuous loop. A scheme of such program is depicted in FIG 8.

FIG 8 shows an operation program 122 of the communication device 3 structured as a code loop routine running in a continuous loop 123. The program has several outputs 124 depicted only schematically and branching dependent from several input parameters. The loop 123 lets the program restart as soon as it comes to a finishing point. Each branch at its end reenters the loop 123 into a central process 125 line from which the different functions branch.

This operation program governs all functions performed by the main processing unit 14 and thus the communication device 3, at least all main functions used for forwarding data generated in the on-board diagnostics unit 6 or elsewhere in the vehicle 4 to the server 2. This is different with code executed inside the safe zone 11 or the protection unit 10. This code may or may not be structured in a loop and may be used for secure generation of verification code to prevent the application of malicious code within the communication unit 3. However, this code generation is not seen as main function of the communication device, especially with regard to filtering and forwarding data to the server 2.

To prevent a continuous application of malicious code by the communication unit 3 two measures are taken. First, the program code 122 of the main processing unit 14 is modified in a predetermined time scheme. This code modification involves a modification of the operation code 122 of the communication device 3 without modifying the outputs 124 of it. The software modification comprises changes in the software code that do not have an influence on the outputs 124 as such, but can differ the output time. Nevertheless, the modification is visible from the code as such, be it the code length as a matter of characters and/or code lines, or the duration time of execution by inserting a predetermined execution delay in some place, or additional loop diversions, that do not affect computations or functionality. In brief, the code loop is developed with multiple versions that are functionally identical but each code base/loop is structured differently.

Several versions of the operation software code 122 for the communication device 3 are stored in a code base memory of the server 2. The code 122 is modified by sending an update, or modification respectively, from the server 2 to the communication device 3. The code modification can be performed periodically. However, a modification at random time points aggravates the comprehensibility of the modification initiation and hence the disturbance of the process by an unauthorized person. An unauthorized person does not know beforehand what code or code structure will be present and what code base is needed to have his script packed into it. The server 2, however does keep a record of which current code version is installed and running in each individual processing unit 14.

As second measure a property of the operation software code 122 is checked and feedback is given about the property to the server 2. For that, the communication device 3, preferably with the code loop routine 122, determines a property of the operation software code 122. There is a plurality of properties which characterizes the operation software code 122 and can thus be used for identifying the software version either alone or in arbitrary combination with one or more other properties. If the software version is the expected one, or more general: If the inspected property is within an predefined bandwidth, the communication with the server 2, which is governed by the operation software code 122, is identified as protected.

This evaluation of a code loops inspected properties is facilitated by using test cases for which the inspected properties are prior known from development. Server 2 periodically initiates such inspections using such loop evaluation values test cases. The evaluation of LEV test cases can be absolute or statistical if the execution device can impart run-time anomalies.

One property is the run time of the operation software code 122 between two predefined program points, wherein the two points may be identical if the program is structured in a code loop. Since a software code usually has branches and/or operations depending on the input parameter, and hence the run time may be dependent on the input parameter, an advantageous parameter is the average run time, wherein the parameter is generated over a predefined number of run times. Further, the development of the run time or run time average over the time can be used as further parameter, preferably as running parameter. A distinct change is an indicator for a modification of the software.

Another property is the variance of run times over a number of run times measured, which is not only an indicator for the variance of input parameters but as well an indicator for a modification of the software. Further, the number of code lines and/or the number of code characters can be used as property.

After measurement the property is checked, preferably by the server 2. The server 2 compares the values versus values computed for the current software which should be in the communication device 3 according to data in the server 2. An expected property is an indicator for the correct or expected software in the communication device 4 and hence for correct data transfer to the server 2. Statistically significant deviation is a flag of possible hacking and hence incorrect data transfer. The received data can then be treated as less reliable or insecure or may be discarded in general. Further, repair software can be sent to the communication device 3, like a special update, to modify a property of the communication device, namely the corrupted data output to the server 2. If that does not end the code loop property deficiency the order for reset can be sent to the communication device 3 which is reset by this measure. If the reset cannot be performed for whatever reason by the device 3 itself, the reset order can be sent to a user of the device 3 to initiate the reset to default mode, like by activating a respective unit, a reset switch for instance. In the last consequence a new communication device 3 can be sent to the user by the operator of the server 2 or a commissioned party.

This described protection of the communication device 3 can be applied to the mobile device 24 as well. For example, the application running on the mobile device 24 for handling the communication between communication device 3 and server 2 can then be programmed as code loop, as described above. The code loop properties can be sent to the server 2 for evaluation. And the code loop can be updated or modified respectively as described above. Further protection can be achieved, if the protection unit 10 uses a code loop structured operation program for performing at least its main features. Properties of the code loop can be sent to the server 2 for evaluation. Of course, an update procedure or change of program initiated from the server 2 is not possible due to the strict one-way communication 13. But if a plurality of identical acting program codes are available inside the safe zone, like by installation at the manufacturer, the program codes may be altered as described above. The protection unit 10 then sends to the server 2 not only the code loop property but the version of the currently used code.

To protect the communication between server 2 and communication device 3, the communication device 3 is protected by several protection layers. FIG 9 gives a schematic overview over a layered protection of the communication device 3. Each layer 38, 40, 42 can be used individually and without the other layers 38, 40, 42, or two or three layers 38, 40, 42 can be combined in an arbitrary manner.

In a first protection layer 38, the modification of the operation program code of the main processing unit 14 is protected by blocking the use of new program code by the result of comparison of two random codes. In the second layer 40, the protection of the program code is performed by frequent code modification, preventing an unauthorized person from having complete knowledge of the program code. Additionally or alternatively the second lay protection can be the check for one or more program parameters, like the average and variance of execution time, and detect malicious code by this. The third layer 42 protects the operation of the communication device 3 by uncovering unauthorized program code modification, providing evidence of an attack of the communication device 3, so that the device 3 can be reset, shut down or repaired to prevent the dilution of valuable information by faulty information. The three protection layers 38, 40, 42 are described in detail in the following.

The protection of layer 38 works with random sequence/code processing and can be illustrated with the flow diagram of FIG 3. Any update or other modification of the software of the communication device 3 has to be performed with great care to prevent the upload of unwanted modified code to the communication device 3. Therefore, before uploading software code, the protected data communication is checked, and only if the protected data communication is identified, the modified data code will be uploaded to the communication device 3.

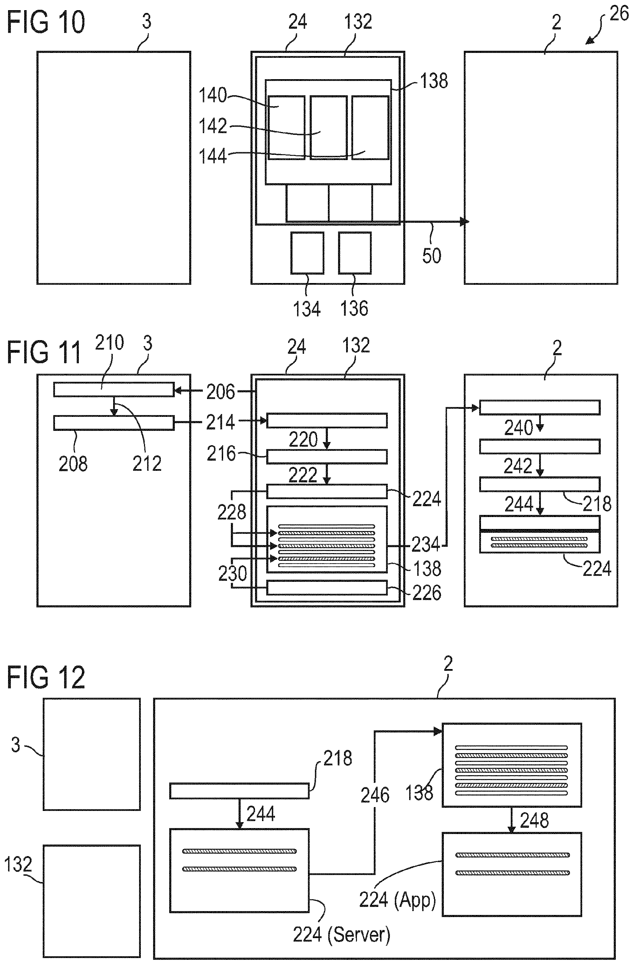

A further measure to protect the communication between the communication system 26 and the server 2 is the identification of manipulated data sent from the communication system 26 to the server 2. Possible options of such identifications are illustrated in FIGs 10 to 16.

FIG 10 shows the communication system 26 with the communication device 3 and the mobile device 24, and the server 2. The mobile device 24 comprises an application 132, which is software running on the device 24, and a GPS unit 134. The GPS unit 134 determines the current position of the mobile device 24 and stores the position data related to those positions and the time data related to each position in a file. Further, the GPS unit 134 generates speed data from the position data and the related time data, so that for each position a speed value is present representing the driving speed of the vehicle 4 at the respective position.

The mobile device 24 further comprises a trend line unit 136 which calculates travel trend lines from the position data. For calculating the travel trend lines, the location data, as the position of the vehicle 4, are preferably camouflaged by a position error, especially a random position error. For this, to each location point a random error in the area up to 50 m around the location is added to the respective two dimensional coordinates. Each trend line is calculated from position coordinates, especially from camouflaged position coordinates. The travel trend line represent a travel trend. The trend lines can be straight direction trend lines separated by a predefined travel parameter of the vehicle, like direction change of the travelling route. Travel segments instead of exact location data do not mirror the actual route taken by a vehicle but represent directional tendencies, preferably not highly resolved enough to reconstruct a route but sufficient to relate them to areas of special interest, like geographic area, specifically actuarial areas. Trend lines may be 1^{st} order polynomial fits to positional coordinates, preferably to positional coordinates camouflaged by coordinate errors. The travel trend lines which can be calculated via a series of least squares error first order polynomial fit of the general form, (Y = a + bX), or higher order polynomial, for example, although other line and trend fitting methods can be used. When a plurality of camouflaged location points is present, the current trend line is calculated in the mobile device 24. When the route driven changes in direction the current trend line is terminated and a new trend line is calculated. The transition from one trend line to the next following trend line can be determined by a nominally monotonic decrease in b below a predefined threshold. For instance, if the least squares are increasing over two, three or more successive points this is considered as indicator to end the present trend line and start a new one. The actual movement of the vehicle is thus transformed via coordinate camouflaging and least squares fitting into a series of trend lines, each trend line being defined by a start coordinate point and a termination coordinate point. The start/termination coordinate point can be the cross point of two trend lines or one of the positional coordinates or coordinate points in other words. The respective coordinate point can be the point where the second, third or following successive decrease of b happened, this point belonging to both trend lines.

The trend lines, the exact location data, the speed data and eventually further data, like acceleration data, are packed into a data capsule 138 or data package by the application 132 and sent to the server 2 as shown in FIG 10. To preserve privacy the location data 140, the speed data 142 and the trend lines 144 are stored in separate files. The order of the location data 140 and/or the speed data 142 in each file are randomized, so that an allocation of the speed data 142 to the location data 140 and in general the allocation of the speed data 142 to an exact location is made impossible. Each file is precisely defined in data arrangement and length or maximum length of the file.

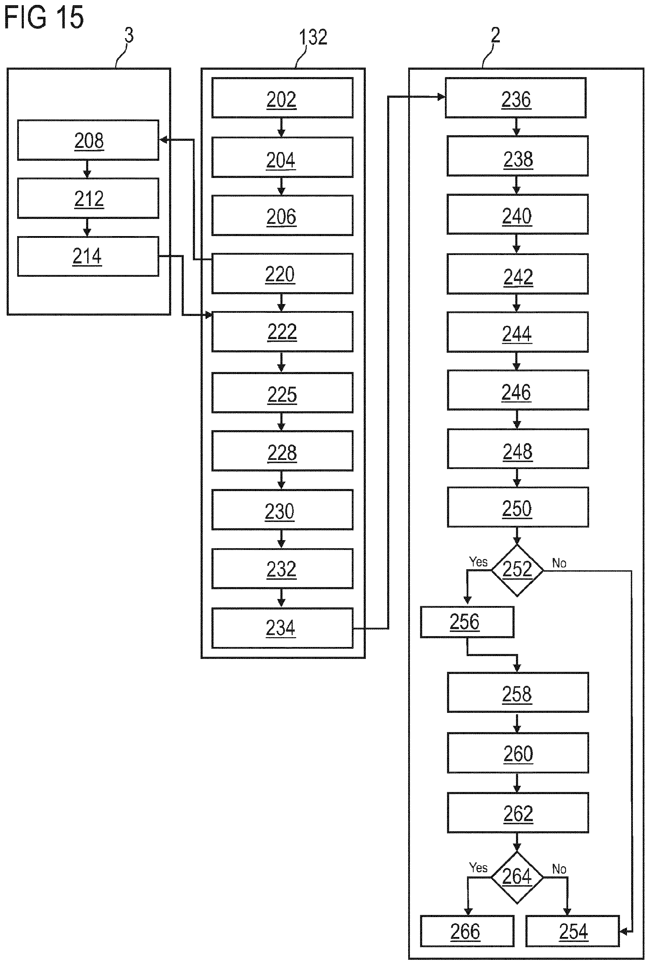

To protect the communication line 50 between the mobile device 24 and the server 2 the data capsule 138 or data package is supplied with security code which allows the identification of a modification of the data capsule 138 after its generation. The generation of this security code and its distribution in the data capsule 138 is depicted in FIG 11. FIG 15 shows a flow diagram of the security code process.

FIG 11 shows the communication device 3, the mobile device 24 with the software application 132, and the server 2. During the journey of the vehicle 4 driving data, like location data, speed data, and travel trend lines are collected. These data are assembled into the data capsule 138 as depicted in step 202 of FIG 15 One data capsule 138 may contain all data of one trend line, of a predefined travel time span, of the whole journey or any other travel unit. When this travel unit is finished the entirety of the travel unit data is generated and stored in the data capsule 138, and the data capsule 138 is supplied with a security code.

For this, in step 204 the application 132 calculates a hash value or any other parameter check value of the data capsule 138. This value refers to the data capsule 138 without the security code added into it.

To finish the generation of a data capsule 138, the application 132 in step 206 requests the communication device 3 to issue a random code 208 which then is generated by a random code generator 210 of the communication device. This random code generation may or may not be independent of the time of the day, so the random code generator 210 may be the random code generator 27 of the device 3 or be identical to the random code generator 27 or be a supplemental and different unit. The random code 208 may be a true random code made by using a physical parameter, for instance, or be generated identical as with random code generator 27. The random code generator 210 generates the random code 208 in step 212 and transmits it in step 214 to the mobile device 24.

The mobile device 24 as well as the server 2 both are furnished with a random code generator 216, 218which are identical or at least similar to one another and comprises the same mathematical algorithm to generate random codes. Both random code generators 216, 218 supply identical random codes from identical inputs. The random code generator 218 may be identical to the random code generator 30 of the server 2 or be a supplemental and different unit.

In step 220 the application 132 feeds the random code 208 to the random code generator 216 as first kind seed key, in response, the random code generator 216 outputs in step 222 synthetic data 224 as identification data comprising:
- one or a plurality of random numbers or random synthetic travel data,
- the same number (quantity) of random position codes and
- a supplemental position code for the parameter check value 226.

In the next step 228 the application 132 inserts the synthetic travel data 224 into the respective files of the data package 138 each at the position in the file indicated by the respective position code. Each unit of synthetic travel data together with its position code forms a set of synthetic travel data. In this embodiment the random set number is 10, so 10 sets of synthetic travel data are generated and placed in 10 places throughout the files of the data capsule 138. When this procedure is repeated with a successive data capsule 138 later the random number will most probably be different, and 25 sets are generated, for instance, and distributed in the files of this later data capsule.

In step 230 the application 132 adds the parameter check value 226 to one of the files according a value random position code generated by the random code generator 216. In step 232 the application 132 adds the random code 208 to the data package 138, like into one of the files or at the end of the package. The generation of the data package 138 is now finished, and it is sent in step 234 to the server 2 for evaluation.

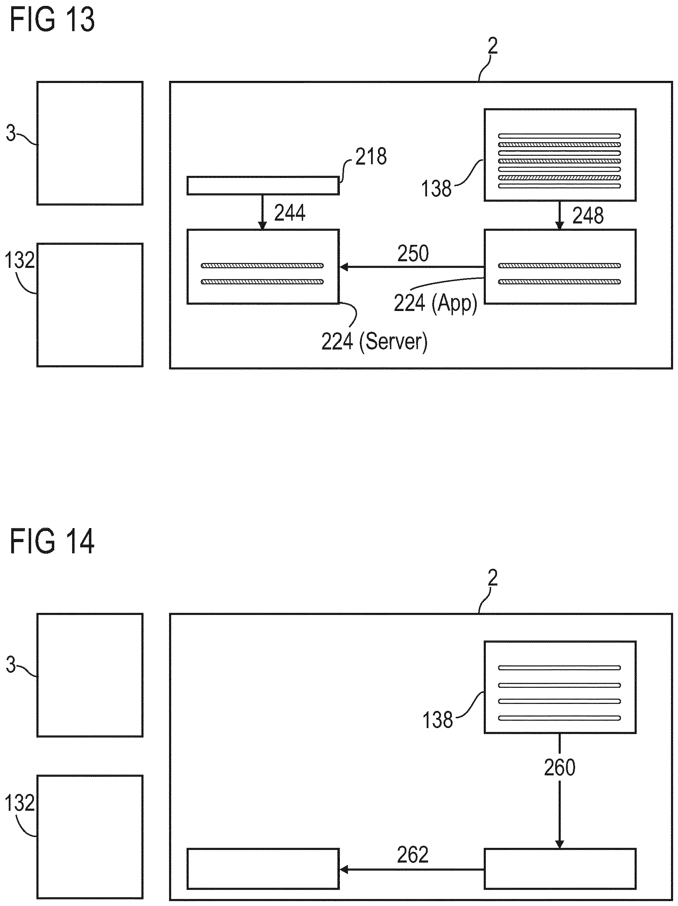

The server 2 receives the data capsule 138 in step 236 and performs a number of checks with the data capsule 138. The first check in step 238 is the check of the predefined data structure of the files in the data capsule 138. Then, in step 240, the server 2 extracts the device random code 208 from the data capsule 138 and feeds it to its own random code generator 218 in step 242. The random code generator 218 in step 244 generates the same synthetic data 224 as was generated by the random code generator 216 of the application 132 as is depicted in FIG 13 as well. The server 2 then and performs the following further checks.

First, in step 246 the server 2 applies the position information of the synthetic travel data 224 to the data capsule 138 and locates synthetic travel data 224 at the random number of position codes in the file and extracts the synthetic travel data 224 from the file in step 248, as is depicted in FIG 13 as well. Then the server 2 compares in step 250 the extracted synthetic travel data 224 (App) with the self-generated synthetic travel data 224 (Server).

If the match 252 is negative for only one set of synthetic travel data 224 the data capsule 138 is deleted in step 254. If the match 252 is positive and for each set of synthetic travel data 224 the two fronting synthetic travel data 224 are identical, in step 256 the position values are extracted from the data capsule 138 and the all synthetic travel data 224 is deleted from the data capsule 138 in step 258. Further, the parameter check value 226 is extracted from its respective position which is generated by the random code generator 218, and the parameter check value 226 as well as the random code 208 is deleted from the data capsule 138.

Now, since the data capsule 138 is free of security data the server 2 calculates in step 260 the hash value or other parameter check value 226 (Server) of the data capsule 138 and compares in step 262 the so calculated value with the extracted check value 226 (App) coming from the communication device 3. This is shown in FIG 14 and FIG 15. If this match 264 fails the data capsule 138 is deleted in step 254. If the values are identical the data of the data capsule 138 are released in step 266 for evaluation of the driving data.

Depending on the driving data stored in the files of the data capsule 138 it could happen that the synthetic travel data 224 somehow shine out of the real travel data and are easy to find, therefore. Found security data may be manipulated as well, so that the identification process is ruined. To prevent the discovery of synthetic travel data the step 222 of generation of those synthetic travel data can be modified by using real travel data in the vicinity of each synthetic travel data. For example, the real driving data directly before and directly behind the position of one set of synthetic travel data can be used to create or modify the synthetic travel data. If the generated synthetic travel data comprise the directive that the sum of real driving data directly before and directly behind the indicated position is to be halved, the synthetic travel data is the average of the two surrounding values, and is well hidden in between the two values. In another example the generated synthetic travel data comprise the directive that a supplemental positive or negative value is added to the average of the neighboring data, the value can be random value generated by the random code generator 216.

In a further embodiment of the invention conspicuous and/or unfavorable driving data are generated as synthetic travel data and placed as identification data within the real driving data. Such unfavorable data may be high speed values, for instance, preferably a successive set of high speed values are inserted within the real driving data, so that a racing section of the journey is simulated. In case of a data manipulation such data is preferred for elimination, resulting in the elimination or manipulation of identification data. This manipulation will very reliably be detected by the server 2.

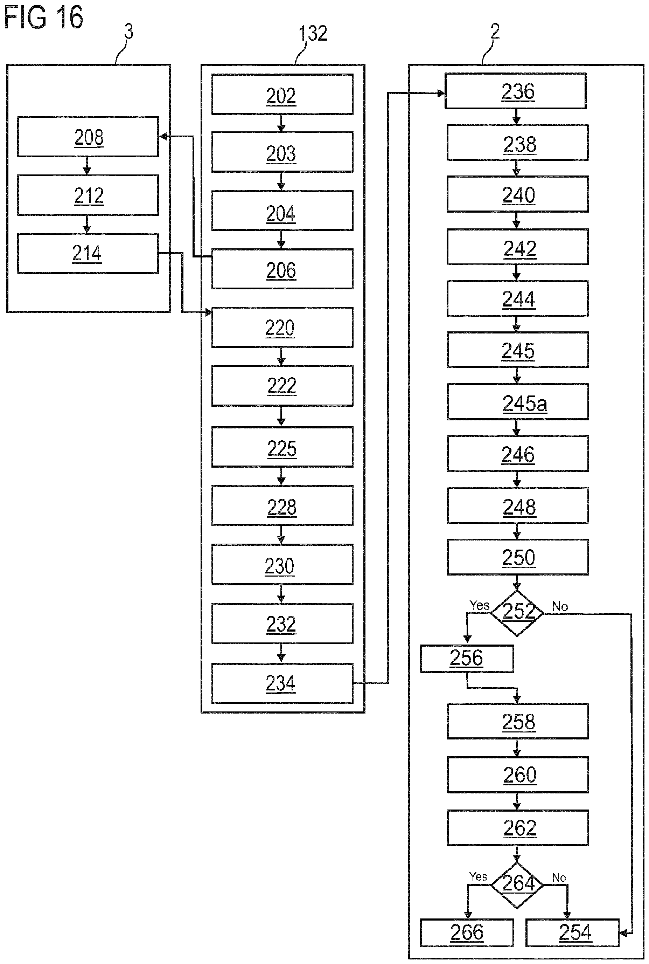

In an alternative process depicted in FIG 16 the security against data manipulation can be increased. The flow diagram of FIG 16 is similar to the one in FIG 15, and identical steps are marked with the same reference numeral, wherein the flow diagram of FIG 16 contains a few additional steps inserted in the method.

During the journey of the vehicle 4 location data and speed data are collected, and travel trend lines are generated. These data are assembled into the data capsule 138 as depicted in step 202 of FIG 16. When this travel unit is finished the entirety of the travel unit data is generated and put into the data capsule 138. In an added step 203 the size of the data capsule 138, like the code length or the numbers of lines or entries of the data capsule 138 is determined. Next, in step 204 the application 132 calculates a hash value or any other parameter check value of the data capsule 138. This value refers to the data capsule 138 without a security code added into it.

Then, in step 206 a random code 208 is requested, generated by the random code generator 210 of the communication device 3 and sent to the application 132 in step 214. In step 220 the application 132 feeds the random code 208 to the random code generator 216 as first kind seed key, in response in step 222, the random code generator 216 outputs synthetic data 224 as identification data comprising:
one or a plurality of random numbers or random synthetic travel data,
the same number (quantity) of random position codes and
a supplemental position code for the parameter check value 226.

A second randomization step performed in the mobile device 24 is introduced in new step 225. The size of the data capsule 138 serves as seed key to modify the random numbers or random synthetic travel data obtained in the first mobile device random process. As described along with step 47 in FIG 9 the seed key can be a first or second kind seed key. The modified the random numbers or random synthetic travel data are inserted into the respective files of the data package 138 each at the position in the file indicated by the respective position code.

The resolution of this second random process is performed by step 245 in the server 2: The modified the random numbers or random synthetic travel data are removed from the data bed, or - in case their data length is known - their data length is subtracted from the data size of the received data capsule 138. The resulting data size or length is used as seed key for the second randomization process in the server 2 in step 145a, which generates the modified the random numbers or modified random synthetic travel data. These data are compared with the removed data or data at the indicated positions in step 250.

As described with FIG 9, the use of the data capsule size allows to detect a size modification and thus the detection of unauthorized code added at the end of the data capsule 138.

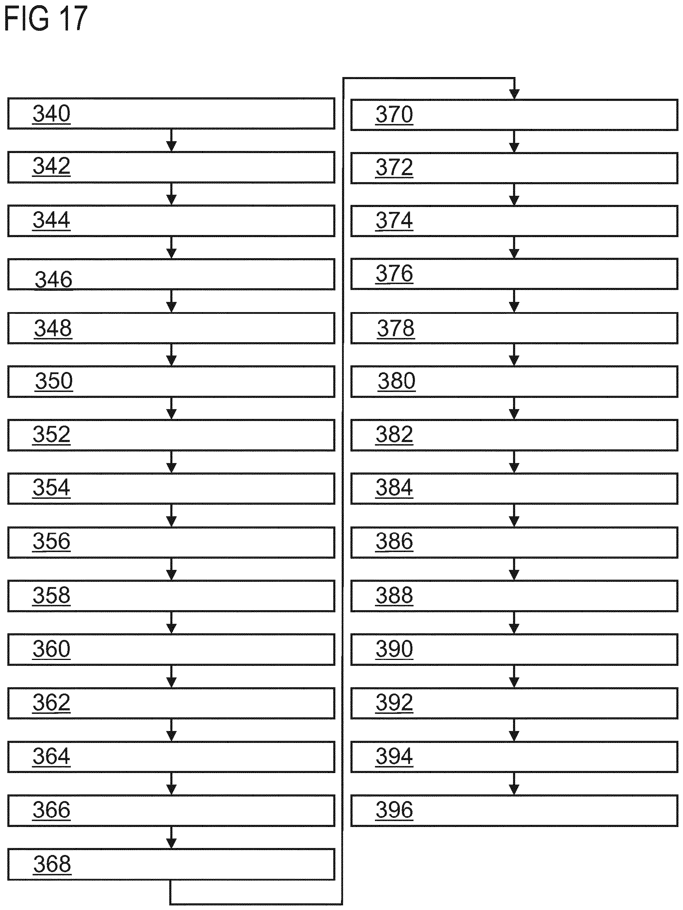

FIG 17 shows a simplified flow chart of a process to amend software of the communication device 4. For this a data set with new software or data to be inserted into the safe zone processor unit 10 or its memory is generated by the server 2 and sent to the communication device 3, sometimes for better understanding referred to as a dongle, for example and without restriction. Since the data set could be manipulated on its way from the server 2 to the communication device 3, a data set check is performed by the communication device 3 to examine the data set for unwanted manipulations. For this an encryption process is performed which is described in the following.

In the safe zone 11 the random code generator 27 generates a random code in step 340. The random code may be a true random code made by using a physical parameter as seed key, for instance, or be generated in a deterministic manner. If the generation is deterministic the random code generation is non-reversible and hence non-breakable.

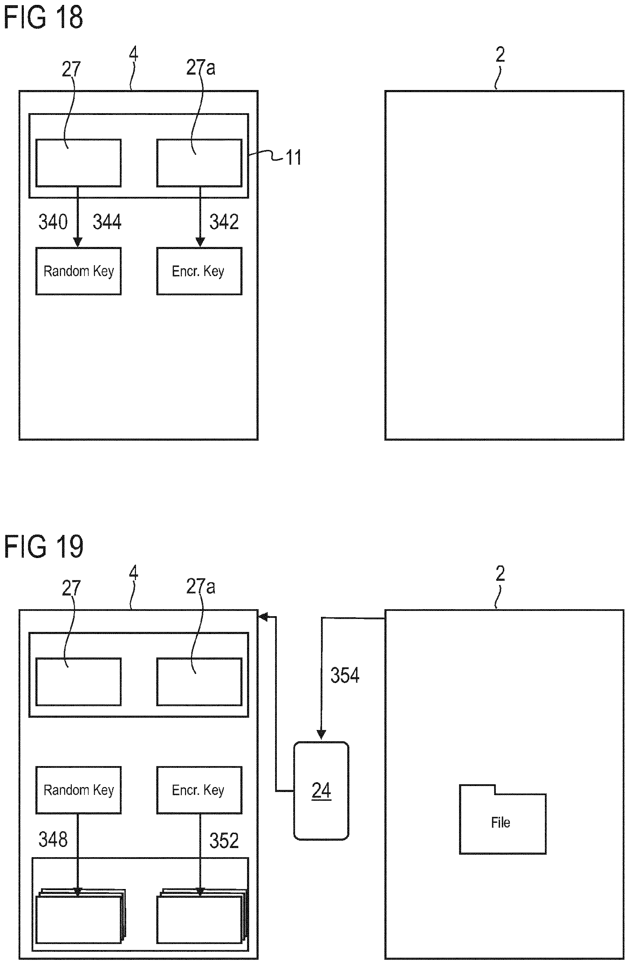

FIG 18 depicts this procedure in more detail. FIG 18 shows the server 2 and the communication device 3. In the communication device 3 the random code in step 342 is fed as seed key to the encryption code generator 27 which generates the encryption code. The ID of the safe zone 11 or in general of the fixed communication device 3 is used as second seed key in the generation of the encryption code. The ID is stored in a memory of the safe zone processor unit 13 and recalled by the safe zone processor for feeding into the encryption code generator 27.

Next, in step 344, the random code is forwarded to the main processing unit 18 of the communication device 3, and is stored in a memory of the communication device 3. The encryption code, however, is kept in the safe zone 11 and is not identifiable from the outside.

This process of random code generation and encryption code generation is repeated periodically, as depicted in step 346 of FIG 17. Each random code is transferred to the main processing unit 14 of the communication device 3 which overwrites the previous random code with the current one in step 348 of FIG 17 and FIG 19. Each encryption code is stored in a memory of the safe zone 11 and is transferred to the outside of the safe zone 11 in step 350 only after the expiration of a predetermined waiting time period, preferably over 1 minute, like 5 minutes, for example. Each encryption code arriving at the outside overwrites the previous one in step 352, analogous to the random code storing process, with the difference that no current encryption code is present at the outside of the safe zone 11. This is the case if the waiting time for transferring the encryption code outside the safe zone 11 is at least as long as the repeating interval of the generation of the random code.

From time to time there is the need for software update of the dongle software or smart phone software, or data in the communicate system 26 need to be brought up to date. In this case data coming from the server 2 need to be incorporated into one of the communication devices 3, 24 of the communication system 26. To prevent a channeling in of malicious software or other data, the respective data set from the server 2 is provided with a safety code which makes apparent any manipulation of the data set. The safety code is present at both sides of the communication line between server 2 and communication device 3, which involves the problem that the safety code as such should be either protected against manipulation or constructed in such way that a manipulation becomes apparent, so that the data set protected by the manipulated data set can be discarded.

This problem can be solved with a safety code in form of the encryption code including one or more of the following four characteristics. First, the encryption code is generated on both sides, in the server 2 and the communication device 3, in a safe zone 11. For this the server 2 is protected in an appropriate way so that its safe zone 11 is safe against manipulations. Second, the encryption code is on both sides generated from an identical seed key which is a random key to ensure that the encryption key is not known before its generation or leaving the safe zone respectively. Third, the seed key is generated in a safe zone 11 and thus protected against manipulation, and is then transmitted to the other side. Fourth, the identical encryption code is used for modifying the data set on both sides, like encryption and decryption, adding and comparing protection information, like a pseudo code, or the like.

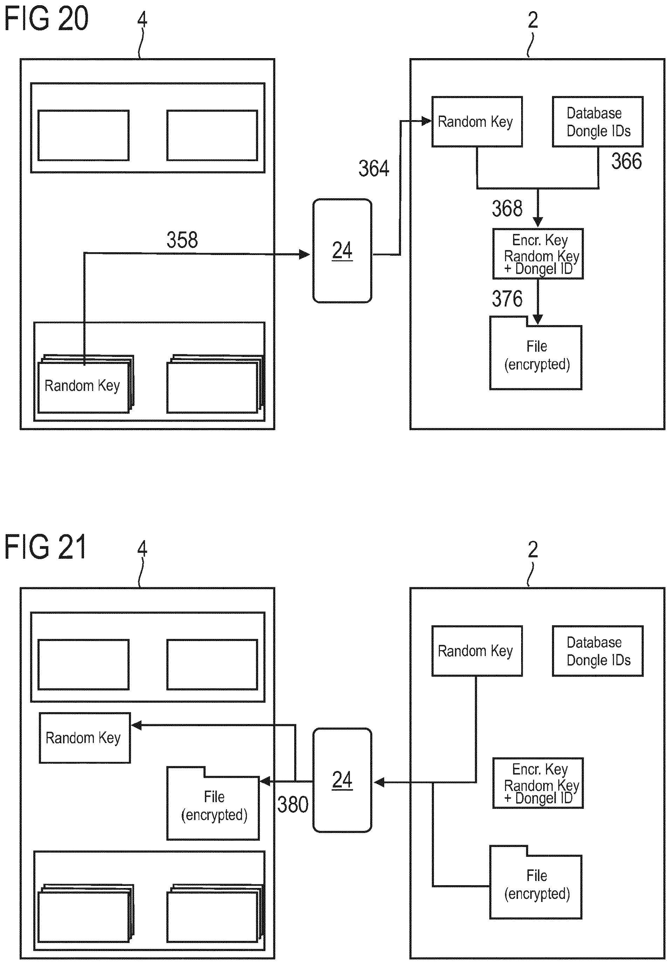

In case of a required data set transfer from the server 2 to the communication system 26, the server 2 opens a communication channel to the communication system 26 in step 354. If the channel is established, the server 2 sends a request to the dongle 3 in step 356 to send the current random code stored in the memory of the main processor 18. The dongle 3 transmits the random code to the server 2 in step 358 of FIG 17 and FIG 20 and stores this random code permanently in step 360 of FIG 17 and FIG 21 so that it is safe against overwriting.

Now the process branches in activities in the dongle 3 and activities in the server 2. The dongle 3 waits in step 362 for the arrival of the encryption code which is assigned to the permanently stored random code. Since this could take several minutes, it may happen that before the arrival of the encryption code the encrypted data set from the server 2 arrives at the dongle 3. The dongle 3 waits in any case until it receives the respective encryption code and stores it safe against overwriting.

The server 2 on the other side receives the random code in step 364 and feeds its encryption code generation unit. Since the encryption code generation uses the dongle ID as second seed key the server 2 accesses a data base which contains all Dongle IDs of all dongles which are supplied with data sets by the server 2. Since the server 2 knows which dongle needs to be supplied with the respective data set, it retrieves its ID in step 366 and feeds it together with the random code to the encryption code generator in step 368 and generates the encryption code. This encryption code should be identical to the encryption code which is present in the dongle 3, either still in the safe zone 11 or in the memory of the main processor 14.

As a further protection measure the server 2 ads in step 370 protection information into the data set. With respect to the data of the original data set these data are pseudo data since they do not contribute to the purpose of the data set to update software or other data in the communication system 26. The pseudo data are inserted in the data set at positons selected by the server 2 or derived from the encryption code. Instead of fixed positions the pseudo data can be inserted at given data, like at every occurrence of the number 57 in the data set. The inserted pseudo data and the position information are stored separately in step 372.

Now, in steps 374 and 376 the server 2 encrypts the pseudo data and position information on one hand and the extended data set on the other hand. To one of the so obtained files the server 2 ads the random code as such in step 378. The encryption of the data set is done with the encryption code. The encryption of the pseudo data and location data are done with the information about the length of the extended data set. Further, the random code, the encryption code, and/or the dongle ID can be used as additional information for the encryption.

Then the server 2 sends in step 380 both files to the communication system 26, either as one file or as two separate files in one transmission or linked together in two transmissions in step 382.

In the communication system 26, either of its devices 3, 24, like the dongle 3 or the smart phone 24, may perform the following steps, dependent which device 3, 24 is supplied with the data update. In the following this process is described with respect to the device 3, however, the process can be applied to the mobile device 24 as well.

When in step 384 the fixed device 3 receives the data set it searches in step 386 the correct encryption code with the aid of the attached random code. If no encryption code is linked to the random code stored in the dongle 3, the dongle 3 waits for its arrival from the safe zone 11. Then the dongle 3 decrypts in step 388 the data set using the encryption code as decryption key.

Alternatively, the random code is not attached to the data set, so the connection between the random code and the encryption code - or encrypted data - is camouflaged for better protection. Upon receipt of the encrypted data set the dongle 3 tries out every random code stored since the enquiry of the server for the random code. It will then eventually use the correct random code to generate the correct encryption code, so that the decryption is successful. Only if any decryption with all random codes stored from the enquiry on fail, the data set is discarded as possibly manipulated.

To resume the process of FIG 17, next, the length of the decrypted and extended data set is used in step 390 to decrypt the supplemental information containing the pseudo data and its position information. Depending on the respective encryption process the random code, the encryption code and the dongle ID are used as well for decryption. Now the pseudo data in the data set and in the separate file are uncovered and are compared in step 392 by the dongle 3 using the position information to find the pseudo data in the data set. If the pseudo data of the supplemental file is identical with the information at the indicated locations in the data set, the data set is accepted in step 394. If only one detail does not match, the data set is categorized as manipulated data and discarded.

In case of the successful match the pseudo data is removed from the data set, and the remaining information in the data set is used for data update in the dongle, like executing the data set or storing the information in a data base for later retrieval. Further, in step 96, the extracted pseudo data is returned to the server 2 for confirmation and for indication of the complete and successful data transfer of the data set.

It may happen, that the communication device 3 is separated from an external power supply, for example if it is separated from the vehicle 6. This could impair random code generation, since the device 3 could run out of power. If the power supply is reinstated again the device 3 will start its activity again, however, not knowing the current time. This is uncritical, since the random code generation will start again after the power reinstatement, and any random code may serve for the encryption code generation process in the device 3 and in the server 2. A power blackout, thus does not influence the security of the system 26 as such, but only brings to a hold the activity of the device 3, the information transmission to the server 2 and, of course, any data update process. To prevent this disadvantage the communication device 3 is equipped with the power supply 130, like a battery or capacitor, which serves as limited internal power supply in case the external power supply is not connected. Preferably the internal power supply 130 is located inside the safe zone 11, so not even any supply of power needs to be going into the safe zone 11, rendering its protection even safer.

Short description of the method steps according to FIG 17:
- 340: Dongle Citadel Safe Zone CPU generates a Random Key
- 342: Safe Zone CPU generates an Encryption Key from the Random Key and the Safe Zone ID
- 344: Random Key is transferred from the Safe Zone to the Dongle Main CPU
- 346: Random Key generation is repeated periodically
- 348: Each Random Key is sent to Dongle Main CPU and previous Random Key is overwritten
- 350: Safe zone CPU waits time span before sending the Encryption Key to Dongle Main CPU
- 352: Dongle Main CPU deletes received Encryption Key immediately unless Server request is present
- 354: In case of an impending data set transfer, the Server checks Smart Phone for Communication Link to Dongle
- 356: Server sends to Dongle CPU (directly or via the Smart Phone) a request for the current Random Key
- 358: The Dongle Main CPU transmits (directly or via the Smart Phone) the current Random Key to the Server
- 360: Same current Random Key is stored by the Dongle Main CPU
- 362: Dongle Main CPU waits for arrival of corresponding Encryption Key, stores it and links it to Random Key
- 364: The Server CPU receives the Random Key
- 366: Server accesses a data base of IDs of all involved Dongles and retrieves the ID of the transmitting Dongle
- 368: The Server uses the retrieved ID and Random Key to generate its own Encryption Key
- 370: The Server inserts into data set additional Pseudo Data at a given location or at given data
- 372: The Server stores the same Pseudo data and the location information in a separate file
- 374: Server encrypts the Pseudo Data and location data using Random Key, ID, and code length of data set
- 376: The Server employs own and identical Encryption Key to encrypt the data set destined for transmission
- 378: The Server also attaches to the encrypted code the Random Key
- 380: The Server sends the encrypted code plus Random Key via Smart Phone to the Dongle Main CPU
- 382: The extra data package is sent as a separate transmission
- 384: The Dongle Main CPU receives the data
- 386: The Dongle Main CPU uses the received Random Key to find the corresponding Encryption Key
- 388: The Dongle Main CPU uses the Encryption Key to decrypt the data transmission
- 390: The length of data set is determined and used with Dongle ID and Random Key to decode the Transmission
- 392: The inserted Data as indicated by Transmission is compared with data of data set at indicated positions
- 394: If they match the data set is accepted
- 396: The extracted Pseudo Data is transmitted back to the server to indicate completion of the download

It may be useful that data from the on board diagnostics system 6 are sent to the remote server 2 for evaluation. In general, driving data may be sent from the on board diagnostics system 6 to the fixed device 3. The data may be modified or not and forwarded to the mobile device 24 or directly to the server. Again, the data may be modified or not in the mobile device 24 and forwarded to the server 2. The communication lines between fixed device 3 and mobile device 24, and between mobile device 24 and server 2 are vulnerable against unwanted data attacks. To protect the data along the line from the fixed device 3 to the mobile device 24, and further to the server 2, the encryption code may be used to encrypt a data set, containing driving data, for example, in one of the communication devices 3, 24. The encrypted data set can then be sent to the server 2 which decrypts the data set. The process may be the same as described above in the reverse direction. The random code may serve in both processes, the encryption and the decryption, as seed key, either alone or together with other data, like the IP of the device 3.

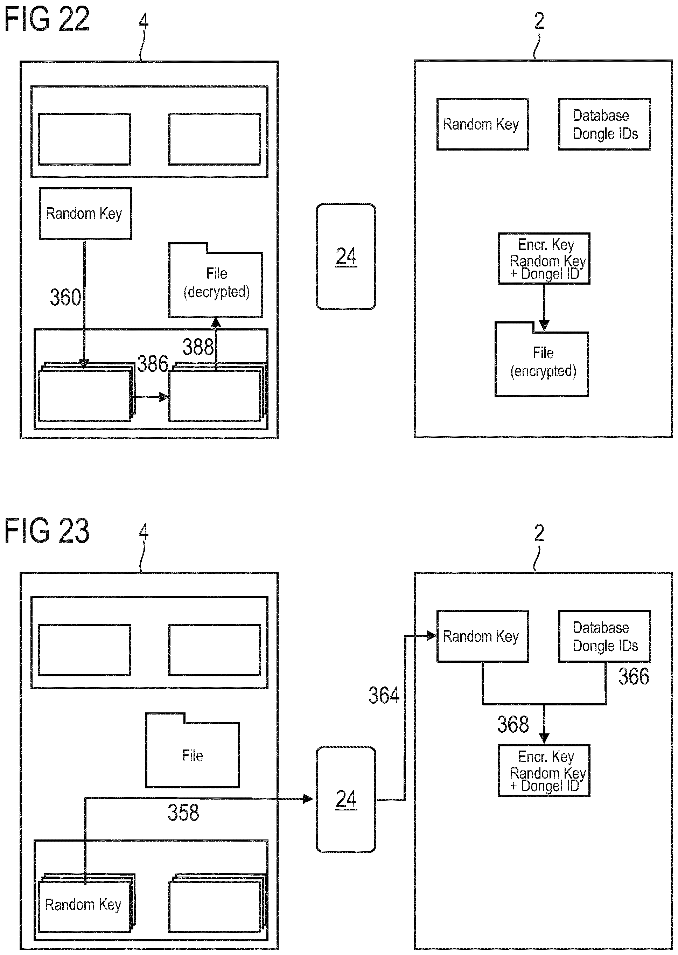

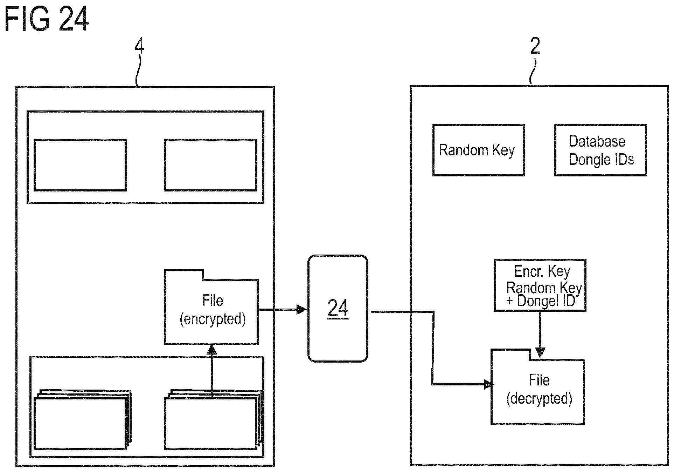

An embodiment of this data transfer from the communication device 3 to the server 2 is shown in FIGs 23 and 24. If data coming from the on-board device 6 are sent to the server 2 via the communication device 3, these data should reach the server 2 uncompromised. They are protected, therefore. For this the method starts as described above to FIG 18:
Step 340: The Dongle Citadel Safe Zone CPU generates a Random Key. Step 342: Safe Zone CPU generates an Encryption Key from the Random Key and the Safe Zone ID. Step 344: The Random Key is transferred from the Safe Zone to the Dongle Main CPU. Step 346: The Random Key generation is repeated periodically. Step 348: Each Random Key is sent to Dongle Main CPU and previous Random Key is overwritten. Step 350: The Safe zone CPU waits time span before sending the Encryption Key to Dongle Main CPU. Step 352: The Dongle Main CPU deletes received Encryption Key immediately unless Server request is present.

Now the method branches, since it is not the server 2 which prompts for a data transfer and thus for the transmittal of the seed key or random code, but it is the communication device 3 which sends a data package 398 to the server 2. The communication device proceeds with step 358, therefore: The Dongle Main CPU transmits (directly or via the Smart Phone) the current Random Key to the Server. Step 360: The same current Random Key is stored by the Dongle Main CPU. Step 364: The Server CPU receives the Random Key and 366: accesses a data base of IDs of all involved Dongles and retrieves the ID of the transmitting Dongle. Then in step 368 the Server uses the retrieved ID and Random Key to generate its own Encryption Key.

Meanwhile the communication device 3 encrypts the data package 398 with the stored encryption key which is linked to the random code which was sent to the server 2 as is shown in FIG 24. The communication device 3 then sends the encrypted data package 398 to the server 2 (FIG 24). The server with its encryption key decrypts the data package. This process may be performed analogous to the steps 388 to 394 as described above.

The communication device 3 comprises the second data interface 12 with two wireless communication units 22, 23, one communication unit 22 being a Bluetooth unit and the other one a WiFi unit 23. To save space and a separate antenna, both units 22, 23 may use one single antenna, and thus can only by operated successively and not simultaneously. Both communication units 22, 23 are prepared for communication with a mobile communication device 24. While the communication device 3 is a short distance communication device using Bluetooth and/or WiFi, the mobile communication device 24 is a smart phone or any other vehicle implemented or hand held device for long distance wireless remote communication, using GSM, for instance. In the shown embodiment of FIG 1 the mobile device 24 is connected to the server 2 directly via GSM connection. The connection from the mobile device 24 to the server 2 is bi-directional. The same is true for Bluetooth channel between the mobile device 24 and the main processing unit 14. The WiFi channel 23, however, is unidirectional to mobile unit 24, and may only be used to the degree of sending the first device identification signal, like SSID.

While in principle the data transfer between the fixed communication device 3 and the mobile communication device 24 is possible with either method, Bluetooth or WiFi, the protection of data against interception is easier with Bluetooth, first due to its limited range, and second since a logon and logoff of WiFi connections coming and going is common with smart phones moving through a plurality of WiFi zones during a journey. For this reason a communication between the communication device 3 and the mobile communication device 24 is preferably performed via Bluetooth. Also the internal processing architecture of the main processing unit 14 can remain much simpler and lower cost as well as with a coding structure that does not require a traditional operating system like Android which also inhibits hacking loop holes.

During normal use a smart phone does not search for open Bluetooth connections in the surroundings. Accordingly, if the fixed communication device 3 attempts to start a communication session with the mobile communication device 24 using Bluetooth, such attempt will fail when the mobile communication device 24 has it Bluetooth 22 switched off. Nevertheless, when the communication device 3 is awoken, like by noting an odometer change, it first seeks to establish Bluetooth connection with an application in the mobile communication device 24.

The application may itself being started up when it senses a significant GPS event. This sensing may be done by a daemon operating in the background. However, most probably no Bluetooth connection is active, so the seeking signal by the communication device 3 comes to nothing.

To reliably start a communication session with the mobile communication device 24, the fixed communication device 3 uses a WiFi channel to send a communication request to the mobile communication device 24. This WiFi is only passively sensed by the app of the mobile communication device 24. It is only used as a default mode of synchronization if the fixed communication device 3 fails to find a Bluetooth response from the application in the smart phone. A background demon or similar mechanism sense the ID, identifies it as related to the application running in mobile communication device 24 and the fixed communication device 3 mates to that application.

Accordingly, the mobile communication device 24 does not respond to the request. But it senses the WiFi ID of the fixed communication device 3, and thus knows that it is in the insured vehicle. The mobile communication device 24 now starts to log data, like Quality Metric data, via the internal GPS sensor. No communication link is forged, the dongle WiFi ID is just read by the application, and there is no data streaming in either direction. Rather the application in communication device 24, using the prior "permission" granted installation of the application, is able to turn on the mobile communication device Bluetooth. The fixed communication device 3 may continue in parallel with its WiFi SSID transmission to poll for Bluetooth, and accordingly detects the now turned on Bluetooth from mobile communication device 24 and a session and 2-way communication channel is established

If the mobile communication device 24 has operating system restrictions that will not enable the smart phone application upon identifying the Dongle WiFi SSID to turn on the Bluetooth, then it may send a push notice to the smartphone display and/or an audio to notice the user, like "Please Turn on the Bluetooth". If the user meets this prompt a Bluetooth communication line between the fixed communication device 3 and the mobile communication device 24 is established, and both devices 3, 24 exchange data only via this channel.

If the driver does not turn on the Bluetooth, the first device logs the duration of transit and the OBD odometer reading for future upload to the server 2. In coordination the application in mobile communication device 24 logs that it detected the SSID of dongle fixed communication unit 3 and hence the Bluetooth channel 22 is not enabled - this relevant noncompliance of the insured party is communicated to the insurer and any relevant Quality metric data complied while the vehicle is in motion as detected by mobile communication device 24's GPS.

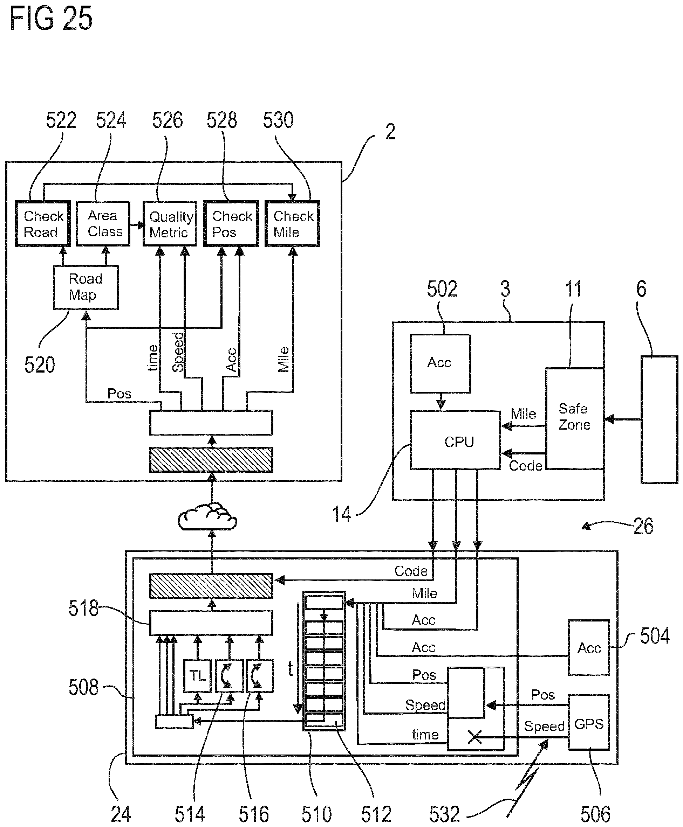

FIG 25 shows in a block diagram the server 2, the communication system 26 with the communication device 3 fixed in the vehicle 4 and the mobile device 24 located in the vehicle 4 and the on-board diagnostics system 6. The on-board diagnostics system 6 sends odometer data, like mileage and/or vehicle speed to the interface 7, 8 where these data are received by the safe zone 11 or the protection unit 10, respectively. These data come along with the time points at which these data where acquired or measured, respectively. The safe zone 11 transmits these data to the main processing unit 14 which forwards the data to the mobile device 24.

Further, the safe zone 11 transmits the random code to the main processing unit 14 which forwards it the mobile device 24 for encoding data to be sent to the server 2. The communication unit 3 contains an acceleration sensor 502 which during driving of the vehicle 4 takes acceleration values measured and transmits them to the main processing unit 14 which again forwards the data to the mobile device 24. To keep the acceleration sensor 502 safe from malicious invasion the acceleration sensor 502 may be located inside the safe zone 11.

In the mobile device 24 alternatively or additionally an acceleration sensor 504 may be present taking acceleration values of the mobile phone 24. Although these values are much less accurate, unless the mobile device 24 is fixed in a vehicle holder during travel, these values may be used identically to the values taken by sensor 502, or at least in the same manner but considering their inaccuracy. Further, the mobile device 24 features a GPS unit 506 receiving satellite signals and generating location data and speed data from it. The location data are the location points of presence of the vehicle, so that the succession of the location points track the journey of the vehicle. Location and speed data are transferred to an application 508 which can be identical with the application 132 runs a program executing one or more of the following method steps.

The speed data originating from the GPS unit 506 are discarded and not used. Instead, the position data are used to calculate speed data from them. Location data, i.e. the geostationary location points where the vehicle 4 travelled, and the respective speed data, i.e. the driving speed of the vehicle 4 at the location points, are stored in a data buffer 510. The location data may be irregularly or erraticly picked or accepted from the GPS unit 506, preferably in a random time sequence. Since the time points associated with the picked location points are known, the speed can be calculated from the randomly picked location points.

Preferably, the GPS data are in a NMEA form and stored in the buffer 510, at least the x,y,z coordinates, the time stamp, at sub-second time intervals the co-occurring accelerometer readings and at pre-specified transit time intervals the vehicle odometer mileage reading. It should be noted that if longer distance communication like GPS are used, all the above buffer data compilation and storage could be done in the server 2. Hence, in said buffer is preferably maintained in a time synchronized manner successive GPS records with co-occurring accelerometer reading reflecting the rate of any measureable speed changes per the sensitivity of said accelerometer device and at specified time intervals during a transit the corresponding odometer reading.

The buffer 510 stores the received data for a predetermined instance of time, like 30 minutes, or 5 hours. After this time period it erases the data, like overwrites them with new data. This is shown in FIG 25 by data blocks 512 "filled" into the buffer 510 on the top and leaving the buffer 510 at the bottom a timespan t later. The server 2 may also on occasion specify a longer or shorter period of buffer data retention to facilitate various tests of GPS data integrity. Said buffer storage is managed when capacity is reached in a First-in/First Out (FOIFO) manner.

Each block 512 contains odometer data, acceleration data, position data, speed data and time associated to location data and speed data. Each block 512 contains the data acquired over a predetermined time period, like 10 seconds.

The data blocks 512 are taken out from the buffer 510 and fed to further processing in the application 508, not necessary at the end of the timespan t but at any useful time point. Alternatively, the data are directly fed for further processing and a copy of the data is branchingly fed to the buffer 510 for safeguarding.

The data are processed as follows. Location points and speed values are stored in separate files 514, 516 and may be randomized in order therein to keep data privacy, as is indicated by the double sided arrows in FIG 25. However, this is not necessary to find a manipulation of the location data and can be omitted here. Then these files are entered into a data capsule 518 518 which can be identical with data capsule 138. Travel trend lines TL are calculated from the location data which are stored in the data capsule 518 as well. Further, odometer data and acceleration data are stored in the data capsule 518.

The data capsule 518 is then encoded using the random code from the safe zone 11, the encoding being indicated in FIG 25 by the section lining of the box, and is then sent by the mobile device 24 to the server 2. There it is decoded by an identical random key which releases the data for further processing.

The position data are mapped to a road map or road map data 520. It is then checked in a step 522 whether the location data meet road data in such measure that a reasonable travel path is located on roads. If this is not the case, especially if the travel path crosses water without a bridge or a ferry, this is evidence for a manipulation of the location data.

The regular use of the location data is to associate an area or an area class to the respective travel section in step 524, like a travel trend line, and map a driving characteristic, like driving speed in this travel section with the area class to derive a driving quality metric in step 526. This metric is highly valuable for UBI or many other purposes.

Another check for finding a manipulation of the location data is performed in step 528, where position data are compared to acceleration data. If, for example, an acceleration of the vehicle was captured by the acceleration sensor and the location data are not reflecting this acceleration, this again is strong evidence for a manipulation of the location data.

Especially, the comparison for consistency of odometer and acceleration, like GPS NMEA derived acceleration - positive or negative, does not require upload to the server but can be done to a sufficient degree of accuracy in the mobile device. Hence, in one embodiment, if the accelerometer data does not match the GPS derived GPS (i.e. change in speed over time) to a sufficient degree - we send the buffer to the server to do an odometer based test against the GPS data.

A further check is performed in step 530, where from the road map data the distance travelled according to the location data is derived and compared with the mileage from the odometer data, which is the distance shown by the odometer data between two or more odometer reading events. Here a manipulation of the location data is uncovered easily.

In other words, in the server the GPS NMEA records are examined versus a GIS data base to assess accrued mileage. The GPS based mileage, preferably derived from successive NMEA reported x,y,z coordinates, is compared with the corresponding odometer readings. If the GPS mileage computation is significantly less than the odometer derived mileage for the corresponding GPS reading, a flag is set indicating the possibility of GPS manipulation as would be done to obscure speeding and unsafe driving. Additionally one can investigate accelerometer readings to see if the GPS readings are reflecting such speed change nuances causing acceleration/deceleration events to be recorded. Significant deviations in being able to recreate acceleration/deceleration events from corresponding GPS data in the buffer would also be reason to further examine the possibility of GPS spoofing and malicious hacking.

Said analysis of buffer GPS records versus accelerometer readings, unlike GPS records versus odometer reading that are facilitated by a GIS database, can be done in real time in the mobile device giving early warning of GPS data manipulation to obscure high speed and erratic driving. If the mobile device contains or has direct access to a GIS database, the propriety check using mileage derived from GPS coordinates or speed values versus odometer reading can be done in a real time manner in the mobile device

One scenario for manipulation of driving data is to reduce recorded speed values from the speed data file to always show some low value or to appear more natural, variations with said low mean speed. This can be done by hacking the mobile device 24, which is indicated by the flash arrow 532 in FIG 25. This is easiest when the position data are manipulated before they are entered into the application 508 and especially before they are entered into the data capsule 518.

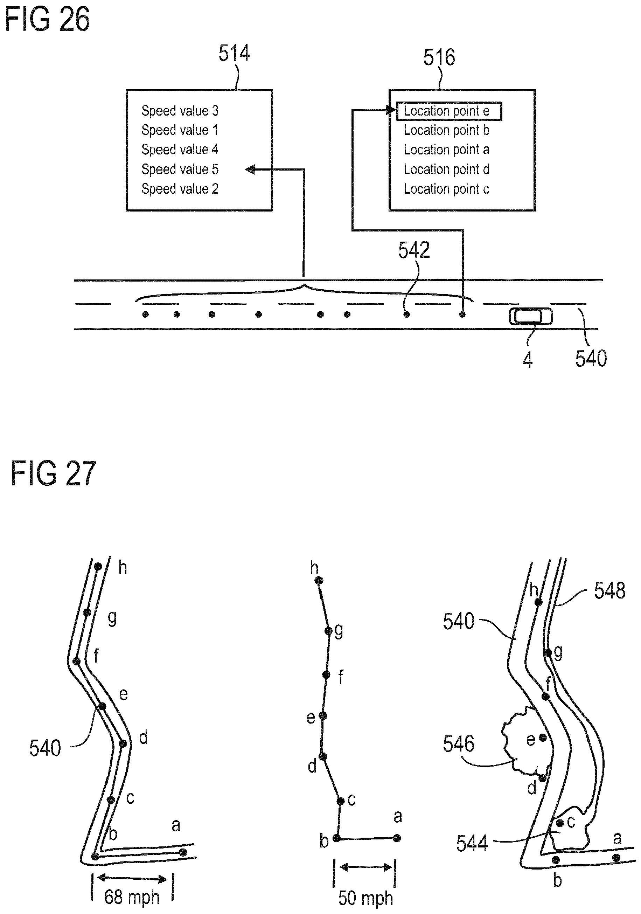

FIG 26 shows location data 514 in its file and speed data 516 in its file, the speed data 516 being extracted from the location data 514. During the journey of the vehicle 4 on a road 540 location points 542 are detected by the mobile device 24 and stored in the file as location data 514. The location data 514 may be taken at random points or random instants of time, as can be seen in FIG 26, for data privacy camouflaging, but can be omitted with regard to the consistency check. Further, it is shown, that both data 514, 516 are randomized in their file. However, it is easier for checking purposes to leave the data in their generation order with regular and uniform time spans between each reading.

The speed data, i.e. the speed with which the vehicle 4 drove on the road 540, are calculated from the location data 514. Accordingly, the GPS speed reading is ignored or not used by the application 508, but instead the calculated speed stand in known relation to the detailed position readings stored in the buffer 510.

When manipulation software sees coordinates with a speed of over 50 miles per hour, for example, it reduces it to below 50 miles per hour by moving the respective coordinates closer to each other before sending them to the application 508 to place into the data capsule 518. But since it is not known from which coordinate points the speed was calculated the coordinates cannot be adjusted in a logical way. Or one needs to adjust the coordinates of every successive point even more.

A result of such manipulation is shown in FIG 27 which shows original measured coordinate points from GPS sensor 506 on the left hand diagram. Only 8 location points are shown for simplicity. The middle diagram shows an example of manipulated coordinate points to reduce the speed and thus the distance between locations. Since the exact location points are sent to the server 2, as outlined above, the route driven can be extracted by overlying the locations over a road map. This is shown in the right hand drawing of FIG 27. It can be seen that the manipulated locations do no more fit to the road map, by lie in a lake 544, in the woods 546 and in a river 548, giving clear indication that they are not the locations as originally taken. This can be taken as fingerprint of hacking the mobile device 24 and manipulation of the driving data.

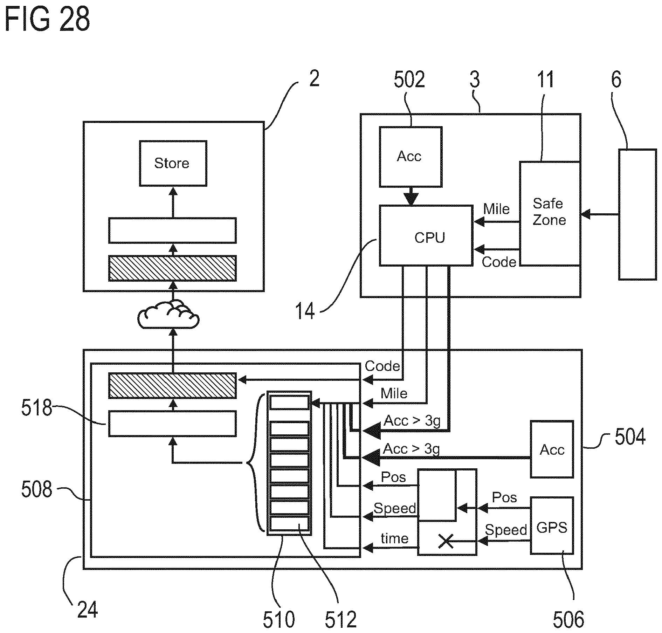

The use of the buffer 510 is shown in FIG 28. In case one or both of the acceleration sensors 502, 504 measure an acceleration higher than a predetermined threshold, this threshold being set in relation to accident values, like 3 g for example, this is a hint for the occurrence of an accident. Now. the complete data contents of the buffer 510 is permanently stored outside the buffer 510. This can be done by storing it in a data capsule 518 and transmitting this data capsule 518 to the server 2 and stored there. Then the server or another calculation device can upon request evaluate these data so they can be used for clearing up an accident or another driving event.

Another reason for sending the buffer contents to the server 2 would be a data inconsistency between the driving data and the reference data. If such inconsistency occurs, or upon any other evidence for the manipulation of some of the driving data, the server 2 may prompt the communication device 24 for transmittal of the buffer contents. The communication device 24 then sends all data capsules 512 of the buffer 510 to the server 2.

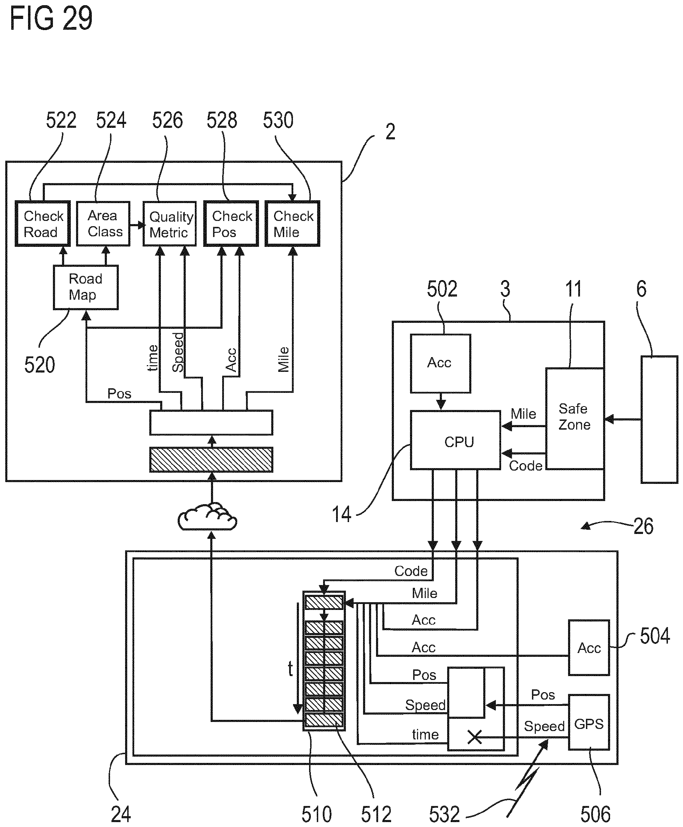

FIG 29 shows a simplified data handling of the communication device 24. Here the data capsules 512 are encoded right away and sent to the server 2 after leaving the buffer 510. The capsules 512 can be identical with data capsules 138. Alternatively to sending the data capsules 512 one after the other to the server 2, the communication device 24 may pick only some of them for transmittal to the server 2 to maintain data privacy to a better degree. Preferably, the data capsules 512 - encoded or not - are picked in a random sequence from the buffer, only a minority of the capsules 512 in the buffer 510 being sent to the server 2. Here no complete travel data set is evaluated but only random samples of the driving data.

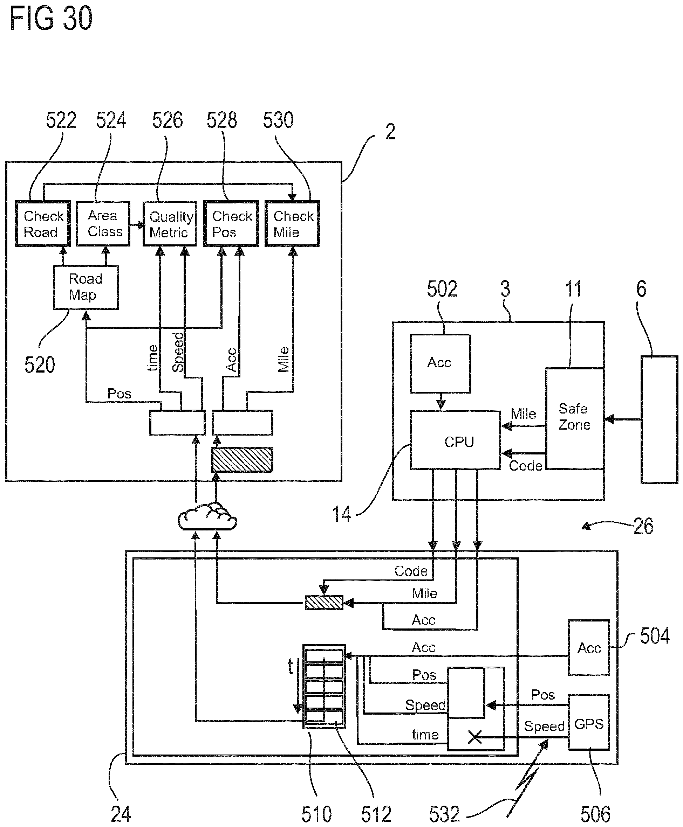

FIG 30 shows an embodiment where the reference data coming from the fixed communication device 3 are forwarded directly to the server 2 without merging the driving data to them within one data capsule. The encoding can take place in the mobile device 24, as shown in FIG 30, or in the fixed device 3 already, only encoded reference data passing the mobile device 24 then on its way to the server 2. The driving data acquired by the mobile device can go to the buffer and be handled as described above. They can be encoded, or not as shown in FIG 30.

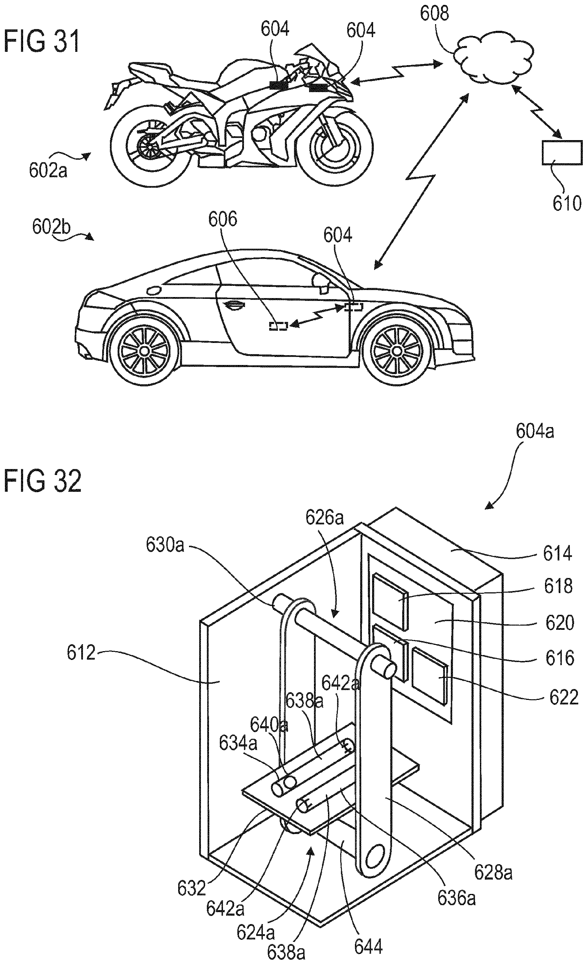

FIG 31 shows a vehicle 602a, which is a motorcycle, and a vehicle 602b, which is a car, at which a driving motion detector 604 is placed, like in the glove box of the vehicle 602b, or with adhesive material at a surface of the vehicle 602a. Inside the vehicle 602b or outside the vehicle 602a is a mobile communication device 6 which is in communication with the driving motion detector 604 via Bluetooth. The mobile communication device 606 can be a smart phone. The mobile communication device 606 further communicates via GSM 608 or WiFi, if connected to a local network, with a server 6010 which is a server 6010 of a vehicle manufacturer or a vehicle insurance company for collecting driving data from a plurality of vehicles 602.

The driving motion detector 604 is shown in FIG 32 in detail. The driving motion detector 604 comprises a housing 612, a power supply 614 and two power consumer one of which is a control unit 616 with a processor, and the other is a sender 618. On the circuit board 620 carrying the control unit 616 and the sender 618 a memory 622 is present. The sender 618 is a Bluetooth sender which preferably is able to connect to the mobile device 606 over WiFi as well.

Inside the housing 612 an activation device 624a is present for detecting a motion of the vehicle 602 and for connecting the power supply 614 to at least one of the power consumers 616, 618 upon a movement of the vehicle 602. For this, in this embodiment, it comprises a swing system 626a with a swing 628a on a system suspension 630a with a joint in form of a swing axle which enables a platform 632 to swing in a one dimensional direction.

Within the swing system 626a two activators 634a, 636a are located. These activators 634a, 636a are acceleration sensors, each of them featuring an activation track 638a in a form of a tube housing, an activation element 640a, and an activation contact 642a. In this embodiment the activation track 638a has the form of a tube, the activation element 640a is a mercury pellet, and the activation contact 642a comprises two contact elements which are connected onto the two poles of an electric circuit fed by the power supply 614.

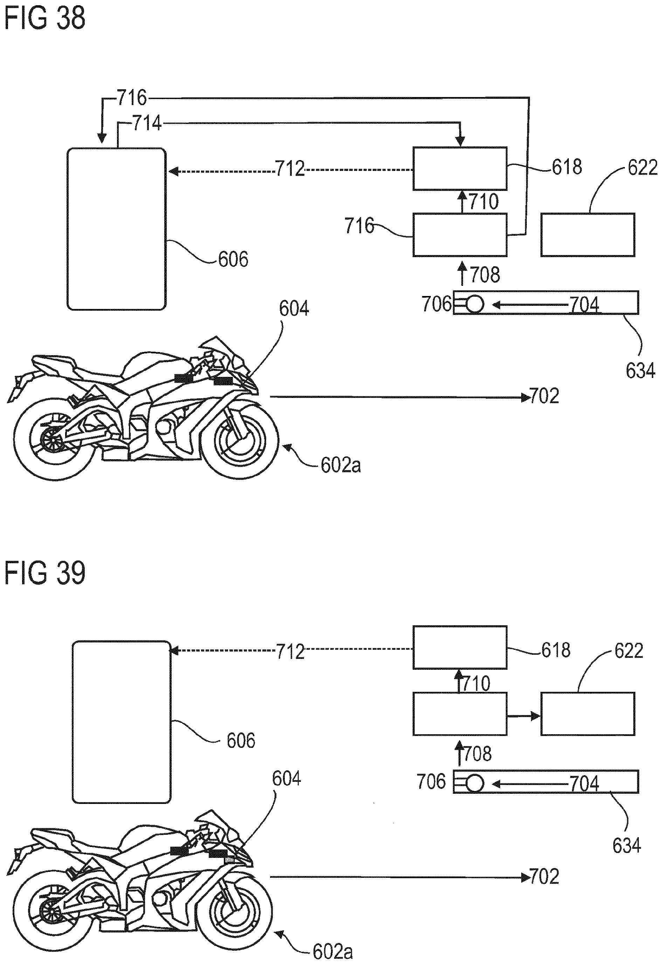

The driving motion detector 604 is fastened at the vehicle 602, thus inside the vehicle 602b, as displayed in FIG 31, or on the outside of the vehicle 602a, as is shown in FIG 31 and FIG 38 on an outer surface of a motor cycle. The fastening can be done by means of adhesive elements, like adhesive strips, or other fastening elements. The driving motion detector 604 is fastened in such position that the one dimensional swinging direction is parallel to the vehicle driving direction. Further the driving motion detector 604 should be fastened vertically, so that the swing 628a hangs down symmetrically within the housing 612 when the vehicle 602 stands still on a horizontal plane. For this it would be helpful to have a string attached to the top of the driving motion detector 604 and include instructions to suspend by the string while fastening the driving motion detector 604 at the vehicle, like pressing the adhesive patches to a mounting surface.

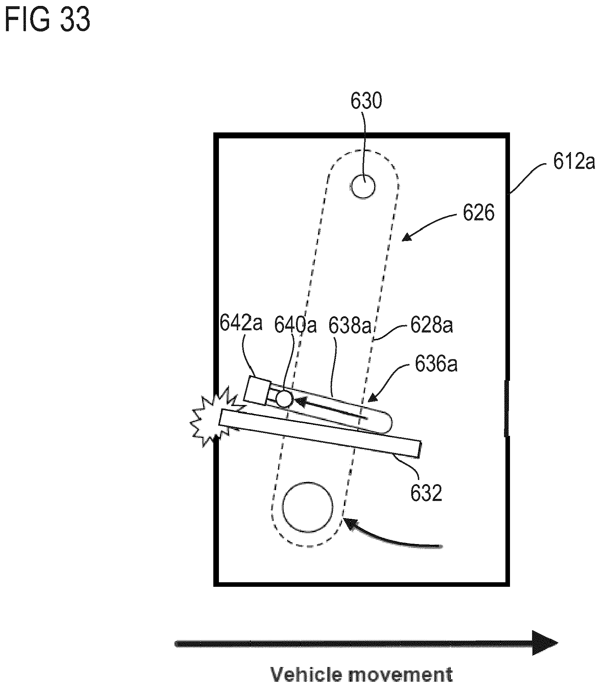

When the vehicle 602 accelerates this acceleration is sensed by the acceleration sensor or activation device 624a respectively in the following way. The acceleration causes the swing 628a to swing due to the inertia of the swing mass. To adjust a reliable swinging a weight 644 may be placed on the bottom end of the swing. When the acceleration exceeds a predefined magnitude the swing will hit the housing from the inside, as is displayed in FIG 33.

FIG 33 shows the swing system 626a within the housing 612a with its system suspension 630a and its swing 628a, on which the platform 632 is fastened. The platform 632 carries the activator 636a with its rearward directed activation contact 642a. If the vehicle 602 accelerates forward, as is indicated by the straight arrow in FIG 33, the swing due to its inertia will keep behind and hit the rearward wall of the housing 612, as is depicted in FIG 33. This hitting will cause a strong acceleration of the activator housing 638a in driving direction of the vehicle 602 whereas the activation element 640a is still free movable within the activation track 638a. Due to its inertia it moves backwards - relative to the accelerated housing 638a - and hits the activation contact 642a and its two electric contacts or poles which are shown in FIG 33. The two contacts are electrically connected herewith since the activation element 640a is electrically conductive. The electrical circuit is closed and at least one of the power consumers 616, 618 are fed with electric power from the power supply 614.

As can be seen in FIG 33 the activator 636a is aligned in such a way that when the swing 628a is at rest in free down hanging position the activation element is located in the housing opposite to the activation contact 642a. In the shown embodiment this is realized by an incline of the bottom of the activation track 638a in rest position of the swing 628a. The activation element 640a runs to the lowest point within the housing 638a which is opposite to the activation contact 642a. By this measure a misactivation of the activation device 624a due to vibrations of the vehicle 602 or minor accelerations, like due to a door closing or a person sitting in the vehicle 602, is prevented. Such accelerations fall under the predetermined threshold and are not detected by the acceleration sensor. The predetermined threshold may thus not be defined by a sharp acceleration value but can be defined by an integrated acceleration value, like over 1/4 swing period of the swing system 626a.

Upon registration of the acceleration and activation of the power consumer the energy of the power supply is continually used by one or more power consumers. This will exhaust the power supply undesirably fast. To prevent a fast exhaust the control unit 616 or memory 622 comprises a program which puts asleep one or more - preferably all power consumers of the driving motion detector 604. If during a predetermined time span no acceleration is detected the control unit 616 cuts off power from the power consumer(s) and cuts off itself from the power, and so inactivates the power consumer(s) and itself. Preferably, the control unit 616 puts the whole driving motion detector 604 in a deactivated condition that does not use any electric power.

The restart of the activations of the control unit 616 needs a switching action from another element. This switching action is performed by the activation device 624a upon the vehicle acceleration, as described above. The electric loop is closed and electric voltage is present at the control unit 616 which reactivates it. This reactivation triggers the control unit 616 to open another electric circuit to supply the control unit 616 with electric power. If the activation element 640 removes from the activation contact 642 and thus opens the electric circuit again, the control unit still keeps under voltage and thus keeps active. The second circuit is cut off by the control unit 616 upon the absence of acceleration for a predetermined time span, as described above.

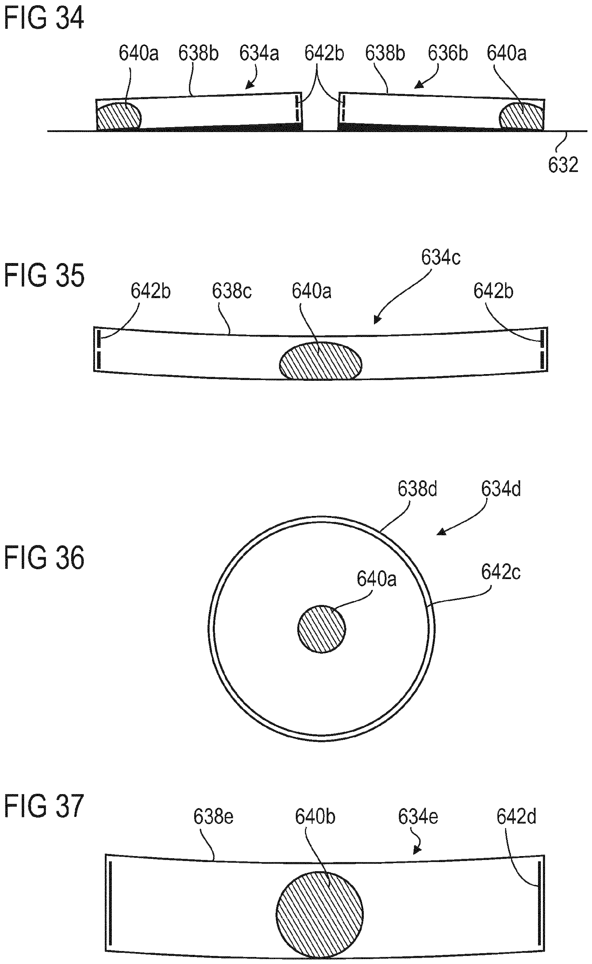

As can be seen in FIG 34, the activation device 624a contains two activators 634a, 636a which are arranged in opposite directions one to another. The activator 636a detects acceleration in forward driving direction of the vehicle 602, and the activator 634a detects acceleration in rearward driving direction of the vehicle 602. Both activators 634a, 636a are inclined in opposite directions, so that both activation elements 640a rest opposite to their respective activation contact 642a in the absence of acceleration.

FIG 34 shows two activators 634b, 636b on a platform 632 analogous to FIG 33. The following description is basically limited to the variations with respect to the foregoing embodiment which are referenced with respect to identical or similar features and functions. To not repeatedly describe the same features and functions, features and functions of the foregoing embodiments are overtaken without being described again, unless features or functions are described differently. Further, basically the same components are marked with the same reference numerals. For an easier understanding the same components in different embodiments are marked with the same reference numeral but different reference letter, wherein the components can be identical or may exhibit minor differences in design, dimension, position and/or function. In case a reference numeral without its reference letter is mentioned all components with the same reference numeral are addressed.

The two activators 634b, 636b correspond to the activators 634a, 636a of FIG 33, they are opposite in direction and inclined oppositely, so that their activation contact 642b each is on a higher level than the ground under the respective activation element 640a. Again, the activator 634b is for backward acceleration detection, and the activator 636b for forward acceleration detection.

FIG 35 shows a different activator 634c which can be used in the activation device 624a or any other activation device 624. The activator 634c is equipped with a different activation track 638c which has the form of a tube housing with a bend lifting both ends over the lowest ground level in the middle of the housing 638c. Of course, all elevations refer to a resting position of the activation device 624 as, for example, shown in FIG 35. The activation element 640a, i.e. the mercury or metal pellet, rests in the middle position between the two activation contacts 642b. Depending on the direction of the vehicle acceleration the activation element 640b - upon the platform 632 hitting the housing - moves backwards (forward acceleration of the vehicle 602) or forwards (backward acceleration of the vehicle 602) and contacts the respective activation contact 642b.

A further embodiment of an activator 634d is shown in FIG 36. The activation track 638d is formed as a basin or bowl with a slight bend, so that the radial outer rim of the housing 638d is surrounds the central section of the housing 638d in a higher position. The activation element 640a rests in the middle section, accordingly, and moves towards the higher rim upon acceleration of the vehicle 602, or upon the platform 632 hitting the detector housing 612, respectively. The activation contact 642c is running as two rings at the rim, one ring for the plus pole and the other ring for the minus pole of the electric circuit.

This assembly has the advantage that it detects all horizontal acceleration in any horizontal direction. This makes it unnecessary to install the driving motion detector 604 in a specific horizontal direction at the vehicle 602. A marking of the vehicle driving direction at the detector housing 612 can be omitted. However, it is essential that the housing is placed in horizontal position at the vehicle 602, so that the activation element 640 rests opposite to the activation contact 642a-b of the embodiments of FIG 32 to FIG 34, or essentially in the middle between the activation contact 642b-c of the embodiments of FIG 35 and FIG 36.

In the embodiment shown in FIG 37 the activator 634e comprises a metal ball, like a steel ball, as activation element 640b. The activation track 638e can have essentially the same form as in FIG 35, like a tube with a bend lowering the middle section between both end sections. A form as in FIG 36 is possible as well, wherein the single activation contact 642d runs around inside the rim. However, the activation contact 642d should be different in so far as one pole is positioned at the bottom of the activation track 638d and only the other pole is positioned at both tube ends or around the rim, respectively. The activation element rolls on the first pole, and closes the circuit upon hitting the other pole at the ends or rim. An easy realization would be the housing 638d forming the first pole on which the ball runs during its movement. The other pole is electrically isolated fastened in the housing 638d.

FIG 38 shows a method for detecting motion of a mechanical system, like a vehicle 602, which in the embodiment shown in FIG 38 is a motorcycle 602a. The motorcycle 602a carries a driving motion detector 604 which sticks to the trim or tank of the motorcycle, as is shown in FIG 38. The driving motion detector 604 comprises an activator 634, a sender 618, a control unit 616 and a memory 622. A power supply in form of a battery is present as well but not shown in FIG 38. The motorcycle, or in general: the vehicle 602, stands parked without movement for a longer time. The power consumers within the driving motion detector 604 are inactive, therefore, sparing the power supply 614 from energy drain during this waiting time. This state of the driving motion detector 604 is called inactive state in the following. Further, if the driving motion detector 604 is deactivated, like by the control unit 616, the driving motion detector 604 is in the inactive state as well. In this state power consumers may completely be shut off from electric power or be in a standby mode where they consume only little power, preferably the mode with least power consumption existing in the respective power consumer.

When the vehicle 602 is moved, like by a driver grabbing the motorcycle or starting a drive with a car, the vehicle 602 in step 702 accelerates in its motion direction as indicated by the straight arrow in FIG 38. As described before, the activator 634 by movement of the activation element 640 in step 704 and contacting the activation contact 642 in step 706 activates an inactive power feed from the power supply 614 to the power consumer upon the contact which is a signal of the activator 634 working as acceleration sensor. In step 708 the control unit 616 is activated by the power feed of the closed electric circuit. This state of the driving motion detector 604 is called active state in the following.

The control unit 616 activates the sender 618 in step 710 which then sends in step 712 a communication request to the mobile communication device 606. This request can be sent by WiFi, preferably by Bluetooth. The communication line between the sender 618 and the mobile communication device 606 is established upon this inquiry.

If the mobile communication device 606 is in contact with the driving motion detector 604, and thus the driving motion detector 604 is active, the device 606 monitors the vehicle movement. This can be done by monitoring its own movement, e.g. by monitoring GPS signals arriving at the mobile communication device 606 and/or by monitoring the acceleration of the mobile communication device 606 itself by means of an acceleration sensor in the mobile communication device 606. If the result of this monitoring is that the mobile communication device 606 is moving, its state is called moving state in the following. If the result of the monitoring is that the mobile communication device 606 is static, i.e. not moving, its state is called static state in the following. The result of this monitoring is returned to the sender 606 in step 714.

In the active state the driving motion detector 604 monitors acceleration. If it detects periodic acceleration events, i.e. a more or less periodic contact of the activation element 640 with the activation contact 642, it considers itself being in motion, it is in a moving state. In case the driving motion detector 604 does no longer sense acceleration events, it considers itself not moving, it is in a static state.

From the view of the driving motion detector 604 the mobile communication device 606 has three states: moving, static, and not present, i.e. no communication line can be established from the driving motion detector 604 to the mobile communication device 606. In combination with the moving and static state of the driving motion detector 604 altogether six states are possible within the system comprising driving motion detector 604 and mobile communication device 606.

Detector 604 is moving - mobile device 606 is moving: The vehicle 602 is driving. The driving motion detector 604 is active and the mobile communication device 606 detects vehicle movement as well. The mobile communication device 606 confirms this motion to the sender in step 714. During operation the control unit 616 monitors the power level of the power supply 614 and sends the respective power level report in step 716 to the mobile communication device 66.

In the moving - moving state the motion of the vehicle 602 is monitored by the mobile communication device 606 which stores the results. The stored data can be the location point which the vehicle passed, the time points at which the vehicle passed the respective locations and/or the speed with which the vehicle moved at the time points and/or location points. The results as such or in processed form, preferably camouflaged for keeping privacy of driver data, are forwarded from the mobile communication device 606 to the remote stationary server 610 for further processing, such as UBI.

If communication between the mobile communication device 606 and the driving motion detector 604 is established both devices inform the other unit periodically about the own state, either by sending the state information to the other device, or by polling the state from the device. Accordingly, both devices are informed about the states of both devices. Further, the mobile communication device 606 can infer if the driver is still engaged/seated in the vehicle. If the mobile communication device 606 device is no longer in contact with the motion detection unit, it terminates related driving data acquisition.

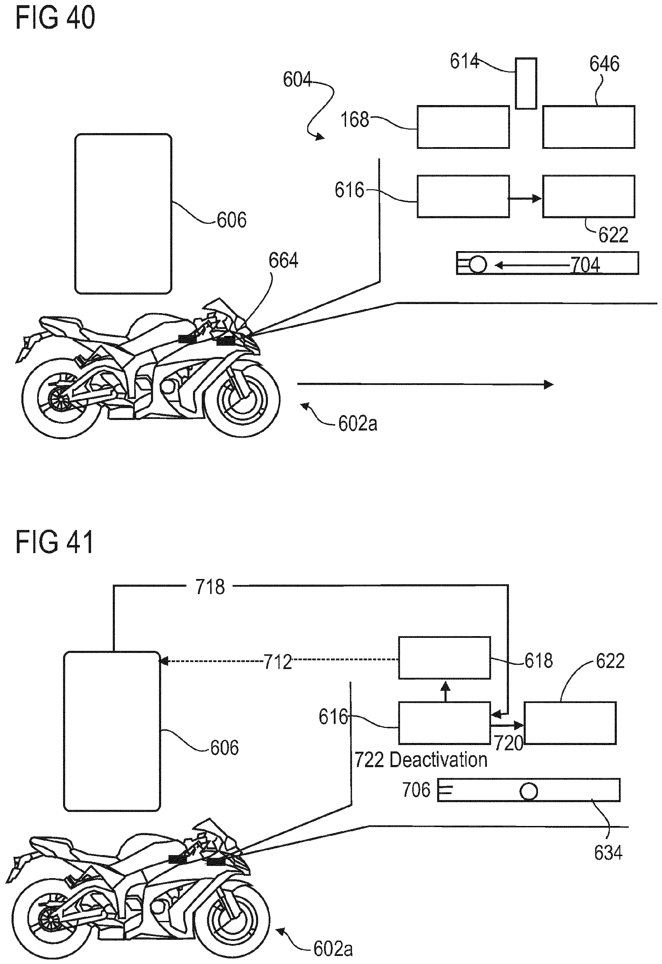

Detector 604 is moving - mobile device 606 is not present: This system state is shown in FIG 39. It could happen that the vehicle is moving but no mobile communication device 606 is present. Accordingly, the communication 712 between sender 618 and mobile communication device 606 fails. In this case the driving motion detector 604 serves as permanent acceleration sensor monitoring the vehicle motion permanently. This monitoring will be done with the internal acceleration sensor, like the activator 634, 636, a vibration sensor, and/or an additional electronic acceleration sensor 646 as introduced in FIG 40. If only a mechanical acceleration sensor is present, like the activator 634, 636, the control unit 616 stores the time points of all contact events where the activation element 640 contacts the activation contact 642 and thus indicates acceleration of the vehicle above the detecting threshold. Since during normal operation the vehicle acceleration surpasses this detecting threshold regularly and many times during a trip the driving event can be detected by this monitoring easily, and it can clearly be distinguished from a single or short time acceleration which indicates vehicle action as such, like door movement or the like, but not a driving event where the vehicle 602 drives more than only a few meters. In one of the following times where communication between the sender 618 and the mobile communication device 606 is established the stored motion data are sent to the mobile communication device 606 and from there to the server 610 for further processing.

FIG 40 shows the driving motion detector 604 with an additional sensor 646. The sensor 646 can be an acceleration sensor, a GPS sensor, a vibration sensor, or the like. During normal system operation where the mobile communication device 6 is present, the additional acceleration sensor 646 may be put inactive to save electric energy. But if the communication to the mobile communication device 606 fails vehicle motion should be monitored by the driving motion detector 604 alone. This is more accurate with a sensor 646 which not only quantitatively detects acceleration events but is able to qualitatively monitor acceleration.

Additionally or alternatively a GPS unit 646 may be present which monitors the present location of the driving motion detector 604 preferably together with its current speed. Location, speed, acceleration time and/or route distance can be tracked and stored in the memory 622, so that an idea of driving is achieved even without the presence of a mobile communication device 606.

In general, but especially if no mobile communication device 606 is present, the detector 604 may have the capability to communicate directly with the server 602 over long distance communication line, like GSM or any other mobile phone or internet communication network.

Further, a vibration sensor 646 may be present instead or additionally to an acceleration sensor 646. The vibration sensor 646 may help to find the correct system state if the driving motion detector 604 fails to sense acceleration but the mobile communication device senses motion, like on a smooth highway. On the other hand if the vehicle moves but the mobile communication device fails to sense motion, like a motor cycle during conversation of two bikers, the vibration sensor 646 may detect motor vibrations, so that the driving motion detector 604 will clearly sense vehicle action.

The process is similar to the process shown in FIG 38, but in step 708 not only the control unit 616 and sender 618 are activated as power consumer, but the accelerometer 646 as well. This monitors the vehicle acceleration more precisely than the mechanical accelerometer 634, and acceleration data and/or motion data are stored in the memory 622. These data or data processed from these data are sent to the mobile communication device 606 if the communication line is established during a later event.

Since the operation of an electronic acceleration device 646 is power consuming, before activating the acceleration device 646 the control unit 616 determines the power level of the power supply 614. If this is higher than a predefined power level threshold the acceleration device 646 is activated. If the power level is lower the acceleration device 646 may not be used at all or be used only intermittently, like below a predetermined threshold of operating time during which no mobile communication device 606 is found during the moving state of the detector 604.

Detector 604 is static - mobile device 606 is static: As depicted in FIG 41 it could happen that the mobile communication device 6 finds that the vehicle 602 is not moving or not moving enough to qualify the motion as a driving trip for which driving data are gathered and processed. It then sends in step 718 the information, like a confirmation, to the driving motion detector 604 that the vehicle 602 is not moving or not moving enough. The control unit 616 then in step 720 writes data of the activation event into the memory and in step 722 deactivates the power consumers, including itself, to wait for the next vehicle motion in the inactive state.

Detector 604 is static - mobile device 606 is not present: The driving motion detector 604 is active and in its static state not registering acceleration events, and no communication between mobile communication device 606 and driving motion detector 604 is present or can be installed, or it broke recently. In this system state the mobile communication device 606 is not present or turned off. Since no recording of vehicle motion is possible, neither by the mobile device 606 nor by the detector 604, a monitoring of acceleration it not necessary. The control unit 616 writes data of the activation event into the memory and in step 722 deactivates the power consumers, including itself, to wait for the next vehicle motion inactively.

Detector 604 is moving - mobile device 606 is static: This is a system state where the mobile communication device60 6 is present at least near the vehicle but does not register movement. If the communication line keeps alive the vehicle 602 is not moving, and the acceleration events from the detector 604 is coming from a different event, like a shaking of the vehicle 602 during packing with heavy items, or during swaying of the motor cycle while not moving, like at a street light or during a conversation of two bikers. In this situation the detector 604 continues its acceleration monitoring until the state changes into a clear state for deactivation.

Detector 604 is static - mobile device 606 is moving: In this state the driving motion detector 604 does no longer senses acceleration events, it considers itself not moving, it is in the static state. But this alone will not trigger the driving motion detector 604 to fall into the inactive state. Instead it will exchange state information with the mobile communication device 606. If the mobile communication device 606 is still moving there is a state conflict, and it is not clear if the vehicle 602 is moving. The vehicle 602 could be still moving but on a very smooth highway without significant vehicle acceleration. If, on the other hand, the vehicle is static parking somewhere, and the smart phone is moving while the driver is walking or driving with another vehicle, like a bus, train, or bike, the mobile communication device 606 will move away from the vehicle 602. In a consequence the communication line between mobile communication device 606 and driving motion detector 604 will break up. This will change the system status to static - non present. Accordingly, the static - moving state implies that the vehicle is still moving but the driving motion detector 604, for whatever reason, does not sense acceleration. It will thus keep up monitoring and stay in its active state in which it will exchange status with the mobile communication device 606. The mobile device will register this system status and report to the remote server 610. The server 610 or any service behind will monitor this status conflict, and in case this happens more and more often will attempt to replace the driving motion detector 604.

Of course, there is a second constellation within the static - moving state: It is the inactive - moving state. In this state there is no communication between mobile communication device 606 and sleeping driving motion detector 604, and the mobile communication device60 6 does not monitor driving data.

In general, the monitoring of the vehicle driving and collecting of driving data by the mobile communication device 606 is always triggered by the active driving motion detector 604. If no such trigger is present, like no communication line is present, there will be no driving data collection within the herewith described co-operation between mobile communication device 606 and driving motion detector 604. Even if the communication line breaks during movement the recording of driving data will be terminated by the mobile device 606 after a set time span without contact to the detector 604.

Further, the control unit 166 in step 722 may store data to every acceleration event into its memory, like date and time of the event. Further, it preferably stores data on activation and deactivation of the control unit 616 into the memory. I.e. before its deactivation it saves the time point of deactivation, or shortly before, and after activation it saves the respective time point as well.

The process of deactivation of power consumers in the driving motion detector 604 should be triggered by data from an acceleration sensor. If in a system state where deactivation is allowed over a predetermined time span no acceleration or too little acceleration is sensed, like no signal from the activator 634, the deactivation is started, e.g. by the control unit 616. A simple way is a fixed time span of absence of signals of the activator 634. If an electronic accelerometer 646 is present, signals from this accelerometer 646 can be taken instead. Preferably signals from the accelerometer 646 and from the activator 634 are compared or examined together. If, for example, the activator 634 is silent, but the accelerometer 646 sends data from which one could conclude that the vehicle is still moving, like on a perfectly even paved new highway during a smooth ride with no traffic disturbances, the time span can be adjusted to the signals or the signals of the accelerometer 646 are taken alone to decide whether the ride is finished or not.

During operation of the driving motion detector 604 the power supply 614 feeds power consumer with electric energy. In case the power supply 614 goes flat it will no longer report vehicle motion to the mobile communication device 606. Since the mobile communication device 606 may not be able to distinguish his motion in the vehicle 602 from other motion, like in a train, in another car or on a bike, it will most probably not register a driving trip and will not record driving data, accordingly. To prevent such data loss, the control unit 616 monitors the power level of the power supply 614 and sends the respective power level report in step 716 to the mobile communication device 606.

Upon a drop of the power level below a predefined threshold the mobile communication device 606 will notify the driver to replace the power source of the power supply 614, like a battery or the like. In case the power source is not replaced before the mobile communication device 604 goes completely down the server 610 is notified about the near end of the detector operation. The server 610 will then send a message to the driver, like an e-mail or a letter, to prompt him to replace the power source or perhaps if the policy so specifies mail to the insured the appropriate batteries.

As described with respect to the additional acceleration sensor 646 or the GPS unit, in the event of low power, like a power level below a predefined threshold, the control unit 616 may restrict or terminate the activity of one or more power consumers of the driving motion detector 604. Such power consumers can be the accelerometer 646 or a GPS-chip, or even the sender 618 which is operated less frequently than with full battery.

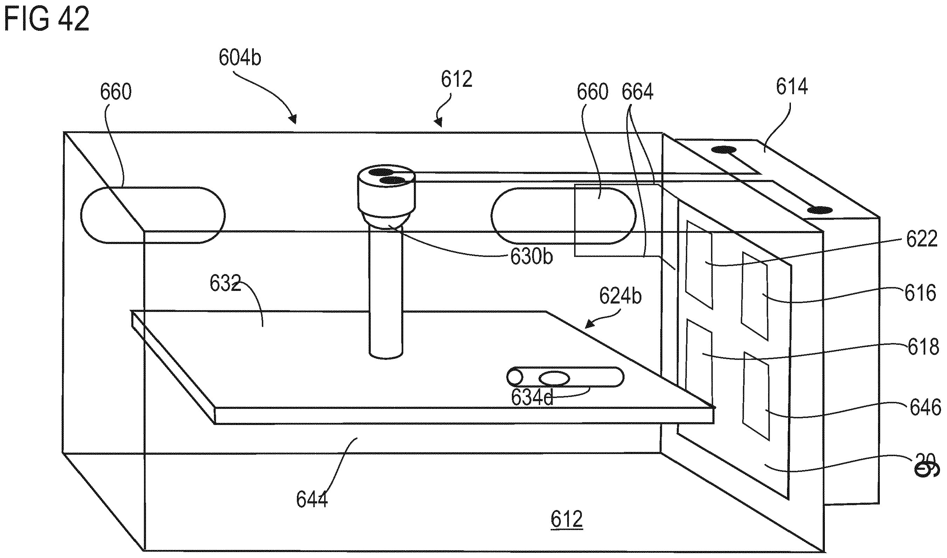

FIG 42 shows a driving motion detector 604b with a swing system suspension 630b allowing a two-dimensional swinging of the activator 634a or the platform 632 respectively. It comprises a ball joint which has two functions. The first function is to allow a bump of the platform 632 not only against forward and rearward wall of the housing 612 but against the side walls as well. This function makes the mounting of the driving motion detector 604b at the vehicle 602 easier, since it is no more necessary to take account of the driving direction of the vehicle 602. The second function is a compensation of a tilted disposition of the vehicle 602 and/or a tilted mounting of the driving motion detector 604b at the vehicle 602. Here the friction of the system suspension 630b is reduced compared to a system suspension 630a in a tiled housing 612. This makes the activation device 624b more sensitive and thus more reliable.

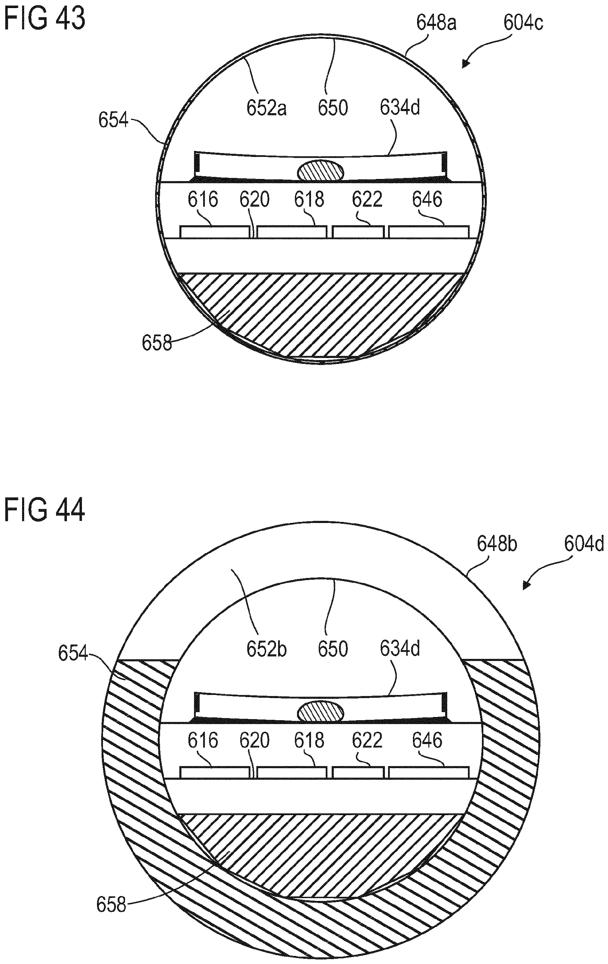

FIG 43 shows an alternative driving motion detector 604c. It comprises an outer housing 6048a and an inner housing 6050 and a fluid space 6052a partly filled with fluid 654, like water or light oil. Inside the inner housing 650 an activator 634 is placed on a platform 656 which is fixed to the inner housing 650. Preferably the activator 634 is the activator 634c or the activator 634d, wherein the activation track 638e is shaped as bowl and not as a tube. Below or above the activator 634 a further platform is present, preferably a printed circuit board 620, with a control unit 616, a sender 618, a memory 622 and eventually an accelerometer 646. On the bottom of the inner housing 650 a weight 658 is located which can be a power supply, like a battery.

The driving motion detector 604d of FIG 44 is constructed identically except for the larger outer housing 648b which allows for a larger fluid space 652b.

The outer housing 648 and the inner housing 650 are concentric to one another, like two spheres or two cylinders where the outer housing 648 completely surrounds the inner housing 648 over 360°, preferably in all directions. The housings 648, 650 can be made from every material strong enough to withhold mechanical forces of wear during use of the driving motion detector 604. The weight of the inner housing 648 completely with all elements inside is balanced in such a way with the specific gravity and amount of the fluid 654, that the inner housing 648 is concentric with the outer housing 650, so that the inner housing 648 does not touch the outer housing 650 but freely flows in the fluid space 652a. Of course, upon motion of the driving motion detector 604c,d the inner housing 648 may bump into the outer housing 650, but this will only be a temporary touching which still allows the inner housing 648 to freely turn itself inside and relative to the outer housing 650.

As described before, the driving motion detector 604c,d is placed at the vehicle 602, like in a glove box of any other space within the vehicle 602, or in a tool box of a motorcycle. In this embodiment it is not essential in which direction the driving motion detector 604c,d is placed at the vehicle 602, since the weight 658 will always turn the inner housing 648 vertical in which position the activator 634 is placed horizontal within the inner housing 648. This construction will make the activator 634 always be horizontal in the absence of acceleration and turning movement of the driving motion detector 604c,d. The function of activation and deactivation can thus be the same as described above for the other activators 634.

Upon acceleration of the driving motion detector 604c,d the activator will activate a power consumer as described above. With regard to the driving motion detector 604c this activation omits the amplifying of acceleration due to bumping of the platform 632 against the housing 612, since the thickness of the fluid space 652a is too small for a significant speed difference between the two housings 648a, 650. Further, since the weight of the inner housing 648a with insides is adapted to the fluid 654 it flows essentially zero-g within the outer housing preventing it from bumping much into the outer housing.

This is different with the driving motion detector 604d of FIG 44. Here the fluid space 652b has a width of about 35% of the radius of the inner housing 650. Upon acceleration of the driving motion detector 604d the fluid has enough room to slosh around the inner housing 650 and thus to sway within the outer housing 648b. This fluid movement will accelerate the inner housing 650 stronger than the original acceleration of the outer housing 648b and thus amplifies the acceleration. This makes the detector 604d more sensitive and thus more reliable.

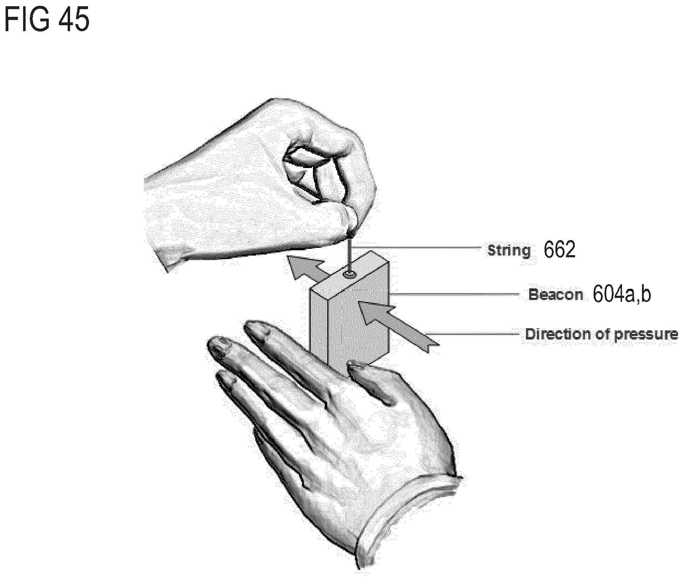

As is shown in FIG 42 the driving motion detector 604a,b is fastened to the vehicle 602, e.g. by one or more adhesive elements 660 which adhere the driving motion detector 604a,b to a surface of the vehicle 602, as shown in FIG 40, for example. To vertically fasten the driving motion detector 604a,b at the vehicle 02 it may comprise a string 662 on the outside of its housing 612 at which the housing 612 hangs vertically down if pulled up with the string 662. FIG 45 shows the string 662 and the driving motion detector 604a,b hanging vertically down. In this position the driving motion detector 604a,b can be fastened to the vehicle 602, so that it has the correct position for a reliably working activation device 64. The vertical position at the vehicle 602 will keep the activator 634 in the correct working alignment to ensure reliable operation.

As is shown in FIG 42, the driving motion detector 604a,b may comprise a safety element 664 for detection of a detachment of the driving motion detector 604a,b from the vehicle surface to which it was mounted. The safety element 664 may be a wire which passes through one or more adhesive elements 660 in such way that it breaks upon detachment of the adhesive elements 660 from a surface to which it was bonded. If a driver wants to detach the driving motion detector 604a,b from the vehicle 602 for a ride which the driver does not want to be monitored, the safety element 664 breaks which is detected by the control unit 616, e.g. because of an increase of the electric resistance of an electric circuit running through the safety element 664. In FIG 42 the safety element 664 passes only one of the adhesive elements 660, however, the safety element 664 may pass through both or all existing adhesive elements 660, or more than one safety element 664 is present, each passing one or more adhesive elements 660.

## Claims

1. Communication device with a first data interface and a second data interface and an intermediate protection unit located in a data communication line between the two data interfaces, wherein the intermediate protection unit blocks data in the direction from the second to the first data interface.

2. Communication device according to claim 1,
wherein the intermediate protection unit forms a physical strict one-way physical connection in the communication line in the direction to the second data interface.

3. Communication device according to claim 1 or 2,
wherein the intermediate protection unit has on its side directed to the second data interface a sender, and is free of hardware capable of further processing signals received from the direction of the second data interface.

4. Communication device according to one of the preceding claims,
wherein the intermediate protection unit is free of a writeable memory accessible by data coming from the second data interface.

5. Communication device according to one of the preceding claims,
wherein the intermediate protection unit contains software which only when executed lets data pass in the direction to the first data interface and lets only such data pass which have a predefined format and data size.

6. Communication device according to one of the preceding claims,
wherein the first data interface is a plug-in connector with a configuration of a data plug and the second interface is a wireless interface.

7. Communication device according to one of the preceding claims
being a dongle for an operating device, wherein the operating device is an on-board diagnose system of a vehicle.

8. Communication device according to one of the preceding claims,
comprising a safety code generator located inside the intermediate protection unit or between the intermediate protection unit and the first data interface.

9. Communication device according to one of the preceding claims,
comprising a bridging communication line bridging the strict one-way physical connection in the communication line, and a mechanical bridging switch interruptingly located in the bridging communication line, wherein the bridging communication line is activatable and deactivatable by the mechanical switch.

10. Communication device according to one of the preceding claims,
comprising an mechanical disengage switch interruptingly located within in the blocked section in the communication line.

11. Communication device according to one of the preceding claims,
comprising a mechanical exception switch which when activated causes a signal upon which information is added to data outgoing from the second data interface that the exception switch is activated.

12. Communication system comprising a communication device according to one of the preceding claims, and further comprising a long distance mobile communication device with a short distance data interface which is adapted to the second data interface.

13. Information retrieval system comprising a communication device according to one of claims 1 to 11, or a communication system according to claim 12, and further comprising a client unit plugged into the first data interface and a server at least indirectly wirelessly connected to the second data interface.

14. Method for protecting a communication device against applying unauthorized code, wherein data is sent through the communication device to a remote server in a communication line, wherein the data passes a part of the communication line which is a one-directional communication line allowing data transfer only in the direction to the server.

15. Method according to claim 14,
wherein data is forwarded from the first data interface to the second interface and further to the server, wherein hardware inside an intermediate protection unit located in a data communication line between the two data interfaces restricts communication to the one directional and blocks all communication in the other direction.
